# EUROPEAN PATENT SPECIFICATION

(11) **EP 3 635 026 B1**
(45) Date of publication and mention of the grant of the patent: **03.04.2024**
(21) Application number: 18813344.1
(22) Date of filing: 08.06.2018
(51) Int. Cl.: C08G 59/68, C08G 63/82, C08L 63/00, C08G 18/32, C08G 18/34, C08G 63/12, C08G 63/52, C08G 63/668, C08G 18/48, C08G 18/73, C08G 18/75, C08G 18/76

(54) **ION-CROSSLINKED POLYMERIC OR OLIGOMERIC COMPOSITIONS**
IONENVERNETZTE POLYMERE ODER OLIGOMERE ZUSAMMENSETZUNGEN
COMPOSITIONS POLYMÈRES OU OLIGOMÈRES RÉTICULÉES PAR DES IONS

(30) Priority: 09.06.2017 US 201762517377 P; 09.06.2017 US 201762517418 P
(43) Date of publication of application: 15.04.2020
(73) Proprietor: The Penn State Research Foundation, University Park, PA 16801 (US)
(72) Inventor: YANG, Jian, State College PA 16803 (US); GERHARD, Ethan, State College PA 16803 (US)
(74) Representative: Studio Torta S.p.A.
(86) International application number: PCT/US2018/036750
(87) International publication number: WO 2018/227151

(56) References cited:
- US-A- 5 556 905
- US-A1- 2011 071 079
- US-A1- 2011 071 079
- US-A1- 2011 124 765
- US-A1- 2012 322 155
- US-A1- 2013 217 790
- US-A1- 2013 217 790
- US-A1- 2016 137 776
- GUO JINSHAN ET AL: "Synthesis and characterization of anti-bacterial and anti-fungal citrate-based mussel-inspired bioadhesives", BIOMATERIALS, ELSEVIER, AMSTERDAM, NL, vol. 85, 2 February 2016 (2016-02-02), pages 204-217, XP029423192, ISSN: 0142-9612, DOI: 10.1016/J.BIOMATERIALS.2016.01.069
- JINSHAN GUO ET AL: "Click Chemistry Plays a Dual Role in Biodegradable Polymer Design", ADVANCED MATERIALS, vol. 26, no. 12, 23 December 2013 (2013-12-23), pages 1906-1911, XP055155141, ISSN: 0935-9648, DOI: 10.1002/adma.201305162
- GUO et al.: "Synthesis and characterization of anti-bacterial and anti-fungal citrate-based mussel- inspired bioadhesives", Biomaterials, vol. 85, 2 February 2016 (2016-02-02), pages 204-217, XP029423192,
- GUO et al.: "Click Chemistry Plays a Dual Role in Biodegradable Polymer Design", Advanced Material, vol. 26, no. 12, 23 December 2013 (2013-12-23), pages 1906-1911, XP055155141,
- ELCHINGER et al.: "Polysaccharides: The ''Click'' Chemistry Impact", Polymers, vol. 3, no. 4, 27 September 2011 (2011-09-27), pages 1607-1651, XP055555131,

## Description

### CROSS-REFERENCE TO RELATED APPLICATIONS

This application claims priority to U.S. Provisional Application No. 62/517,377, filed on June 9, 2017 and U.S. Provisional Application No. 62/517,418, filed on June 9, 2017.

### TECHNICAL FIELD

The present disclosure relates to polymerizable compositions and to polymeric or oligomeric compositions, as well as methods of making polymers or oligomers from polymerizable compositions. More particularly, this disclosure relates to ion-doped or ion-crosslinked polymers or oligomers. The present application also relates to self-setting composite materials and methods for making and using the same.

### BACKGROUND

In recent years, biodegradable polymeric or oligomeric materials have found increased use in a wide range of biomedical engineering applications such as tissue engineering, drug delivery, wound dressing, diagnostic imaging, and medical device applications. New biodegradable polymeric or oligomeric materials having improved mechanical properties are highly desirable.

The generation of viable and functional bone grafts and materials that replicate the mechanical and osteogenic bioactivity of native bone has marked potential to improve the field of reconstructive orthopedic surgery. Critical for repair and reconstruction of congenital defects, cancer resections and trauma related injury is the ability to design such grafts with maximal efficiency that replicate the viscoelastic and antifatigue properties as well as the bioactivity of physiological bone tissue. Additionally, the ability to readily tailor the shape of materials and scaffolds to irregular and patient specific defects and to provide void filling and anchoring for implants remains critical to the field. Currently, generation of suitable grafts is limited by the availability of bio-derived materials and the poor mechanical and degradation properties as well as the limited biocompatibility and osteogenic activity of synthetic polymeric materials. Additionally, materials capable of rapid, *in situ* formation remain elusive.

Bone reconstructions often involve the use of allograft or autograft to replace damaged tissue. A significant limitation of these techniques is the difficulty in harvesting material and of three-dimensional contouring to match the original tissue geometry to be replaced. Additionally, donor site tissue morbidity or incompatibility and disease transmission limit the effectiveness of autografts and allografts respectively. Alternatively, use of decellularized bone matrices eliminates donor site morbidity and minimizes the risk to the patient from disease and immune response. However, the use of decellularized bone is still dependent on the harvesting and shaping of bone as well as the ability to completely denude the specimen of native cells. Finally, the use of polymer scaffolds eliminates the need for organic tissue harvesting and its accompanying limitations. Polymers exhibit the ability to engineer complex geometries with tailorable physical properties. Unfortunately, many polymers display limited usefulness due to issues including incompatible mechanical properties, internal porosities and geometries, and the generation of harmful degradation products *in vivo.*

Recently, much research effort has focused on the synthesis of self-setting materials capable of filling complex and irregular voids and of anchoring scaffolds implanted during surgery and capable of forming scaffolds with complex shapes. While a multitude of materials are capable of setting *in situ,* many rely on UV or redox activated crosslinking or the application of physiologically harmful additives or conditions. Popular cements such as PMMA also generate heat during crosslinking, raising concerns of tissue damage. Additionally, most settable materials are mechanically weak hydrogels (such as those based on alginate) or brittle and non-compliant pure ceramics (such as materials based upon calcium phosphate formation). Further, some previous polymer systems have relied on materials such as PEG, alginate, and acrylic acid, all of which suffer from excessive water uptake (limiting wet mechanical performance), as well as poor cell adhesion and bioactivity.

US 2013/217790 disclose a composition, useful as bioadhesives and tissue sealants, comprising polymer/oligomer formed from monomers having ester group, monomers having alkoxy/hydroxyl group, and monomers having a benzene-1,2-diol group.

Thus, improved self-setting materials capable of being used in physiological environments are desired.

### SUMMARY

In one aspect, compositions comprising one or more monomers are described herein, which may provide, when reacted, biodegradable polymeric or oligomeric materials having improved mechanical properties, such as improved elasticity and strength. Such polymeric or oligomeric materials are also described herein. In yet another aspect, methods of making polymers or oligomers are described herein.

In some embodiments, a monomer composition or polymerizable composition described herein comprises, consists of, or consists essentially of the following: an alkoxylated, alkenoxylated, or non-alkoxylated and non-alkenoxylated citric acid, citrate, or ester/amide of citric acid; optionally, another alkoxylated, alkenoxylated, or non-alkoxylated and non-alkenoxylated citric acid, citrate, or ester/amide of citric acid; a polyol or polyamine such as a diol or diamine; and a salt. The salt may comprise a monovalent, divalent, or trivalent cation. In some embodiments, the composition further comprises, consists of, or consists essentially of at least one of a catechol-containing species, an alcohol/amine, an amide, a carboxylic acid, an isocyanate, an amino acid such as an alpha-amino acid, and a monomer comprising an alkyne moiety and/or an azide moiety. In some embodiments, the polymerizable composition is a self-setting composition.

In some embodiments, a composition described herein comprises, consists of, or consists essentially of a polymer or oligomer formed from or formed by reacting the following: an alkoxylated, alkenoxylated, or non-alkoxylated and non-alkenoxylated citric acid, citrate, or ester/amide of citric acid; optionally, another alkoxylated, alkenoxylated, or non-alkoxylated and non-alkenoxylated citric acid, citrate, or ester/amide of citric acid; a polyol or polyamine such as a diol or diamine; and a salt. The salt may comprise a monovalent, divalent, or trivalent cation. In further embodiments, at least one of a catechol-containing species, an alcohol/amine, an amide, a carboxylic acid, an isocyanate, an amino acid such as an alpha-amino acid, and a monomer comprising an alkyne moiety and/or an azide moiety may be used to form or in the reaction for forming the polymer or oligomer.

In some embodiments, a method described herein comprises, consists of, or consists essentially of reacting an alkoxylated, alkenoxylated, or non-alkoxylated and non-alkenoxylated citric acid, citrate, or ester/amide of citric acid; optionally, another alkoxylated, alkenoxylated, or non-alkoxylated and non-alkenoxylated citric acid, citrate, or ester/amide of citric acid; a polyol or polyamine such as a diol or diamine; and a salt to form a polymer or an oligomer. The salt may comprise a monovalent, divalent, or trivalent cation. In some embodiments, when the salt comprises a monovalent cation, a divalent and/or a trivalent cation are also present to form the polymer or oligomer. In further embodiments, at least one of a catechol-containing species, an alcohol/amine, an amide, a carboxylic acid, an isocyanate, an amino acid such as an alpha-amino acid, and a monomer comprising an alkyne moiety and/or an azide moiety may be reacted to form the polymer or oligomer. The method may also, in some embodiments, comprise cross-linking.

Additionally, in the embodiments described above, it is possible for the salt to be omitted, provided that one or more of the monomers or reactants described above include a metal cation, such as a divalent or trivalent metal cation, that can crosslink the polymer or oligomer to form a crosslinked polymer or oligomer network. For example, in some instances, the citric acid-based monomer is provided as a salt or cation-anion complex in which at least one divalent or trivalent metal is present. In such cases, crosslinking may occur through the one or more divalent or trivalent metal cations, without the use of a separate, additional salt described hereinabove.

Thus, in some embodiments, the present invention provides a polymerizable composition comprising one or more monomers of Formula (A1); optionally one or more monomers of Formula (A2); one or more monomers of Formula (B1), (B2), or (B3); and an additional salt of Formula AB: 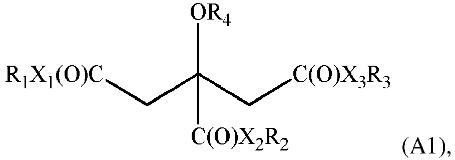 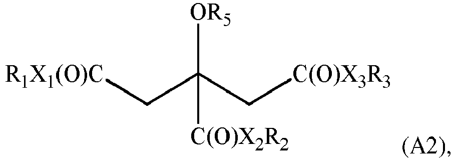 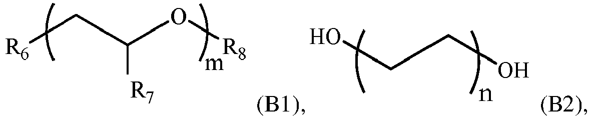 and 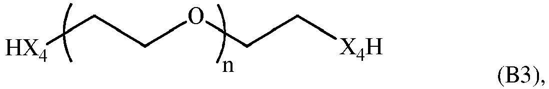 wherein
X₁, X₂, X₃, and X₄ are each independently -O- or -NH-;
R₁, R₂, and R₃ are each, independently, -H, a C1 to C22 alkyl or alkenyl group, M⁺, M²⁺, or M³⁺;
R₄ is H or M⁺;
R₅ is C(O)R₂₃;
R₆ is -H, -NH, -OH, -OCH₃, -OCH₂CH₃, -CH₃, or -CH₂CH₃;
R₇ is -H or a C1 to C23 alkyl or alkenyl group-CH₃;
R₈ is -H, a C3 to C22 alkyl or alkenyl group, -CH₂CH₂OH, or -CH₂CH₂NH₂;
R₂₃ is a C14 to C22 alkyl or alkenyl group;
n and m are independently integers ranging from 1 to 2000;
M⁺ is a monovalent metal cation;
M²⁺ is a divalent metal cation;
M³⁺ is a trivalent metal cation;
A is a monovalent, divalent, or trivalent metal cation; and
B is an anien wherein the polymerizable composition is crosslinkable through the M⁺, 2+ 3+ M , M , and/or A or AB.

In some aspects, R₁, R₂, and R₃ are each, independently, -H, -CH₃, or -CH₂CH₃.

In some embodiments, the composition comprises one or more monomers of Formula (A2).

In some aspects, at least one of R₁, R₂, and R₃ is M²⁺ or M³⁺.

In some embodiments, one or more monomers of Formula (A1) comprise monosodium citrate, disodium citrate, and/or trisodium citrate. In some embodiments, one or more monomers of Formula (A1) comprise calcium citrate.

In some aspects, A is a monovalent cation selected from the group consisting of Na⁺, K⁺, and Li⁺. In other aspects, A is a divalent cation. In some embodiments, the salt of Formula AB is selected from CaCl₂, Ca(NO₃)₂, CaI₂, CaBr₂, CaCO₃, and calcium citrate. In other embodiments, A is a trivalent cation.

In some embodiments, the composition of the present invention further comprises one or more monomers of Formula (C), Formula (D1), Formula (D2), Formula (D3), Formula (D4), Formula (E1), Formula (E2), Formula (F), Formula (G), Formula (H1), Formula (H2), Formula (H3), Formula (I1), Formula (I2), Formula (I3), Formula (I4), Formula (I5), and/or Formula (I6): 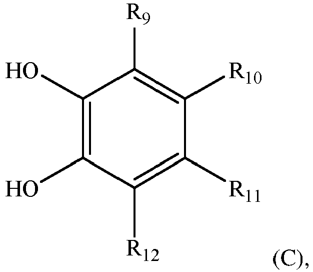 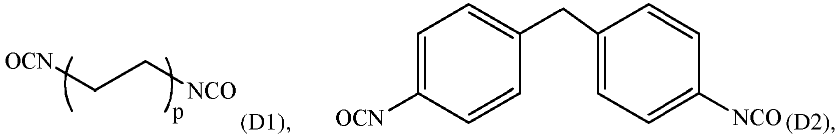 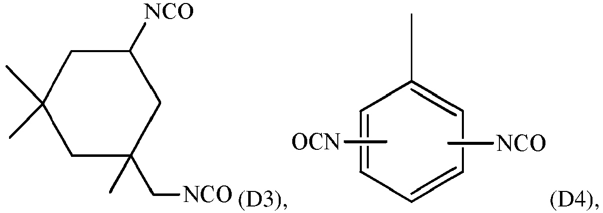 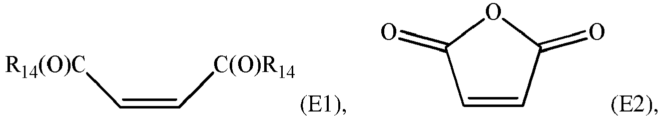 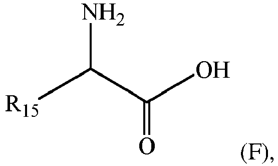 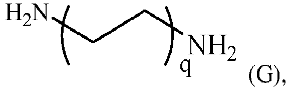 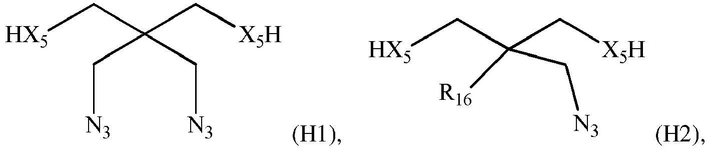 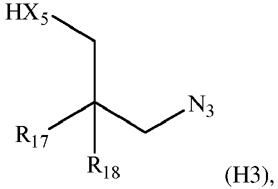 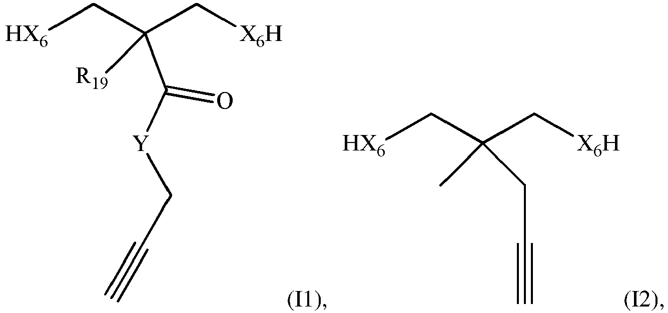 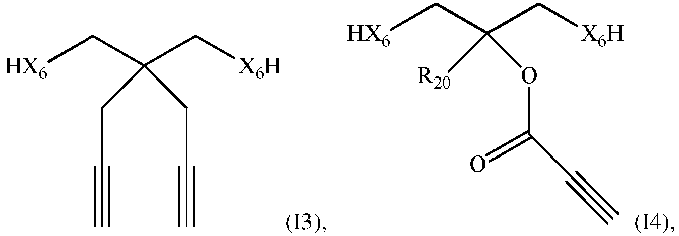 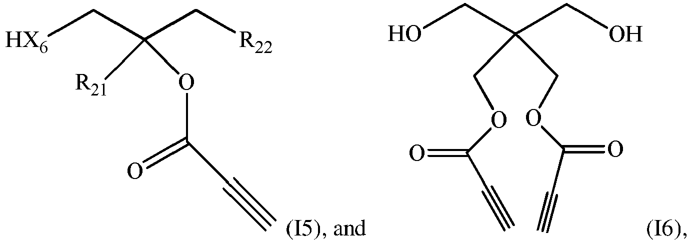 wherein
R₉, R₁₀, R₁₁, and R₁₂ are each independently -H, -OH, -CH₂(CH₂)ₓNH₂, - CH₂(CHR₁₃)NH₂, -CH₂(CH₂)ₓOH, -CH₂(CHR₁₃)OH, or -CH₂(CH₂)ₓCOOH;
R₁₃ is -COOH or -(CH₂)_{y}COOH;
x is an integer ranging from 0 to 10;
y is an integer ranging from 1 to 10;
p is an integer ranging from 1 to 10;
R₁₄ is -OH, -OCH₃, -OCH₂CH₃, or -Cl;
R₁₅ is an amino acid side chain;
q is an integer ranging from 1 to 20;
X₅ is -O- or -NH-;
R₁₆ is -CH₃ or -CH₂CH₃;
R₁₇ and R₁₈ are each independently -CH₂N₃, -CH₃, or -CH₂CH₃;
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some aspects, the composition comprises a monomer of Formula (C), and the monomer of Formula (C) is selected from dopamine, L-DOPA, D-DOPA, and 3,4-dihydroxyhydrocinnamic acid. In some aspects, the composition comprises one or more monomers selected from maleic acid, maleic anhydride, and fumaric acid. In some embodiments, the composition comprises one or more monomers of Formula (G).

In some embodiments, the composition comprises one or more monomers comprising one or more alkyne moieties or one or more azide moieties. In further embodiments, the composition comprises one or more monomers comprising one or more azide moieties and the one or more monomers comprising one or more azide moieties comprises a monomer of Formula (H1), (H2), or (H3): 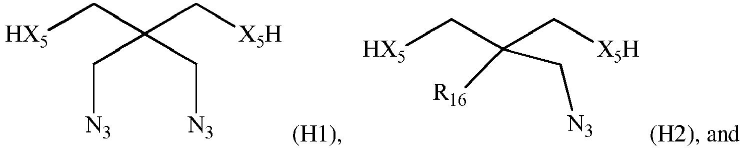 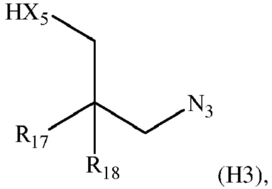 wherein
X₅ is -O- or -NH-;
R₁₆ is -CH₃ or -CH₂CH₃; and
R₁₇ and R₁₈ are each independently -CH₂N₃, -CH₃, or -CH₂CH₃.

In some embodiments, the composition comprises one or more monomers comprising one or more alkyne moieties and the one or more monomers comprising one or more alkyne moieties comprises a monomer of Formula (I1), (12), (13), (I4), (I5) or (I6): 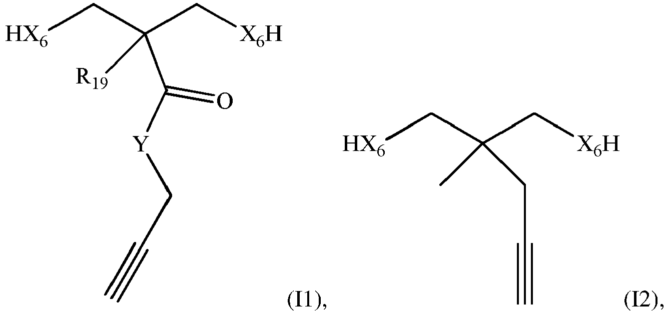 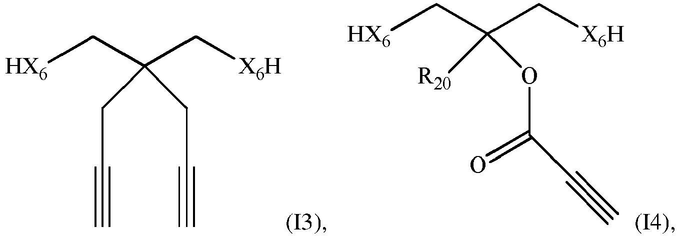 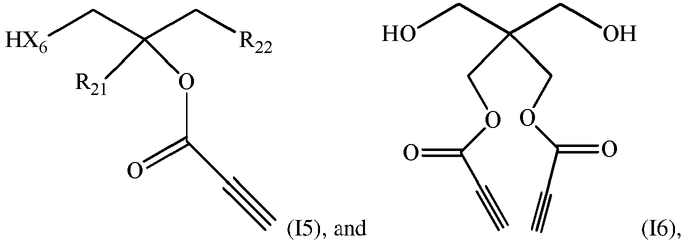 wherein
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some aspects, the one or more monomers comprising one or more alkyne moieties or one or more azide moieties comprises a peptide, polypeptide, nucleic acid, or polysaccharide.

In some embodiments, the composition provided by the present invention comprises a solvent, *e.g.,* water or a mixture of water and an organic solvent.

In some embodiments, the salt of Formula AB has a solubility of at least 50 g/100 mL in water at 25°C. In some embodiments, the salt has a solubility of 5.0 g/L or less in water at 25°C. In some embodiments, the salt has a solubility of 1.0 g/L or less in water at 25°C.

In some aspects, the present invention also provides a a composition comprising: a polymer or oligomer formed from one or more monomers of Formula (A1), optionally one or more monomers of Formula (A2), one or more monomers of Formula (B1), (B2), or (B3), and an additional salt of Formula AB: 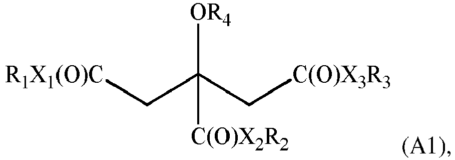 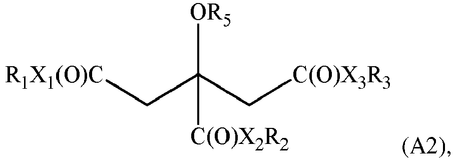 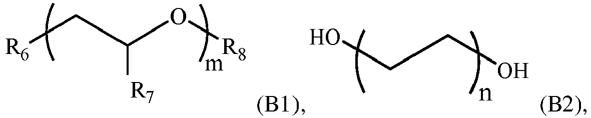 and 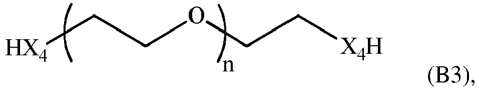 wherein
X₁, X₂, X₃, and X₄ are each independently -O- or -NH-;
R₁, R₂, and R₃ are each, independently, -H, a C1 to C22 alkyl or alkenyl group, M⁺, M²⁺, or M³⁺;
R₄ is H or M⁺;
R₅ is C(O)R₂₃;
R₆ is -H, -NH, -OH, -OCH₃, -OCH₂CH₃, -CH₃, or -CH₂CH₃;
R₇ is -H or a C1 to C23 alkyl or alkenyl group-CH₃;
R₈ is -H, a C3 to C22 alkyl or alkenyl group, -CH₂CH₂OH, or -CH₂CH₂NH₂;
R₂₃ is a C14 to C22 alkyl or alkenyl group;
n and m are independently integers ranging from 1 to 2000;
M⁺ is a monovalent metal cation;
M²⁺ is a divalent metal cation;
M³⁺ is a trivalent metal cation;
A is a monovalent, divalent, or trivalent metal cation; and
B is an anion wherein the polymerizable composition is crosslinkable through the M⁺, 2+ 3+ M , M , and/or A or AB.

In some aspects, R₁, R₂, and R₃ are each, independently, -H, -CH₃, or -CH₂CH₃.

In some embodiments, the polymer or oligomer is formed from one or more monomers of Formula (A2).

In some embodiments, at least one of R₁, R₂, and R₃ is M²⁺ or M³⁺.

In some aspects, one or more monomers of Formula (A1) comprise monosodium citrate, disodium citrate, and/or trisodium citrate. In some aspects, one or more monomers of Formula (A1) comprise calcium citrate.

In some embodiments, A is a monovalent cation selected from the group consisting of Na⁺, K⁺, and Li⁺. In some embodiments, A is a divalent cation. In some embodiments, the salt of Formula AB is selected from CaCl₂, Ca(NO₃)₂, CaI₂, CaBr₂, CaCO₃, and calcium citrate. In other embodiments, A is a trivalent cation.

In some embodiments, the polymer or oligomer is formed from one or more monomers of Formula (A), optionally one or more monomers of Formula (A2), one or more monomers of Formula (B1), (B2), or (B3), an additional salt of Formula AB, and one or more monomers of Formula (C), Formula (D1), Formula (D2), Formula (D3), Formula (D4), Formula (E1), Formula (E2), Formula (F), Formula (G), Formula (H1), Formula (H2), Formula (H3), Formula (I1), Formula (I2), Formula (I3), Formula (I4), Formula (I5), and/or Formula (I6): 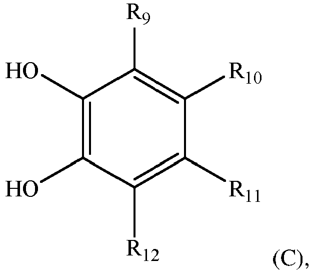 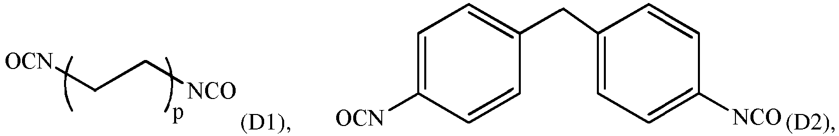 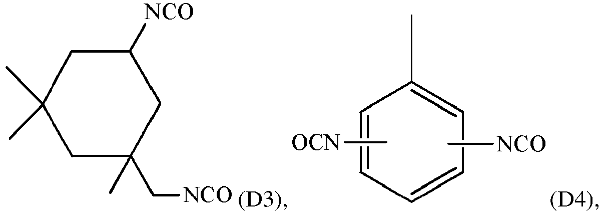 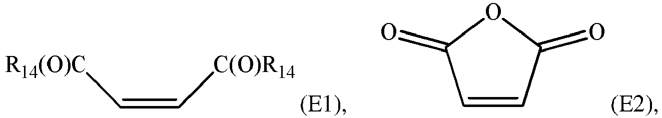 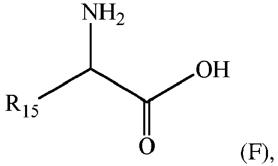 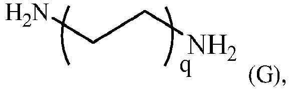 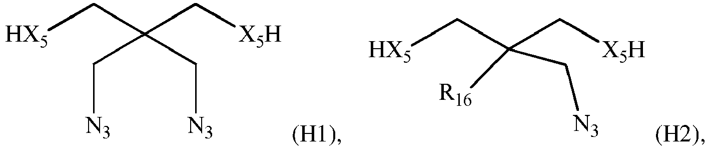 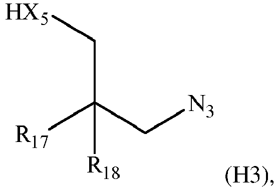 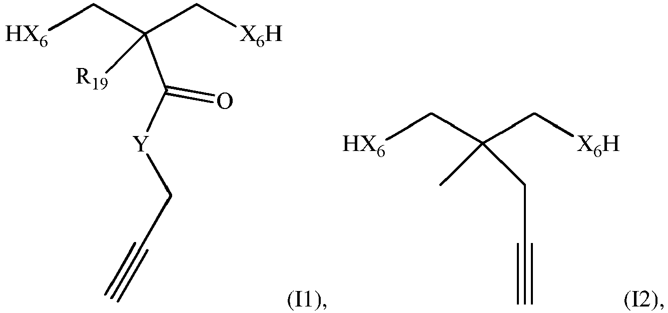 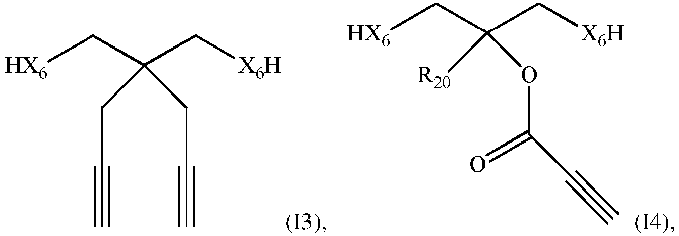 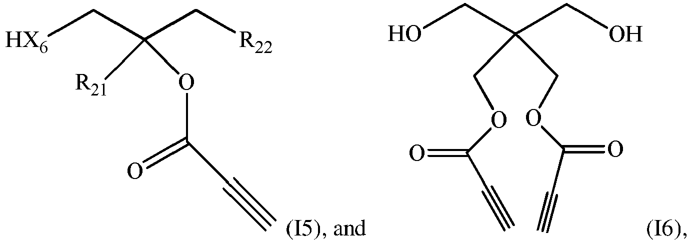 wherein
R₉, R₁₀, R₁₁, and R₁₂ are each independently -H, -OH, -CH₂(CH₂)ₓNH₂, - CH₂(CHR₁₃)NH₂, -CH₂(CH₂)ₓOH, -CH₂(CHR₁₃)OH, or -CH₂(CH₂)ₓCOOH;
R₁₃ is -COOH or -(CH₂)_{y}COOH;
x is an integer ranging from 0 to 10;
y is an integer ranging from 1 to 10;
p is an integer ranging from 1 to 10;
R₁₄ is -OH, -OCH₃, -OCH₂CH₃, or -Cl;
R₁₅ is an amino acid side chain;
q is an integer ranging from 1 to 20;
X₅ is -O- or -NH-;
R₁₆ is -CH₃ or -CH₂CH₃;
R₁₇ and R₁₈ are each independently -CH₂N₃, -CH₃, or -CH₂CH₃;
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some embodiments, the polymer or oligomer is formed from a monomer of Formula (C), and the monomer of Formula (C) is selected from dopamine, L-DOPA, D-DOPA, and 3,4-dihydroxyhydrocinnamic acid. In other embodiments, the polymer or oligomer is formed from one or more monomers selected from maleic acid, maleic anhydride, and fumaric acid. In some embodiments, the polymer or oligomer is formed from one or more monomers of Formula (A), optionally one or more monomers of Formula (A2), one or more monomers of Formula (B1), (B2), or (B3), an additional salt of Formula AB, and one or more monomers comprising a diamine.

In some embodiments, the diamine has the structure of Formula (G): 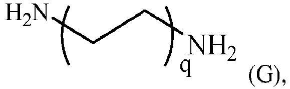 wherein q is an integer ranging from 1 to 20.

In some aspects, the polymer or oligomer is formed from one or more monomers of Formula (A), optionally one or more monomers of Formula (A2), one or more monomers of Formula (B1), (B2), or (B3), an additional salt of Formula AB, and one or more monomers comprising one or more alkyne moieties or one or more azide moieties.

In other aspects, the polymer or oligomer is formed from one or more monomers comprising one or more azide moieties and the one or more monomers comprising one or more azide moieties comprises a monomer of Formula (H1), (H2), or (H3): 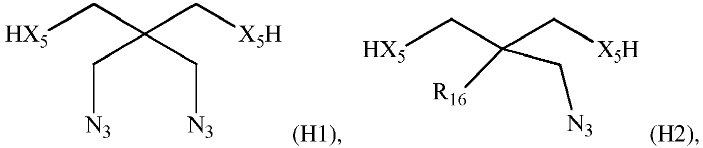 and 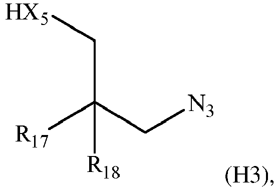 wherein
X₅ is -O- or -NH-;
R₁₆ is -CH₃ or -CH₂CH₃; and
R₁₇ and R₁₈ are each independently -CH₂N₃, -CH₃, or -CH₂CH₃.

In some embodiments, the polymer or oligomer is formed from one or more monomers comprising one or more alkyne moieties and the one or more monomers comprising one or more alkyne moieties comprises a monomer of Formula (I1), (12), (13), (I4), (I5) or (I6): 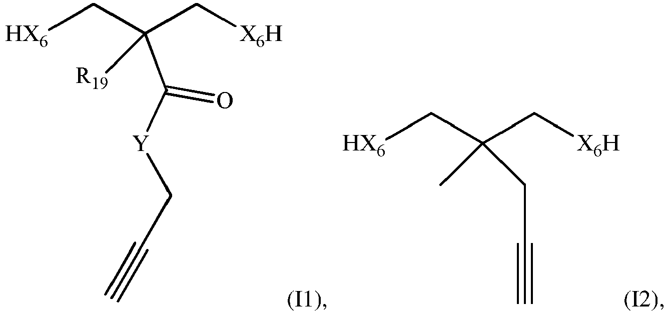 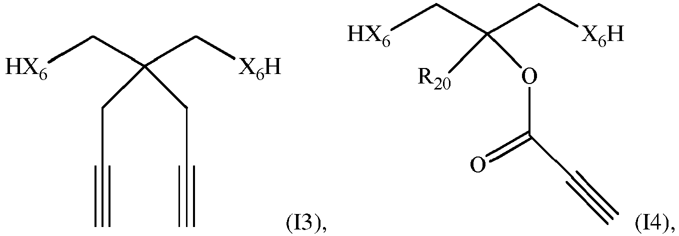 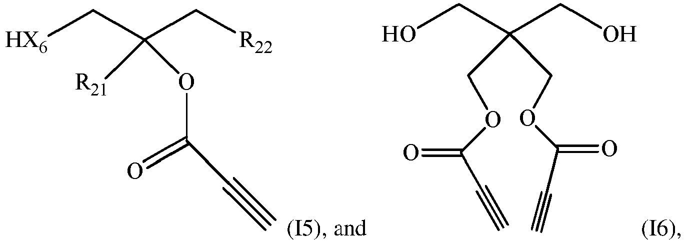 wherein
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some aspects, the one or more monomers comprising one or more alkyne moieties or one or more azide moieties comprises a peptide, polypeptide, nucleic acid, or polysaccharide.

In some embodiments, the present invention also provides a method of making a polymer or oligomer, the method comprising:
reacting one or more monomers of Formula (A1), optionally one or more monomers of Formula (A2), one or more monomers of Formula (B1), (B2), or (B3), and a salt of Formula AB: 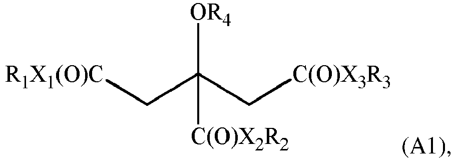 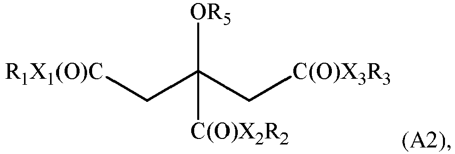 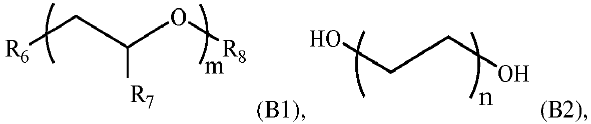 and 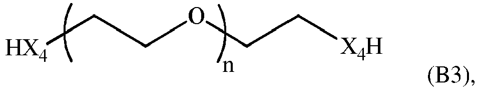 wherein
X₁, X₂, X₃, and X₄ are each independently -O- or -NH-;
R₁, R₂, and R₃ are each, independently, -H, a C1 to C22 alkyl or alkenyl group, M⁺, M²⁺, or M³⁺;
R₄ is H or M⁺;
R₅ is C(O)R₂₃;
R₆ is -H, -NH, -OH, -OCH₃, -OCH₂CH₃, -CH₃, or -CH₂CH₃;
R₇ is -H or a C1 to C23 alkyl or alkenyl group-CH₃;
R₈ is -H, a C3 to C22 alkyl or alkenyl group, -CH₂CH₂OH, or -CH₂CH₂NH₂;
R₂₃ is a C14 to C22 alkyl or alkenyl group;
n and m are independently integers ranging from 1 to 2000;
M⁺ is a monovalent metal cation;
M²⁺ is a divalent metal cation;
M³⁺ is a trivalent metal cation;
A is a monovalent, divalent, or trivalent metal cation; and
B is an anion.

In some aspects, R₁, R₂, and R₃ are each, independently, -H, -CH₃, or -CH₂CH₃. In some embodiments, one or more monomers of Formula (A2) are reacted to form the polymer or oligomer. In some embodiments, at least one of R₁, R₂, and R₃ is M²⁺ or M³⁺.

In some embodiments, the one or more monomers of Formula (A1) comprise monosodium citrate, disodium citrate, and/or trisodium citrate. In other embodiments, the one or more monomers of Formula (A1) comprise calcium citrate.

In some aspects, A is a monovalent cation selected from the group consisting of Na⁺, K⁺, and Li⁺. In other aspects, A is a divalent cation. In some embodiments, AB is selected from CaCl₂, Ca(NO₃)₂, CaI₂, CaBr₂, CaCO₃, and calcium citrate. In some embodiments, A is a trivalent cation.

In some embodiments, the polymer or oligomer is formed by reacting one or more monomers of Formula (A), optionally one or more monomers of Formula (A2), one or more monomers of Formula (B1), (B2), or (B3), an additional salt of Formula AB, and one or more monomers of Formula (C), Formula (D1), Formula (D2), Formula (D3), Formula (D4), Formula (E1), Formula (E2), Formula (F), Formula (G), Formula (H1), Formula (H2), Formula (H3), Formula (I1), Formula (I2), Formula (I3), Formula (I4), Formula (I5), and/or Formula (I6): 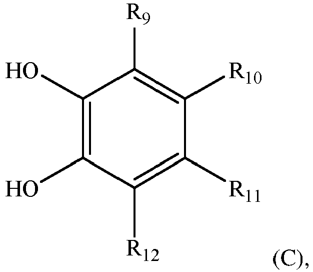 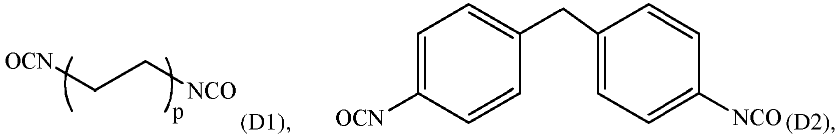 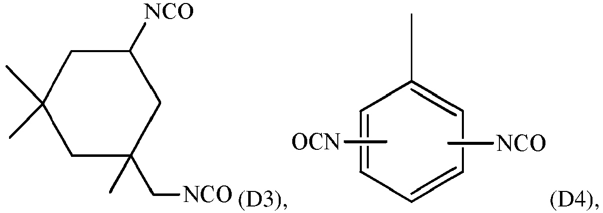 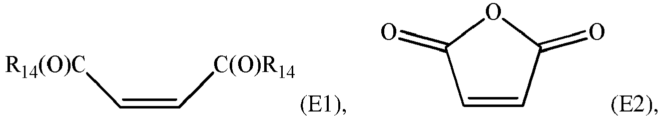 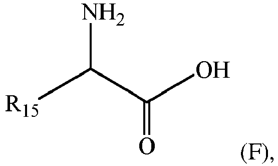 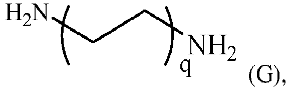 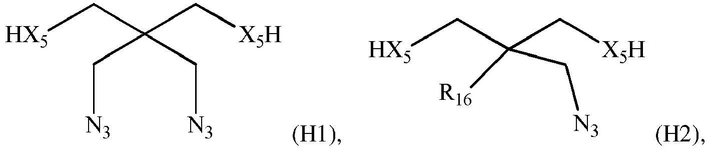 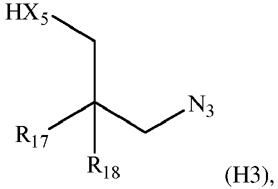 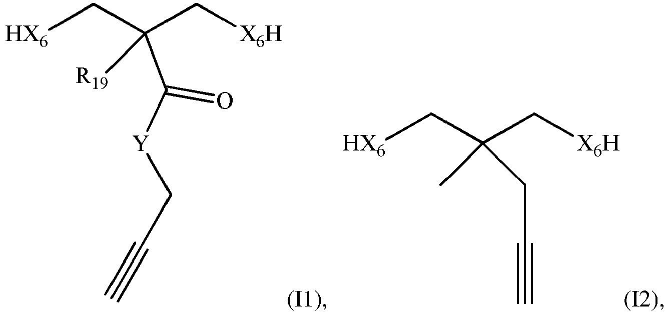 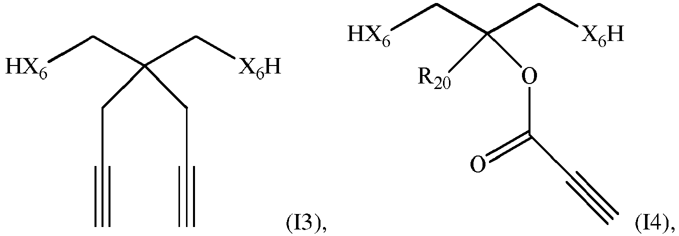 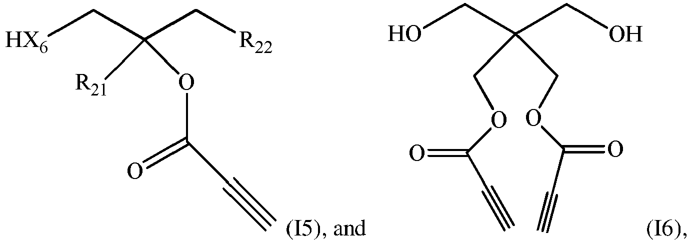 wherein
R₉, R₁₀, R₁₁, and R₁₂ are each independently -H, -OH, -CH₂(CH₂)ₓNH₂, - CH₂(CHR₁₃)NH₂, -CH₂(CH₂)ₓOH, -CH₂(CHR₁₃)OH, or -CH₂(CH₂)ₓCOOH;
R₁₃ is -COOH or -(CH₂)_{y}COOH;
x is an integer ranging from 0 to 10;
y is an integer ranging from 1 to 10;
p is an integer ranging from 1 to 10;
R₁₄ is -OH, -OCH₃, -OCH₂CH₃, or -Cl;
R₁₅ is an amino acid side chain;
q is an integer ranging from 1 to 20;
X₅ is -O- or -NH-;
R₁₆ is -CH₃ or -CH₂CH₃;
R₁₇ and R₁₈ are each independently -CH₂N₃, -CH₃, or -CH₂CH₃;
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some aspects, a monomer of Formula (C) is reacted, and the monomer of Formula (C) is selected from dopamine, L-DOPA, D-DOPA, and 3,4-dihydroxyhydrocinnamic acid.

In some embodiments, one or more monomers selected from maleic acid, maleic anhydride, and fumaric acid are reacted.

In some aspects, the polymer or oligomer is formed by reacting one or more monomers of Formula (A), optionally one or more monomers of Formula (A2), one or more monomers of Formula (B1), (B2), or (B3), an additional salt of Formula AB, and one or more monomers comprising a diamine.

In some aspects, the diamine has the structure of Formula (G): 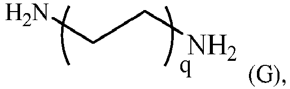 wherein q is an integer ranging from 1 to 20.

In some embodiments, the polymer or oligomer is formed by reacting one or more monomers of Formula (A), optionally one or more monomers of Formula (A2), one or more monomers of Formula (B1), (B2), or (B3), an additional salt of Formula AB, and one or more monomers comprising one or more alkyne moieties or one or more azide moieties. In further aspects, one or more monomers comprising one or more azide moieties are reacted, and the one or more monomers comprising one or more azide moieties comprise a monomer of Formula (H1), (H2), or (H3): 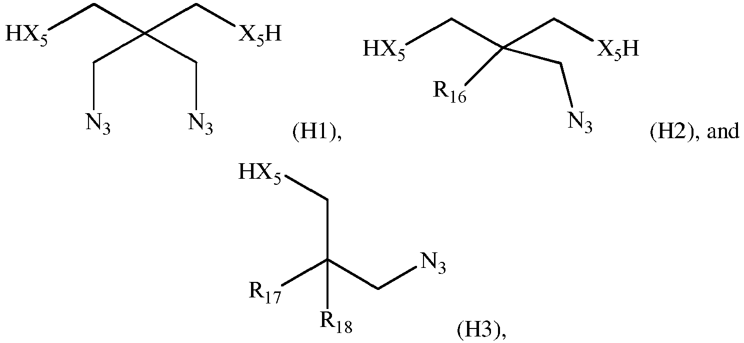 wherein
X₅ is -O- or -NH-;
R₁₆ is -CH₃ or -CH₂CH₃; and
R₁₇ and R₁₈ are each independently -CH₂N₃, -CH₃, or -CH₂CH₃.

In some aspects, one or more monomers comprising one or more alkyne moieties is reacted, and the one or more monomers comprising one or more alkyne moieties comprise a monomer of Formula (I1), (12), (13), (I4), (I5) or (I6): 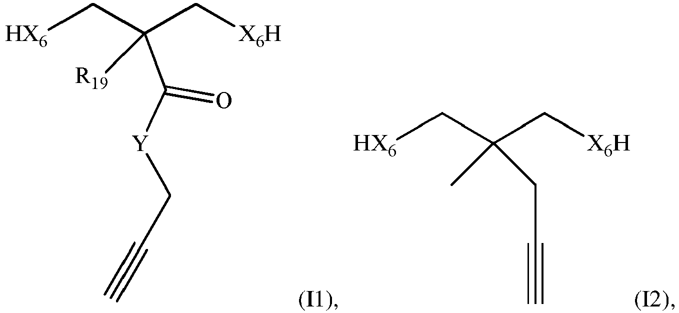 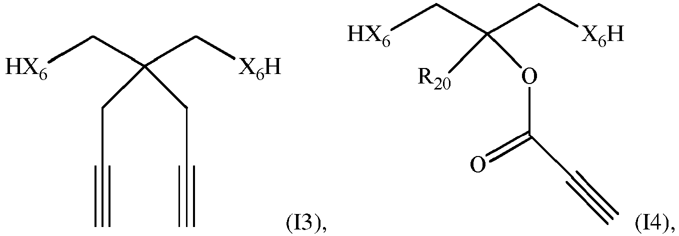 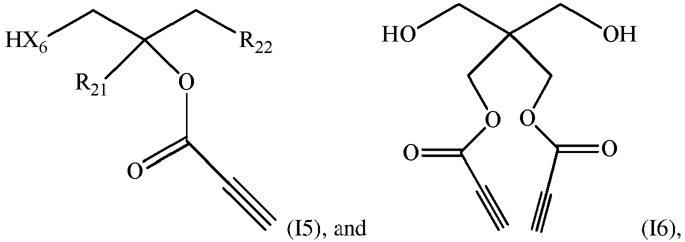 wherein
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some aspects, one or more monomers comprising one or more alkyne moieties or one or more azide moieties comprises a peptide, polypeptide, nucleic acid, or polysaccharide.

In some embodiments, the reacting is carried out in a solvent, *e.g*., water or a mixture of water and an organic solvent. In further aspects, the mixture is formed primarily from water, *e.g.,* the solvent comprises at least 95% by volume water.

In some aspects, the salt of Formula AB has a solubility of at least 50 g/100 mL in water at 25°C. In some aspects, the salt of Formula AB has a solubility of 5.0 g/L or less in water at 25°C. In some aspects, the salt of Formula AB has a solubility of 1.0 g/L or less in water at 25°C.

The method provided by the present invention further comprises cross-linking the polymer or oligomer through the M⁺, M²⁺, M³⁺, and/or A metal cations. In further embodiments, one or more pendant groups of the polymer or oligomer chelate one or more of the M⁺, M²⁺, M³⁺, and/or A metal cations.

The method further comprises cross-linking the polymer or oligomer through undissolved particles of the salt of Formula AB. In further aspects, cross-linking occurs at the same time as polymerizing.

In some embodiment, the present invention also provides a method of additive manufacturing that comprises forming a plurality of layers of a three-dimensional object from the compositions comprising a polymer or oligomer as described above, and the three-dimensional object so produced.

The present invention also relates to self-setting materials composed of mixtures of a metal oxide crosslinker and citrate based polymers, such as polyesters composed of octanediol and citric acid monomers. Not intending to be bound by theory, it is believed that metal oxides combined with the citrate polymer form ionic crosslinks through direct reaction between the metal oxide and the terminal carboxyl groups of the polymer, creating a crosslinked polymer network spontaneously at room temperature. Self-setting formulations described herein, in some embodiments, are capable of acting as void fillers with significant mechanical strength, elasticity, and self-healing potential. Self-setting formulations described herein can also be altered with the addition of ceramics or other additives. Metal oxide derived crosslinks described herein are capable of incorporating ions including calcium, magnesium, and zinc, which possess osteogenic differentiation potential as well as ions including copper and zinc with antibacterial capability. Self-setting citrate based materials described herein therefore have potential in the orthopedic field as void fillers and anchoring for surgical implants and scaffolds, as well as, when combined with porogens and other additives, anatomically correct scaffolds based on patient specific anatomy.

This disclosure describes self-setting metal oxide/citrate-based polymer composites and methods for making and using the same. Citrate is a natural metabolite and key element in natural bone, and thus, citrate-based polymer are biocompatible, having relatively benign effects on cells and surrounding tissue. Without wishing to be bound by any particular theory, it is believed that the metal oxides in the disclosed composites undergo reactions with the large number of carboxyl terminal groups in the citrate-based polymers, with water being formed as a major byproduct. Such reactions, it is believed, result in the formation of multiple ionic crosslinks between the citrate-based polymer chains, creating a solid, crosslinked ("set") network. Crucially, these crosslinking (setting) reactions are capable of proceeding at room and physiological temperature without modification of the polymer or metal oxide or the addition of catalysts, *etc.* Resulting materials display significant strength and elasticity. Additionally, through the incorporation of metal oxides, *e.g.,* CaO, MgO, ZnO, CuO, *etc.,* improved osteogenic, antibacterial, angiogenesis, wound healing, and hemostat potential due to the metal ion release will accompany the improved physical properties. Metal oxide/ citrate-based polymer self-setting materials thus have multiple potentials in tissue engineering, including *in situ* setting, formation of anatomically correct scaffolds when combined with molding, and 3D printing of scaffolds utilizing the rapid setting potential of the system. Additionally, metal oxide/ citrate-based polymer self-setting materials have potential uses in the orthopedic field as void fillers and as anchoring for surgical implants and scaffolds, as well as, when combined with porogens and other additives, as anatomically correct scaffolds based on patient specific anatomy.

A representative citrate polymer is poly(octanediol-co-citric acid) (POC) or poly(ethylene glycol-co-citric acid). Citrate polymers can be dissolved in organic solvents such as acetone, ethanol, or water depending on their solubility. Citrate polymers are platform materials to which metal oxides, metal ions, and the combination thereof can be incorporated to impart combinatory enhanced physical (such as improved mechanical strengths and fast setting) and biological functions to the resultant materials that other polymers could not attain. Metal oxides are incorporated into the polymer solution or prepolymer (without solvent) via physical mixing and participate, it is believed, in direct, catalyst free reactions with the carboxyl groups of citric acids. It is believed that ions from the metal oxide form a reversible crosslinking network capable of setting the citrate polymer into a solid material *in situ.* Metal oxide incorporating polymer can be formed into films/ 3D fillers through direct casting. Thermal esterification subsequent to the metal oxide/carboxyl group reaction can also be applied to further strengthen the material. Porous scaffolds may be forms via physical mixing of polymer solutions with sodium chloride porogen and subsequent thermal crosslinking and porogen leaching, and composites may be formed via physical mixing of polymer with hydroxyapatite or other fillers and, if desired, subsequent thermal crosslinking.

It is an objective of the invention to incorporate metal oxides or combination of metal oxides homogeneously into POC through, what is believed to be, direct, catalyst free reaction of metal oxides with the carboxyl groups of the citrate-based polymer, *e.g.,* POC.

It is an objective of this invention to create injectable citrate-based materials capable of quickly self-setting at physiological temperature to function as void fillers and to anchor scaffolds. The injectable citrate based polymers can be dissolved in either water or organic solvents.

It is an objective of this invention to create self-setting composites by mixing ceramics and other additives with metal oxide/ POC.

It is an objective of this invention to increase the mechanical strength of thermally crosslinked POC films in dry and hydrated conditions through the incorporation of metal oxides.

It is an objective of this invention to fabricate thermally crosslinked porous scaffolds and composites with homogeneous physical properties and improved mechanical strength utilizing metal oxide/ POC.

Another objective of the invention is to fabricate materials capable of promoting osteogenic differentiation of human mesenchymal stem cells using metal oxide/ POC.

It is an objective of the invention to fabricate materials with antibacterial capability using metal oxide/ POC.

It is an objective of the invention to fabricate hemostat capable materials using ion doped POC

It is an objective of this invention to incorporate metal oxides into various citrate based materials including but not limited to poly(octanediol-co-citric acid) (POC), biodegradable photoluminescent polymers (BPLPs), and injectable citrate based mussel inspired bioadhesive (iCMBA).

It is an objective of this invention to create anatomically correct scaffolds by combining metal oxide/ POC and composites of the same with molds generated from 3D imaging.

It is an objective of this invention to develop formulations of the above materials for 3D printing.

The applications of metal oxide/ citrate based polymer materials include but are not limited to the following: orthopedic tissue engineering materials including composites and porous scaffolds for critical size segmental defect repair and fixation and spinal fusion and films for periosteum repair and barrier functionality; antibacterial capable materials for preventing and controlling infection; hemostat capable materials for controlling bleeding in wounds and surgical implantation procedures; self-setting materials for void filling and fracture fixation; and self-setting materials for generation of molded or 3D printed scaffolds.

Accordingly, in some embodiments the present invention provides a self-setting composition, comprising:
a metal oxide; and
a polymer or oligomer formed from one or more monomers of Formula (A1), optionally one or more monomers of Formula (A2), and one or more monomers of Formula (B1), (B2), or (B3): 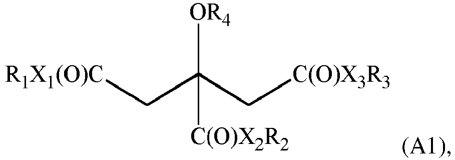 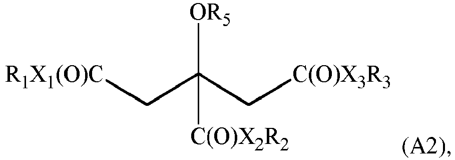 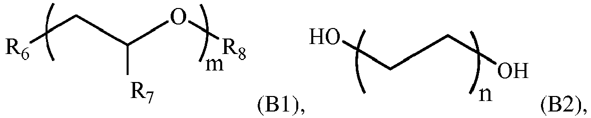 and 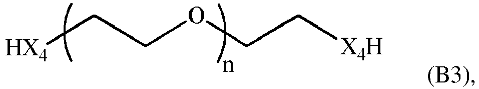 wherein
   X₁, X₂, X₃, and X₄ are each independently -O- or -NH-;
   R₁, R₂, and R₃ are each, independently, -H or a C1 to C22 alkyl or alkenyl group or M⁺,
   R₄ is H;
   R₅ is C(O)R₂₃;
   R₆ is -H, -NH, -OH, -OCH₃, -OCH₂CH₃, -CH₃, or -CH₂CH₃;
   R₇ is -H or a C1 to C23 alkyl or alkenyl group-CH₃;
   R₈ is -H, a C3 to C22 alkyl or alkenyl group, -CH₂CH₂OH, or -CH₂CH₂NH₂;
   R₂₃ is a C14 to C22 alkyl or alkenyl group; and
   n and m are independently integers ranging from 1 to 20.

In some embodiments, the polymer or oligomer is formed from one or more monomers of Formula (A1), optionally one or more monomers of Formula (A2), one or more monomers of Formula (B1), (B2), or (B3), and one or more monomers of Formula (C), Formula (D1), Formula (D2), Formula (D3), Formula (D4), Formula (E1), Formula (E2), Formula (F), Formula (G), Formula (H1), Formula (H2), Formula (H3), Formula (I1), Formula (I2), Formula (I3), Formula (I4), Formula (I5), and/or Formula (I6): 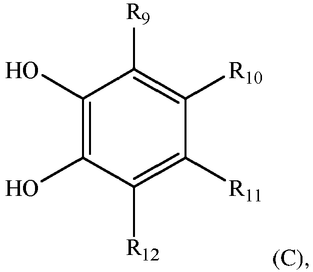 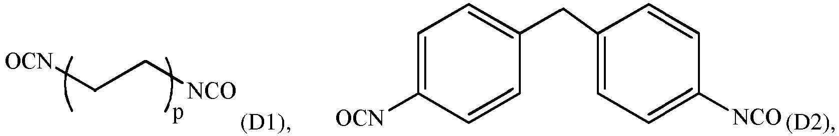 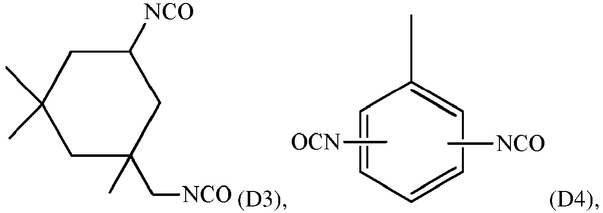 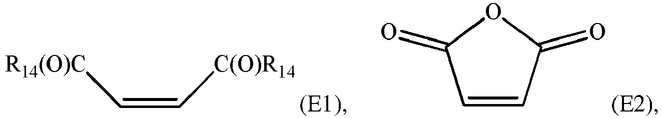 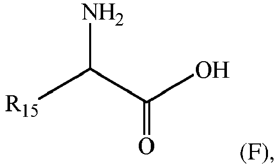 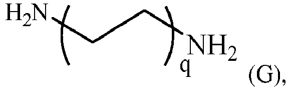 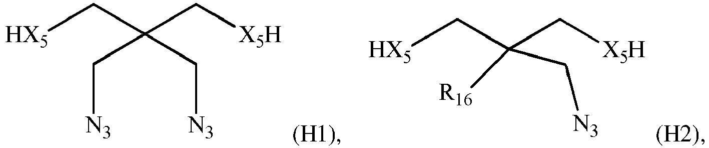 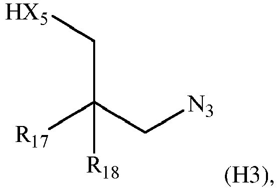 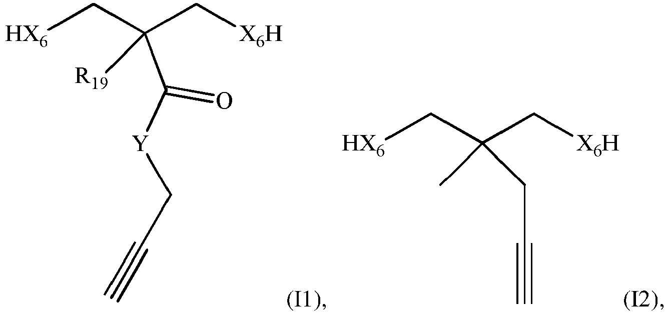 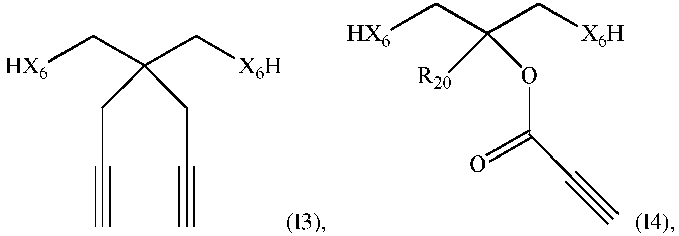 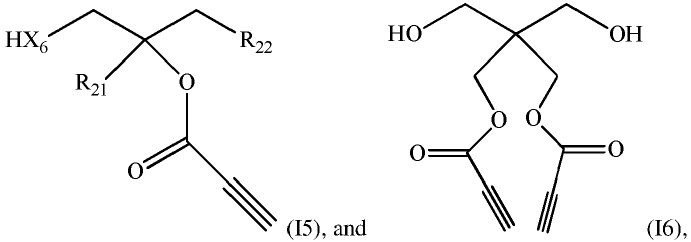 wherein
R₉, R₁₀, R₁₁, and R₁₂ are each independently -H, -OH, -CH₂(CH₂)ₓNH₂, - CH₂(CHR₁₃)NH₂, -CH₂(CH₂)ₓOH, -CH₂(CHR₁₃)OH, or -CH₂(CH₂)ₓCOOH;
R₁₃ is -COOH or -(CH₂)_{y}COOH;
x is an integer ranging from 0 to 10;
y is an integer ranging from 1 to 10;
p is an integer ranging from 1 to 10;
R₁₄ is -OH, -OCH₃, -OCH₂CH₃, or -Cl;
R₁₅ is an amino acid side chain;
q is an integer ranging from 1 to 20;
X₅ is -O- or -NH-;
R₁₆ is -CH₃ or -CH₂CH₃;
R₁₇ and R₁₈ are each independently -CH₂N₃, -CH₃, or -CH₂CH₃;
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some aspects, the metal oxide is a metal oxide of Zn, Mg, Cu, Ca, or a combination thereof.

In some embodiments, the self-setting composition of the invention further comprises a filler, *e.g.,* a filler that is at least one of hydroxyapatite, B-tricalcium phosphate, pearl powder, and octacalcium phosphate.

In some aspects, the self-setting composition of the invention has a setting time of less than 120 minutes at room temperature (25°C), *e.g.,* less than 80 minutes at room temperature (25°C) or less than 60 minutes at room temperature (25°C). In some aspects, the self-setting composition of the invention has a setting time of less than 40 minutes at a physiological temperature of 37°C, *e.g.,* less than 20 minutes at a physiological temperature of 37°C. In some aspects, the composition does not comprise a catalyst that affects setting time.

In some embodiments, the present invention also provides a method of making a self-setting composition, the method comprising:
forming a metal oxide/polymer mixture by mixing a dispersion comprising a metal oxide and a liquid with a polymer or oligomer formed from one or more monomers of Formula (A1), optionally one or more monomers of Formula (A2), and one or more monomers of Formula (B1), (B2), or (B3): 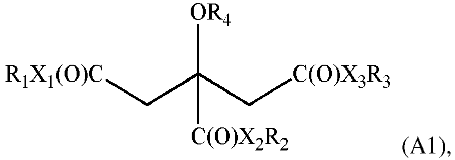 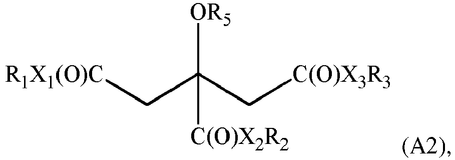 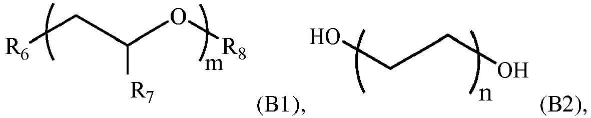 and 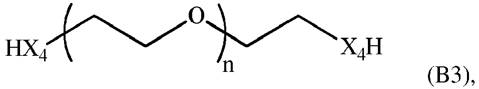 wherein
X₁, X₂, X₃, and X₄ are each independently -O- or -NH-;
R₁, R₂, and R₃ are each, independently, -H or a C1 to C22 alkyl or alkenyl group or M⁺,
R₄ is H;
R₈ is C(O)R₂₃;
R₆ is -H, -NH, -OH, -OCH₃, -OCH₂CH₃, -CH₃, or -CH₂CH₃;
R₇ is -H or a C1 to C23 alkyl or alkenyl group-CH₃;
R₈ is -H, a C3 to C22 alkyl or alkenyl group, -CH₂CH₂OH, or -CH₂CH₂NH₂;
R₂₃ is a C14 to C22 alkyl or alkenyl group; and
n and m are independently integers ranging from 1 to 20.

In some embodiments, the polymer or oligomer is formed from one or more monomers of Formula (A1), optionally one or more monomers of Formula (A2), one or more monomers of Formula (B1), (B2), or (B3), and one or more monomers of Formula (C), Formula (D1), Formula (D2), Formula (D3), Formula (D4), Formula (E1), Formula (E2), Formula (F), Formula (G), Formula (H1), Formula (H2), Formula (H3), Formula (I1), Formula (I2), Formula (I3), Formula (I4), Formula (I5), and/or Formula (I6): 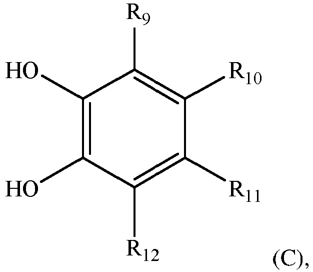 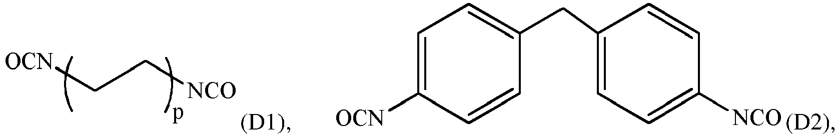 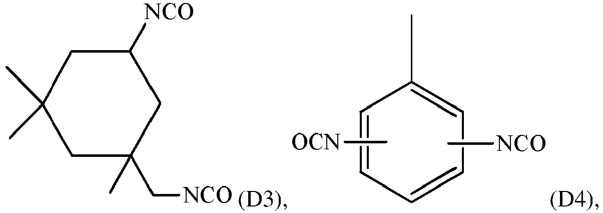 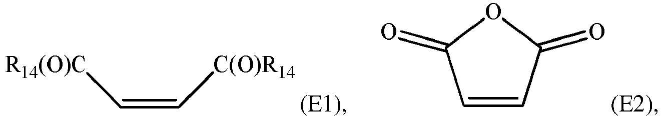 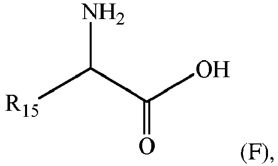 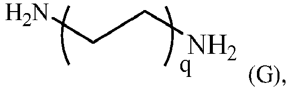 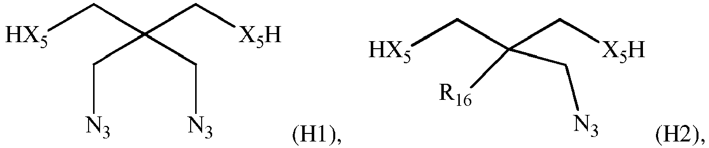 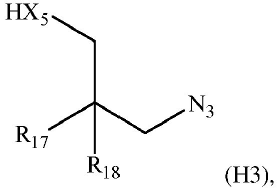 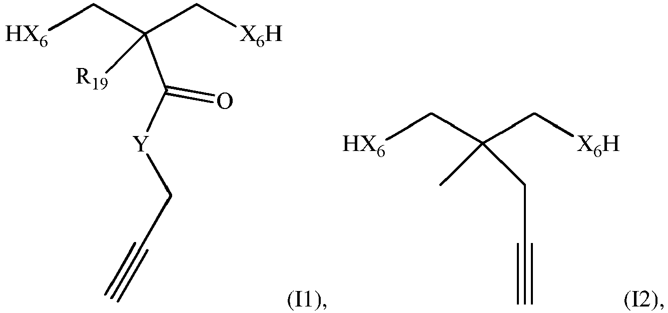 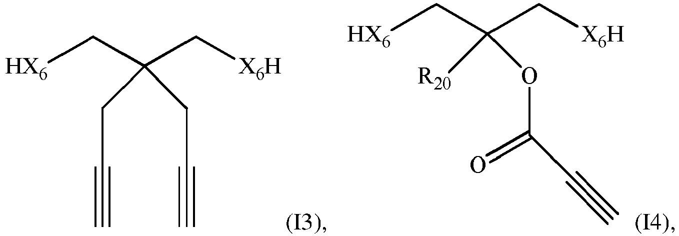 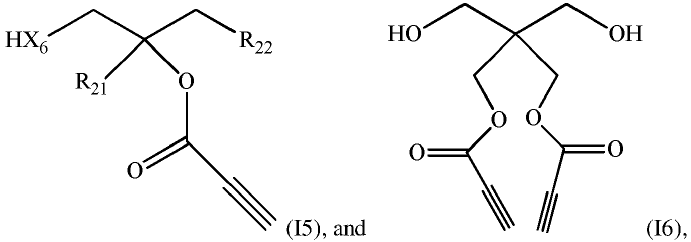 wherein
R₉, R₁₀, R₁₁, and R₁₂ are each independently -H, -OH, -CH₂(CH₂)ₓNH₂, - CH₂(CHR₁₃)NH₂, -CH₂(CH₂)ₓOH, -CH₂(CHR₁₃)OH, or -CH₂(CH₂)ₓCOOH;
R₁₃ is -COOH or -(CH₂)_{y}COOH;
x is an integer ranging from 0 to 10;
y is an integer ranging from 1 to 10;
p is an integer ranging from 1 to 10;
R₁₄ is -OH, -OCH₃, -OCH₂CH₃, or -Cl;
R₁₅ is an amino acid side chain;
q is an integer ranging from 1 to 20;
X₅ is -O- or -NH-;
R₁₆ is -CH₃ or -CH₂CH₃;
R₁₇ and R₁₈ are each independently -CH₂N₃, -CH₃, or -CH₂CH₃;
X₆ and Y are each independently -O- or -NH-;
R₁₉ and R₂₀ are each independently -CH₃ or -CH₂CH₃;
R₂₁ is -O(CO)C=CH, -CH₃, or -CH₂CH₃; and
R₂₂ is -CH₃, -OH or -NH₂.

In some aspects, the polymer or oligomer is dissolved in a solvent, *e.g.,* water, an organic solvent or a mixture thereof.

In some embodiments, the method of making a self-setting composition further comprises adding a filler to the metal oxide/polymer mixture. In further embodiments, the filler is at least one of hydroxyapatite, B-tricalcium phosphate, pearl powder, and octacalcium phosphate.

In some aspects, the method further comprises adding a porogen to the metal oxide/polymer mixture. In some embodiments, the method further comprises forming a film or mold from the metal oxide/polymer mixture. In some aspects, the method further comprises injecting the metal oxide/polymer mixture into a void, *e.g.,* an orthopedic void. In some aspects, the method further comprises evaporating the liquid or a solvent of the metal oxide/polymer mixture.

In some embodiments, the method further comprises thermally crosslinking the metal oxide/polymer mixture, *e.g.,* after the liquid or a solvent of the metal oxide/polymer mixture is evaporated.

In some embodiments, the present invention also provides a method of additive manufacturing that comprises forming a plurality of layers of a three-dimensional object from the self-setting composition of the invention.

In some embodiments, the present invention also provides a method of filling a void that comprises injecting the self-setting composition of the invention into the void, *e.g.,* an orthopedic void, such as a fracture.

In some embodiments, the present invention also provides a method of treating a physiological environment that comprises setting the self-setting composition of the invention in the physiological environment. In further embodiments, a temperature of the physiological environment is from 32 to 39°C.

These and other embodiments, compositions and applications are described in more detail in the detailed description that follows.

### BRIEF DESCRIPTION OF THE DRAWINGS

**Figure 1** is a schematic illustrating the proposed "self-healing" mechanism of non-stressed calcium chloride doped POC. Specifically, panel A shows that application of mechanical forces causes mechanically induced ionic bond rupture. Upon removal of the mechanical force, the ionic bonds are able to reform or "self-heal". Panel B is a schematic representation of the process shown in panel A.
**Figure 2** is a schematic illustrating the proposed "self-healing" mechanism of non-stressed calcium citrate doped POC.
**Figure 3** is a schematic illustrating an exemplary method for preparing ion-doped polymer or oligomer compositions using calcium chloride (CaCl₂).
**Figure 4** is a schematic illustrating an exemplary method for preparing ion-doped polymer or oligomer compositions using calcium citrate (CaCit).
**Figure 5** is a schematic illustrating a method of preparing poly (1,8-octanediol-co-citric acid) (POC).
**Figure 6** is a schematic illustrating a method of preparing ion-soaked POC.
**Figure 7** is a bar graph comparing the mechanical properties of ion-doped polymer or oligomer compositions with POC. Specifically, stress (in MPa) of polymers doped with CaCl₂, CaCit, Ca(NO₃)₂, CaCO₃, CaBr₂ and CaI₂ is compared to stress (in MPa) of POC.
**Figure 8** is a bar graph comparing the mechanical properties of ion-doped polymer or oligomer compositions with POC. Specifically, strain (%) of polymers doped with CaCl₂, CaCit, Ca(NO₃)₂, CaCO₃, CaBr₂ and CaI₂ is compared to strain (%) of POC.
**Figure 9** is a bar graph comparing the mechanical properties of various ion-doped polymer or oligomer compositions. Specifically, stress (in MPa) of polymers doped with NaCl, LiCl, KCl, CaCl₂, MgCl₂, SrCl₂, ZnCl₂, NiCl₂, CuCl₂, AlCl₃ and FeCl₃ is shown.
**Figure 10** is a bar graph comparing the mechanical properties of various ion-doped polymer or oligomer compositions. Specifically, strain (%) of polymers doped with NaCl, LiCl, KCl, CaCl₂, MgCl₂, SrCl₂, ZnCl₂, NiCl₂, CuCl₂, AlCl₃ and FeCl₃ is shown.
**Figure 11** is a bar graph comparing the mechanical properties of ion-doped polymer or oligomer compositions with POC. Specifically, the initial modulus expressed in units of MPa of polymers doped with CaCl₂, CaCit, Ca(NO₃)₂, CaCO₃, CaBr₂ and CaI₂ is compared to the initial modulus measured as stress (MPa) of POC.
**Figure 12** is a bar graph comparing the mechanical properties of various ion-doped polymer or oligomer compositions. Specifically, the initial modulus expressed in units of MPa of polymers doped with NaCl, LiCl, KCl, CaCl₂, MgCl₂, SrCl₂, ZnCl₂, NiCl₂, CuCl₂, AlCl₃ and FeCl₃ is shown.
**Figure 13** is a bar graph comparing the mechanical properties of ion-doped polymer or oligomer compositions with POC. Specifically, stress (in MPa) of polymers doped with CaCl₂, CaCit, Ca(NO₃)₂, CaCO₃, CaBr₂ and CaI₂ and hydrated for 2 weeks is compared to stress (in MPa) of POC that was hydrated for 2 weeks.
**Figure 14** is a bar graph comparing the mechanical properties of ion-doped polymer or oligomer compositions with POC. Specifically, strain (%) of polymers doped with CaCl₂, CaCit, Ca(NO₃)₂, CaCO₃, CaBr₂ and CaI₂ and hydrated for 2 weeks is compared to strain (%) of POC that was hydrated for 2 weeks.
**Figure 15** is a bar graph comparing the mechanical properties of ion-doped polymer or oligomer compositions with POC. Specifically, the initial modulus expressed in units of MPa of polymers doped with CaCl₂, CaCit, Ca(NO₃)₂, CaCO₃, CaBr₂ and CaI₂ and hydrated for 2 weeks is compared to the initial modulus measured as stress (MPa) of POC that was hydrated for 2 weeks.
**Figure 16** is a bar graph comparing the mechanical properties of ion-doped polymer or oligomer compositions with POC. Specifically, % of dry stress conserved in hydrated condition of polymers doped with CaCl₂, CaCit, Ca(NO₃)₂, CaCO₃, CaBr₂ and CaI₂ is compared to % of dry stress conserved in hydrated condition of POC.
**Figure 17** is a bar graph comparing the mechanical properties of ion-doped polymer or oligomer compositions with POC. Specifically, % of dry strain conserved in hydrated condition of polymers doped with CaCl₂, CaCit, Ca(NO₃)₂, CaCO₃, CaBr₂ and CaI₂ is compared to the % of dry strain conserved in hydrated condition of POC.
**Figure 18** is a series of photographs illustrating that the compositions produced by the methods shown in Figure 3 and Figure 4 produce films having a high degree of homogeneity. The series of photographs in the top panel illustrate film produced by POC doped with CaCl₂. The series of photographs in the bottom panel illustrate film produced by POC doped with CaCit.
**Figure 19** is a photograph of a film produced by the method shown in Figure 4 and illustrating that the film has a cluster-like morphology.
**Figure 20** is a panel of two photographs illustrating the morphology of calcium citrate (left photograph) and a composition produced by the method shown in Figure 4 (POC doped with CaCit, right photograph)
**Figure 21** is a bar graph illustrating % by weight of calcium for POC doped with CaCit according to embodiments described herein.
**Figure 22** is a bar graph illustrating % by weight of calcium for POC doped with CaCl₂ according to embodiments described herein.
**Figure 23** is a bar graph illustrating % by weight of calcium for CaCl₂ soaked POC.
**Figure 24** is a schematic illustrating a proposed reaction mechanism for organic solvent based prepolymer with metal oxide through direct reaction of metal oxide with carboxyl groups, forming an ionic crosslink network. Specifically, panel (A) shows a proposed setting mechanism for POC mixed with magnesium oxide in organic solvent. Panel (B) shows formation of crosslinked network via ionic bonding with carboxyl groups of POC.
**Figure 25A** and **Figure 25B** are schematics illustrating the proposed reaction mechanism for water based prepolymer with metal oxide through direct reaction of metal oxide with carboxyl groups or reaction of metal oxide with water to form metal hydroxide intermediates, followed by reaction with carboxyl groups, forming an ionic crosslink network. Specifically, **Figure 25A** shows the proposed setting mechanism for CA-PEG mixed with magnesium oxide in water. **Figure 25B** shows the formation of crosslinked network via ionic bonding with carboxyl groups of POC.
**Figure 26** is a graph illustrating the setting time of POC (30 wt% in ethanol)/ 10wt% magnesium oxide at various temperatures, demonstrating setting potential at room temperature and temperature acceleration.
**Figure 27** is a graph illustrating the setting time of POC/ 10wt% magnesium oxide with POC prepolymer concentration raised to 40wt% in ethanol, demonstrating accelerated setting, and the setting time of composites with 20wt% HA.

### DETAILED DESCRIPTION OF EXEMPLARY EMBODIMENTS

The present invention relates to polymerizable compositions, *i.e.,* compositions comprising monomers that may be reacted to form a polymer or an oligomer. The present invention also relates to polymeric or oligomeric compositions, *i.e.,* compositions that comprise a polymer or an oligomer as described herein. The polymeric compositions of the present invention may comprise a metal cation, *e.g.,* a monovalent, a divalent or a trivalent metal cation, or a metal oxide.

The polymeric or oligomeric compositions of the present invention may be self-setting. The term "self-setting", as used herein, refers to the ability of the composition to create a crosslinked polymer network. In some embodiments, a self-setting composition may be a liquid composition that may polymerize into a rigid polymer network. Without wishing to be bound by a specific theory, it is believed that a metal cation, *e.g.,* a monovalent, a divalent or a trivalent metal cation, or a metal oxide combined with a polymer, *e.g.,* a citrate polymer, may form ionic crosslinks through direct reaction between the metal oxide and the terminal carboxyl groups of the polymer, creating a crosslinked polymer network. For example, metal cations or a metal oxides present in the polymeric or oligomeric compositions may undergo reactions with the large number of carboxyl terminal groups in the citrate-based polymers, with water being formed as a major byproduct. Such reactions, it is believed, result in the formation of multiple ionic crosslinks between the citrate-based polymer chains, creating a solid, crosslinked ("set") network.

The crosslinking (setting) reactions are capable of proceeding at room and physiological temperature without modification of the polymer or metal oxide or the addition of catalysts, etc. Thus, in some embodiments, the crosslinked polymer network may form spontaneously, *e.g.,* at room temperature or at body temperature, *i.e.,* about 37 °C. In some embodiments, the crosslinked polymer network may form inside a subject, *e.g.,* a human subject, after the polymeric or oligomeric composition of the invention is injected into the subject. In one example, a polymeric or oligomeric composition may be mixed with a metal cation or a metal oxide, and may then be injected into a subject while the composition is in liquid form and prior to formation of the crosslinked polymer network. In another example, a polymeric or oligomeric composition in liquid form and a composition comprising a metal cation or a metal oxide in liquid form may be injected separately into a subject. In this example, the polymeric or oligomeric composition and a composition comprising a metal cation or a metal oxide are mixed inside the subject to form the crosslinked polymer network.

The polymeric or oligomeric compositions of the invention may comprise salt, e.g., associated or dissociated salt comprising a monovalent, divalent, or trivalent metal cation, or a metal oxide at a concentration of about 0.001 M or higher, *e.g.,* about 0.005 M or higher, about 0.01 M or higher, about 0.05 M or higher, about 0.1 M or higher, about 0.5 M or higher, or about 1 M or higher. In some embodiments, the polymeric or oligomeric compositions of the invention may comprise salt, *e.g.,* associated or dissociated salt comprising a monovalent, divalent, or trivalent metal cation, or a metal oxide at a concentration of about 0.001 M to about 2 M, about 0.001 M to about 0.01 M, about 0.005 M to about 0.01 M, about 0.005 M to about 0.05M, about 0.01 M to about 0.1 M, about 0.05 M to about 0.1 M, about 0.1 M to about 1M, or about 0.5 M to about 2M.

In some embodiments, the crosslinked polymer network produced using the self-setting compositions of the invention comprises only ionic bonds. In other embodiments, the crosslinked polymer network of the invention may further comprise, in addition to the ionic bonds, other crosslinks, *e.g*., non-ionic crosslinks, such as covalent crosslinks, between polymer chains. Non-ionic crosslinks in the polymer network may be created, *e.g.,* by curing the polymeric or oligomeric composition described herein, *e.g.,* by heating, and/or by using free radical polymerization. In one exemplary embodiment, a crosslinked polymer network comprising ionic and non-ionic, *e.g*., covalent, bonds between polymer chains may be created by first combining a polymeric or oligomeric composition with a metal cation or metal oxide to create an ionically crosslinked polymer network; and then creating non-ionic crosslinks in the ionically crosslinked polymer network, *e.g*., by curing or using free radical polymerization. In another exemplary embodiment, a crosslinked polymer network may be created by non-ionically crosslinking a polymer or oligomer composition, *e.g*., by curing or using free radical polymerization, to create a non-ionically crosslinked polymer network; and then combining the non-ionically crosslinked polymer network with a metal cation or a metal oxide to create ionic crosslinks.

The compositions of the present invention have multiple potential uses in tissue engineering, including *in situ* setting, formation of anatomically correct scaffolds when combined with molding, and 3D printing of scaffolds utilizing the rapid setting potential of the system. Additionally, the compositions of the present invention have potential uses in the orthopedic field as void fillers and as anchoring for surgical implants and scaffolds, as well as, when combined with porogens and other additives, as anatomically correct scaffolds based on patient specific anatomy.

Embodiments described herein can be understood more readily by reference to the following detailed description, examples, and figures. Elements, apparatus, and methods described herein, however, are not limited to the specific embodiments presented in the detailed description, examples, and figures. It should be recognized that these embodiments are merely illustrative of the principles of the present invention. Numerous modifications and adaptations will be readily apparent to those of skill in the art without departing from the spirit and scope of the invention.

In addition, all ranges disclosed herein are to be understood to encompass any and all subranges subsumed therein. For example, a stated range of "1.0 to 10.0" should be considered to include any and all subranges beginning with a minimum value of 1.0 or more and ending with a maximum value of 10.0 or less, e.g., 1.0 to 5.3, or 4.7 to 10.0, or 3.6 to 7.9.

All ranges disclosed herein are also to be considered to include the end points of the range, unless expressly stated otherwise. For example, a range of "between 5 and 10," "from 5 to 10," or "5-10" should generally be considered to include the end points 5 and 10.

Further, when the phrase "up to" is used in connection with an amount or quantity, it is to be understood that the amount is at least a detectable amount or quantity. For example, a material present in an amount "up to" a specified amount can be present from a detectable amount and up to and including the specified amount.

### I. Compositions

### A. Polymerizable Monomer-Containing Compositions

In one aspect, a polymerizable composition comprising, consisting of, or consisting essentially of: (i) an alkoxylated, alkenoxylated, or non-alkoxylated and non-alkenoxylated citric acid, citrate, or ester/amide of citric acid; optionally, another alkoxylated, alkenoxylated, or non-alkoxylated and non-alkenoxylated citric acid, citrate, or ester/amide of citric acid; (ii) a polyol or polyamine such as a diol or diamine; and (iii) at least one of an associated or dissociated salt comprising a monovalent, divalent, or trivalent metal cation. The polymerizable compositions described herein may also comprise water or an aqueous solvent. In some embodiments, these compositions can be reacted or polymerized to form compositions comprising polymers or oligomers that are reaction products of at least (i), (ii) and (iii).

The polymerizable monomer compositions described herein, in some cases, contain a majority (more than 50%) monomers or reactants, e.g., of (i) an alkoxylated, alkenoxylated or non-alkoxylated and non-alkenoxylated citric acid, citrate or ester/amide of citric acid, optionally, another alkoxylated, alkenoxylated or non-alkoxylated and non-alkenoxylated citric acid, citrate or ester/amide of citric acid, (ii) a polyol or polyamine, such as a diol or diamine, and (iii) at least one of an associated or dissociated salt comprising a monovalent, divalent or trivalent metal cation. In some embodiments, the polymerizable compositions comprise more than 60%, more than 70%, more than 80%, more than 90%, more than 95%, more than 99%, or 100% monomer. In some embodiments, the polymerizable compositions described herein do not comprise any polymers or oligomers that are reaction products of at least (i), (ii) and (iii). In some cases, the amount of these polymers or oligomers is less than 50%, less than 40%, less than 30%, less than 20%, less than 10%, less than 5% or less than 1%.

In the polymerizable monomer compositions of the invention, salt, *e.g.,* associated or dissociated salt comprising a monovalent, divalent, or trivalent metal cation, may be present at a concentration of about 0.001 M or higher, *e.g.,* about 0.005 M or higher, about 0.01 M or higher, about 0.05 M or higher, about 0.1 M or higher, about 0.5 M or higher, or about 1 M or higher. In some embodiments, the polymerizable monomer compositions of the invention may comprise salt, *e.g.,* associated or dissociated salt comprising a monovalent, divalent, or trivalent metal cation, at a concentration of about 0.001 M to about 2 M, about 0.001 M to about 0.01 M, about 0.005 M to about 0.01 M, about 0.005 M to about 0.05M, about 0.01 M to about 0.1 M, about 0.05 M to about 0.1 M, about 0.1 M to about 1M, or about 0.5 M to about 2M.

In some embodiments, a monomer including an alkoxylated, alkenoxylated, or non-alkoxylated and non-alkenoxylated citric acid, citrate, or ester/amide of citric acid as described herein may be a monomer according to Formula (A1): 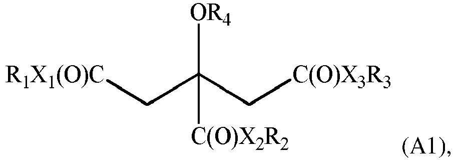 wherein
X₁, X₂, and X₃ are each independently -O- or -NH-;
R₁, R₂, and R₃ are each, independently, -H, a C1 to C22 alkyl or alkenyl group, M⁺, M²⁺, or M³⁺;
R₄ is H or M⁺;
M⁺ is a monovalent metal cation;
M²⁺ is a divalent metal cation; and
M³⁺ is a trivalent metal cation.

In some embodiments, at least one of R₁, R₂, and R₃ may independently be H, -CH₃, - CH₂CH₃, and in other embodiments, at least one of R₁, R₂, and R₃ may independently be M⁺, M²⁺ or M³⁺, and in still other embodiments R₁, R₂, and R₃ may independently be M²⁺ or M³⁺. For example, the monomer according to Formula (A1) can be citric acid or calcium citrate.

Additionally, another optionally added monomer may be a monomer according to Formula (A2): 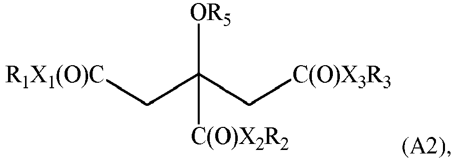 wherein
X₁, X₂, and X₃ are each independently -O- or -NH-;
R₁, R₂, and R₃ are each, independently, -H, a C1 to C22 alkyl or alkenyl group, M⁺, M²⁺, or M³⁺;
R₅ is C(O)R₂₃;
R₂₃ is a C14 to C22 alkyl or alkenyl group;
M⁺ is a monovalent metal cation;
M²⁺ is a divalent metal cation; and
M³⁺ is a trivalent metal cation.

In some embodiments, at least one of R₁, R₂, and R₃ is H, -CH₃, -CH₂CH₃. In other cases, at least one of R₁, R₂, and R₃ is M⁺, M²⁺ or M³⁺. In still other instances, at least one of R₁, R₂, and R₃ is M²⁺ or M³⁺.

Non-limiting examples of polyols/polyamines suitable for use in some embodiments described herein include C2-C20, C2-C12, or C2-C6 aliphatic alkane diols/diamines, including α,ω-n-alkane diols/diamines, or α,ω-alkene diols/diamines. For instance, in some cases, a polyol/polyamine comprises 1,4-butanediol/diamine, 1,6-hexanediol/diamine, 1,8-octanediol/diamine, 1,10-decanediol/diamine, 1,12-dodecanediol/diamine, 1,16-hexadecanediol/diamine, or 1,20-icosanediol/diamine. Branched α,ω-alkane diols/diamines or α,ω-alkene diols/diamines can also be used. Additionally, a polyol/polyamine can also be an aromatic diol/diamine. Further, in some embodiments, a polyol/polyamine comprises a poly(ethylene glycol) (PEG) or poly(propylene glycol) (PPG) having terminal hydroxyl or amine groups. Any such PEG or PPG not inconsistent with the objectives of the present disclosure may be used. In some embodiments, for instance, a PEG or PPG has a weight average molecular weight between about 100 and about 5000 or between about 200 and about 1000, or between 200 and about 100,000.

In some embodiments, the polyol/polyamine, e.g., diol or diamine, may have the structures represented by Formula (B1) and/or Formula (B2): 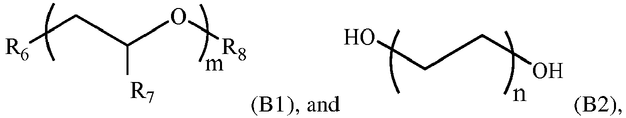 wherein
R₆ is -H, -NH, -OH, -OCH₃, -OCH₂CH₃, -CH₃, or -CH₂CH₃;
R₇ is -H or a C1 to C22 alkyl or alkenyl group such as -CH₃;
R₈ is -H, -CH₃, -CH₂CH₃ , a C3 to C22 alkyl or alkenyl group, -CH₂CH₂OH, or - CH₂CH₂NH₂; and
n and m are independently integers ranging from 1 to 1000 or 1 to 2000.

For example, in some cases, the polyol or polyamine has the structure represented by Formula (B3): 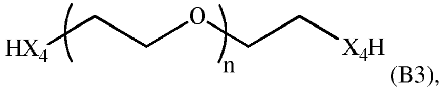 wherein X₄ is O or NH, and n is as defined above for Formulae (B1) and (B2).

Further, the monomers of Formula (A1), optional (A2), (B1), (B2), and (B3) can be used in any ratio not inconsistent with the objectives of the present disclosure. In addition, altering the ratios of monomers can, in some embodiments, alter the biodegradability, the mechanical strength, e.g., the elasticity and strength, and/or other properties of the polymer formed from reaction of the monomers. In some embodiments, the ratio of monomer (A1) to monomer (B1), monomer (B2), or monomer (B3) is between about 1:10 and about 10:1 or between about 1:5 and about 5:1. In some embodiments, the ratio of monomer (A1) to monomer (B1), monomer (B2), or monomer (B3) is between about 1:4 and about 4:1. In some embodiments, the ratio is about 1:1. When (A2) is used, the ratio of monomer (A1) to monomer (A2), in some cases, is between about 1:10 and about 10:1 or between about 1:5 and about 5:1. In some embodiments, the ratio of monomer (A1) to monomer (A2) is between about 1:4 and about 4:1. In some embodiments, the ratio is about 1:1. Additionally, when (A2) is reacted, the ratio of monomer (A2) to monomer (B1), monomer (B2), or monomer (B3), in some instances, is between about 1:10 and about 10:1 or between about 1:5 and about 5:1. In some embodiments, the ratio of monomer (A2) to monomer (B1), monomer (B2), or monomer (B2) is between about 1:4 and about 4:1. In some embodiments, the ratio is about 1:1.

The salt of Formula AB can be any salt not inconsistent with the objectives of the present disclosure. For example, in some cases, A is a monovalent, divalent, or trivalent metal cation, and B is a simple anion or a complex anion. The monovalent, divalent, or trivalent cation described herein is not limited and can include, for example, at least one of Mg²⁺, Ca²⁺, Zn²⁺, Cu²⁺, Co²⁺, Fe²⁺, Fe³⁺, Cr²⁺, Mn²⁺, Co³⁺, Sr²⁺, V²⁺, V³⁺, Ti²⁺, Ti³⁺, Sr²⁺, Ni²⁺, Al³⁺, Al²⁺, Cr³⁺, Ba²⁺, Na⁺, K⁺, and Li⁺. The anion B is not limited, and can be any anion that forms a neutral salt with the monovalent, divalent, or trivalent metal cation. For example, if the metal cation A is Ca²⁺, Cl⁻, citrate, Br⁻, CO₃²⁻ , I⁻, and NO₃⁻ are suitable counter-ions or anions in some instances. As understood by one of ordinary skill in the art, when used, Cl⁻, Br⁻, I⁻, or NO₃⁻ are present in a ratio of about 2:1 with respect to Ca²⁺, and CO₃²⁻, when used, is present in about a 1:1 ratio with respect to Ca²⁺. In some cases, B is Cl⁻, Br⁻, I⁻, citrate, NO₃⁻, or CO₃²⁻. Other anions may also be used.

Moreover, the amount of associated or dissociated salt AB is not particularly limited and in some embodiments can be from 0.005 to 0.6 or even higher (*e.g.,* 0.8, 1.0, 1.5, or 2.0) equivalents of associated or dissociated salt for every 1 equivalent of alkoxylated, alkenoxylated, or non-alkoxylated and non-alkenoxylated citric acid, citrate, or ester/amide of citric acid (e.g., monomer having the structure of Formula (A1) and/or (A2)). In some embodiments, the range is 0.01 to 0.3, 0.02 to 0.2, or 0.03 to 0.1 equivalents of associated or dissociated salt AB for every 1 equivalent of alkoxylated, alkenoxylated, or non-alkoxylated and non-alkenoxylated citric acid, citrate, or ester/amide of citric acid.

Polymerizable compositions described herein may comprise water or an aqueous or water-based solvent as a solvent or as the only solvent. An aqueous solvent comprises a majority (greater than 50%) water, and may comprise more than 60%, more than 70%, more than 80%, more than 90%, more than 95%, more than 99%, but not 100% water. In some embodiments, the aqueous solvent also comprises an organic co-solvent, including a polar or non-polar organic solvent (such as acetone or ethanol) in an amount greater than 0%, but not greater than 50%.

In some embodiments of the polymerizable compositions described herein, the salt described herein may be soluble, partially soluble, or insoluble in water or an aqueous or water-based solvent described herein. In some cases, the solubility of the salt in water can be at least 30 g/100 mL, at least 50 g/100 mL, or at least 75 g/100 mL at 25°C. Alternatively, in other embodiments, the solubility of the salt in water may be less than 30 g/L, less than 20 g/L, less than 10 g/L, less than 5 g/L, or less than 1 g/L at 25°C.

Additionally, as described above, it is possible for the salt AB to be entirely omitted from compositions described herein. It may be especially desirable to omit the salt AB if one or more of the monomers or reactants described above include a metal cation, such as a divalent or trivalent metal cation, that can crosslink the polymer or oligomer to form a crosslinked polymer or oligomer network. For example, in some instances, the citric acid-based monomer (e.g., having the structure of Formula (A1) or (A2)) is provided as a salt or cation-anion complex in which at least one divalent or trivalent metal is present (*e.g.,* in which at least one of R₁, R₂, and R₃ is M²⁺ or M³⁺). In such cases, crosslinking may occur through the one or more divalent or trivalent metal cations, without the use of a separate, additional salt described hereinabove.

In addition to comprising monomers or reactants (i), (ii), and (iii) described above, a composition described herein can also comprise one or more additional monomers or reactants. For instance, in some cases, a composition described herein further comprises (iv) a catechol-containing species. In some embodiments, the components of such a composition are reacted or polymerized to form a polymer or oligomer that is a reaction product of at least (i), (ii), (iii) and (iv) above.

The catechol-containing species can comprise any catechol-containing species not inconsistent with the objectives of the present disclosure. In some cases, a catechol-containing species comprises at least one moiety that can form an ester or amide bond with another chemical species used to form a polymer in embodiments where the monomers are reacted. For example, in some cases, a catechol-containing species comprises an alcohol moiety, an amine moiety, a carboxylic acid moiety, or a combination thereof. Further, in some instances, a catechol-containing species comprises a hydroxyl moiety that is not part of the catechol moiety. In some embodiments, a catechol-containing species comprises dopamine. In other embodiments, a catechol-containing species comprises L-3,4-dihydroxyphenylalanine (L-DOPA) or D-3,4-dihydroxyphenylalanine (D-DOPA). In still other embodiments, a catechol-containing species comprises gallic acid or caffeic acid. In some cases, a catechol-containing species comprises 3,4-dihydroxyhydrocinnamic acid. Additionally, a catechol-containing species may also comprise a naturally-occurring species or a derivative thereof, such as tannic acid or a tannin. Moreover, in some embodiments, a catechol-containing species is coupled to the backbone of the polymer through an amide bond. In other embodiments, a catechol-containing species is coupled to the backbone of a polymer formed by the monomers through an ester bond. In some embodiments, the catechol-containing species may be represented by Formula (C): 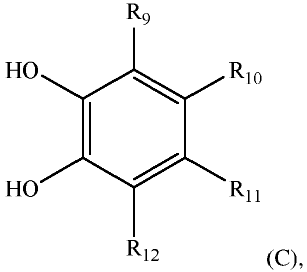 wherein
R₉, R₁₀, R₁₁, and R₁₂ are each independently -H, -OH, -CH₂(CH₂)ₓNH₂, - CH₂(CHR₁₃)NH₂, -CH₂(CH₂)ₓOH, -CH₂(CHR₁₃)OH, -CH₂(CH₂)ₓCOOH, or a point of attachment to a polymer chain;
R₁₃ is -COOH or -(CH₂)_{y}COOH; and
x is an integer ranging from 1 to 10.

In some cases, a monomer of Formula (C) comprises dopamine, L-DOPA, D-DOPA, gallic acid, caffeic acid, 3,4-dihydroxyhydrocinnamic acid, or tannic acid. Moreover, in some embodiments, a monomer of Formula (C) is coupled to the backbone of a polymer or oligomer formed from reaction of a monomer, including a monomer of Formula (C), through an amide bond. In other embodiments, a monomer of Formula (C) is coupled to the backbone through an ester bond.

Further, in some embodiments, a monomer of Formula (B1),(B2), or (B3) can be replaced by an alcohol that does not have the formula of Formula (B1), (B2), or (B3). For example, in some embodiments, an unsaturated alcohol or an unsaturated polyol can be used. Moreover, the monomers of Formula (A1), optional (A2), (B1), (B2), (B3) and (C) can be used in any ratio not inconsistent with the objectives of the present disclosure. In addition, altering the ratios of monomers can, in some embodiments, alter the mechanical and other properties of the polymers or oligomers formed from the monomers. In some embodiments, the ratio of monomer (A1) and/or monomer (A2) to monomer (B1), monomer (B2), or monomer (B3) is between about 1:10 and about 10:1 or between about 1:5 and about 5:1. In some embodiments, the ratio of monomer (A1) or monomer (A2) to monomer (B1), monomer (B2), or monomer (B3) is between about 1:4 and about 4:1. In some cases, the ratio is about 1:1. Further, in some embodiments, the ratio of monomer (A1) or monomer (A2) to monomer (C) is between about 1:10 and about 10:1. Further, in some embodiments, the ratio of monomer (A1) to monomer (A2) is between about 1:10 and about 10:1.

Additionally, a monomer-containing composition described herein, in some cases, can comprise (i) an alkoxylated, an alkenoxylated or a non-alkoxylated and non-alkeneoxylated citric acid, citrate, or ester/amide of citric acid, and optionally, an alkoxylated or alkenoxylated citric acid, citrate, or ester/amide of citric acid, (ii) a polyol/polyamine, (iii) at least one associated or dissociated salt comprising a monovalent, divalent, or trivalent metal cation, and (v) an alcohol/amine, an amide, carboxylic acid, or an isocyanate. In such instances, the polyol/polyamine can comprise any polyol/polyamine described above, and the ester/amine of citric acid can comprise any ester/amide of citric acid described above. Further, an amine, in some embodiments, comprises one or more primary amines having two to ten carbon atoms. In other cases, an amine comprises one or more secondary or tertiary amines having two to fifteen carbon atoms. An isocyanate, in some embodiments, comprises a monoisocyanate. In other instances, an isocyanate comprises a diisocyanate such as an alkane diisocyanate having four to twenty carbon atoms. An isocyanate described herein may also include a monocarboxylic acid moiety. In some embodiments, these polymerizable compositions are reacted, *e.g*., polymerized, to form compositions comprising one or more polymers or oligomers that are reaction products of at least (i), (ii), (iii), and (v).

In some embodiments, the isocyanate may be represented by Formula (D1), Formula (D2), Formula (D3), and/or Formula (D4): 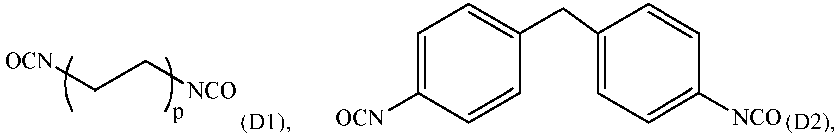 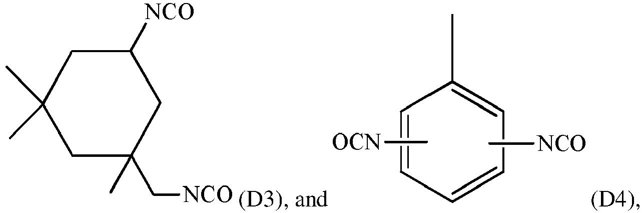 wherein p is an integer ranging from 1 to 10.

In addition, a polymerizable composition described herein can also comprise (i) one or more alkoxylated, an alkenoxylated, or a non-alkoxylated and non-alkeneoxylated, citric acid, citrate, or ester/amide of citric acid (ii) a polyol/polyamine, (iii) at least one associated or dissociated salt comprising a monovalent, divalent, or trivalent metal cation, and (vi) a polycarboxylic acid such as a dicarboxylic acid or a functional equivalent of a polycarboxylic acid, such as a cyclic anhydride or an acid chloride of a polycarboxylic acid. In such cases, the polyol/polyamine can comprise any polyol/polyamine described above, and the ester of citric acid can comprise any ester/amide of citric acid described above. Moreover, the polycarboxylic acid or functional equivalent thereof can be saturated or unsaturated. For example, in some instances, the polycarboxylic acid or functional equivalent thereof comprises maleic acid, maleic anhydride, fumaric acid, or fumaryl chloride. A vinyl-containing polycarboxylic acid or functional equivalent thereof may also be used, such as allylmalonic acid, allylmalonic chloride, itaconic acid, or itaconic chloride. Further, in some cases, the polycarboxylic acid or functional equivalent thereof can be at least partially replaced with an olefin-containing monomer that may or may not be a polycarboxylic acid. In some embodiments, for instance, an olefin-containing monomer comprises an unsaturated polyol such as a vinyl-containing diol. In some embodiments, these polymerizable compositions are reacted, *e.g*., polymerized, to form compositions comprising one or more polymers or oligomers that are reaction products of, at least, (i), (ii), (iii), and (vi).

In some embodiments, the polycarboxylic acid may be represented by Formula (E1) and/or Formula (E2): 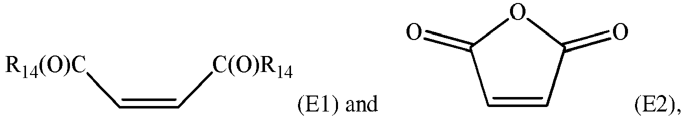 wherein R₁₄ is -OH, -OCH₃, -OCH₂CH₃, or -Cl.

Further, the monomers of Formula (A1), optional (A2), (B1), (B2), (E1) and (E2) can be used in any ratio not inconsistent with the objectives of the present disclosure. In addition, altering the ratios of monomers can, in some embodiments, alter the antimicrobial properties, the biodegradability, the mechanical strength and/or other properties of a polymer formed from the monomers. In some embodiments, the ratio of monomer (A1) or monomer (A2) to monomer (B1), monomer (B2) or monomer (B3) is between about 1:10 and about 10:1 or between about 1:5 and about 5:1. In some embodiments, the ratio of monomer (A1) or monomer (A2) to monomer (B1), monomer (B2) or monomer (B3) is between about 1:4 and about 4:1. In some embodiments, the ratio is about 1:1. Further, in some embodiments, the ratio of monomer (A1) or monomer (A2) to monomer (E1) or monomer (E2) is between about 1:10 and about 10:1. In some embodiments, the ratio of monomer (A1) or monomer (A2) to monomer (E1) or monomer (E2) is about 1:1. When (A2) is reacted, the ratio of monomer (A1) to monomer (A2), in some cases, is between about 1:10 and about 10:1 or between about 1:5 and about 5:1. In some embodiments, the ratio of monomer (A1) to monomer (A2) is between about 1:4 and about 4:1. In some embodiments, the ratio is about 1:1.

In still other embodiments, a polymerizable composition as described herein comprises (i) one or more alkoxylated or alkenoxylated, or non-alkoxylated and non-alkenoxylated, citric acid, citrate, or ester/amide of citric acid, (ii) a polyol/polyamine, (iii) at least one associated or dissociated salt comprising a monovalent, divalent, or trivalent metal cation, and (vii) an amino acid such as an alpha-amino acid. An alpha-amino acid of a polymer described herein, in some embodiments, comprises an L-amino acid, a D-amino acid, or a D,L-amino acid. In some cases, an alpha-amino acid comprises alanine, arginine, asparagine, aspartic acid, cysteine, glycine, glutamine, glutamic acid, histidine, isoleucine, leucine, lysine, methionine, proline, phenylalanine, serine, threonine, tyrosine, tryptophan, valine, or a combination thereof. Further, in some instances, an alpha-amino acid comprises an alkyl-substituted alpha-amino acid, such as a methyl-substituted amino acid derived from any of the 22 "standard" or proteinogenic amino acids, such as methyl serine. In some embodiments, these polymerizable compositions are reacted, *e.g.,* polymerized, to form compositions comprising one or more polymers or oligomers that are formed from, *e.g.,* are reaction products of, at least (i), (ii), (iii), and (vii).

In some embodiments, the polymerizable composition described herein is formed from the following: one or more monomers of Formula (A1); optionally one or more monomers of Formula (A2); one or more monomers of Formula (B1), (B2), or (B3); an associated or dissociated salt comprising a monovalent, divalent, or trivalent metal cation; and one or more amino acid monomers represented by Formula (F): 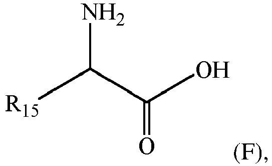 wherein R₁₅ is an amino acid side chain.

Moreover, the monomers of Formula (A1), optional (A2), (B1), (B2), (B3) and (F) can be used in any ratio not inconsistent with the objectives of the present disclosure. In addition, altering the ratios of monomers can, in some embodiments, alter the mechanical properties and/or other properties of the polymers or oligomers formed from the monomers. In some embodiments, the ratio of monomer (A1) or monomer (A2), if reacted, to monomer (B1), monomer (B2) or monomer (B3) is between about 1:10 and about 10:1 or between about 1:5 and about 5:1. In some embodiments, the ratio of monomer (A1) or monomer (A2), if used, to monomer (B1), monomer (B2) or monomer (B3) is between about 1:4 and about 4:1. In some cases, the ratio is about 1:1. Further, in some embodiments, the ratio of monomer (A1), monomer (A2), monomer (B1), monomer (B2) or monomer (B3) to monomer (F) is between about 1:10 and about 10:1. When (A2) is reacted, the ratio of monomer (A1) to monomer (A2), in some cases, is between about 1:10 and about 10:1 or between about 1:5 and about 5:1. In some embodiments, the ratio of monomer (A1) to monomer (A2) is between about 1:4 and about 4:1. In some embodiments, the ratio is about 1:1.

The above-described polymerizable compositions can form a reaction product, or in some cases, a condensation polymerization reaction product of the identified species, *e.g.,* monomers and associated or dissociated salt as described above. In some embodiments, at least two of the identified species or monomers polymerize to form a copolymer. In some such embodiments, the monomers react to form an alternating copolymer or a statistical copolymer of the reacted monomers. Additionally, species or monomers described hereinabove may also react to form pendant groups or side chains of a copolymer, or may form cyclic structures that may form part of the backbone of a polymer or oligomer. Moreover, in some cases, the amount or ratio of the species described above, *e.g.,* (A1), (B), (C), (D), *etc.,* or other reactants can be selected to provide a desired properties of a polymer or oligomer when the species are reacted, *e.g*., polymerized.

Further, one or more other properties of a polymer or oligomer formed when the polymerizable compositions described herein are polymerized may also be tuned based on the amount of the alkoxylated or alkenoxylated citrate moiety, *e.g.,* -C(O)R₂₃ in Formula (A2), and/or on one or more other features of the chemical structure of components of the polymerizable compositions. For example, in some cases, the water uptake and/or degradation rate of a polymer described herein can be tuned for a desired application. Such tunability can provide further advantages.

Additionally, when reacted or polymerized, the polymerizable compositions described herein can produce one or more polymers or oligomers that have at least one ester bond in their backbone. In some cases, the one or more polymers or oligomers have a plurality of ester bonds in the backbone of the polymer, such as at least three ester bonds, at least four ester bonds, or at least five ester bonds. In some embodiments, a polymer or oligomer described herein has between two ester bonds and fifty ester bonds in the backbone of the polymer. Polymers or oligomers having one or more ester bonds in the backbone of the polymer can be hydrolyzed in a biological or other aqueous environment to, for example, release free citric acid or citrate, in addition to other components.

In some cases, one or more polymers or oligomers formed by reacting or polymerizing the polymerizable compositions described herein have surprisingly strong underwater adhesive properties. These polymers or oligomers, in some embodiments, are formed from one or more monomers of Formula (A1), optionally one or more monomers of Formula (A2), one or more monomers of Formula (B1), (B2), or (B3), and dopamine. In other cases, the polymer or oligomer having surprisingly strong underwater adhesive properties and these are formed from a polymerizable composition comprising one or more monomers of Formula (A1), optionally one or more monomers of Formula (A2), one or more monomers of Formula (B1), (B2) or (B3), L-DOPA, D-DOPA or gallic acid, and caffeic acid, 3,4-dihydroxyhydrocinnamic acid, or tannic acid.

In some instances, the polymerizable compositions described herein comprise one or more monomers comprising a diamine. In some embodiments, the diamine may be represented by the structure of Formula (G): 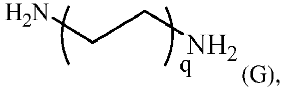 wherein q is an integer ranging from 1 to 20.

In some cases, the diamine may at least partially replace a diol monomer such as Formula (B1), Formula (B2), or Formula (B3) described hereinabove. In other cases, the diamine may be used in addition to diol monomers and/or instead of the diol monomers. Not intending to be bound by theory, the use of diamine will result in amide linkages in the polymer or oligomer formed by polymerization of the polymerizable composition, which may in turn result in slower degradation of the polymer or oligomer formed therefrom, giving a means to "tune" the degradability of the polymer or oligomer. In some embodiments, these polymerizable compositions are reacted, *e.g*., polymerized, to form compositions comprising polymers or oligomers that are formed from, *e.g.,* are reaction products of, at least monomer (A1), optionally monomer (A2), and monomers (B1), (B2), or (B3), wherein the diamine monomer according to Formula (G) at least partially replaces (B1), (B2), or (B3).

In some embodiments, polymerizable composition comprises one or more monomers comprising one or more alkyne moieties or one or more azide moieties. In some cases, a polymerizable composition described herein comprises: (i) one or more alkoxylated or alkenoxylated, or non-alkoxylated and non-alkenoxylated, citric acid, citrate, or ester of citric acid; (ii) a polyol such as a diol; (iii) at least one associated or dissociated salt comprising a monovalent, divalent, or trivalent metal cation, and (viii) at least a monomer comprising an alkyne moiety and/or an azide moiety. For example, in some cases, a composition described herein comprises a polymer or oligomer formed from one or more monomers of Formula (A1); optionally one or more monomers of Formula (A2); one or more monomers of Formula (B1), (B2) or (B3); and one or more monomers comprising one or more alkyne moieties and/or one or more azide moieties. In some instances, the monomers comprising one or more alkyne moieties and/or one or more azide moieties have a plurality of alkyne and/or azide moieties. In some embodiments, these polymerizable compositions are reacted, *e.g.,* polymerized, to form compositions comprising one or more polymers or oligomers that are formed from, *e.g.,* are reaction products of, at least (i), (ii), (iii), and (viii).

Further, monomers comprising one or more alkyne and/or azide moieties used to form a polymer described herein can comprise any alkyne- and/or azide-containing chemical species not inconsistent with the objectives of the present disclosure. For example, in some instances, one or more such monomers comprises a polyol/polyamine such as a diol/diamine. Such a monomer, in some cases, can be incorporated into the polymer through the reaction of one or more hydroxyl moieties of the monomer with a carboxyl or carboxylic acid moiety of a monomer of Formula (A1) or of another carboxyl-containing monomer described herein, *e.g.,* an optional monomer of Formula (A2). Moreover, in some instances, such a monomer can be used instead of the monomer of Formula (B1), (B2), or (B3). In other instances, such a monomer is used in conjunction with one or more monomers of Formula (B1), (B2), or (B3). Further, such a monomer can be a diazido-diol (DAzD) or an alkyne diol (AlD).

In some cases, one or more monomers comprising one or more azide moieties comprises a monomer of Formula (H1), (H2), or (H3): 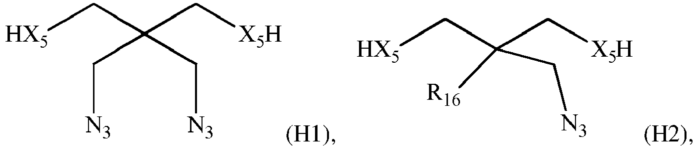 and 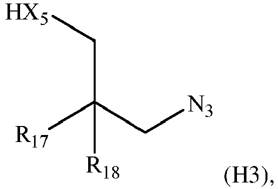 wherein
X₅ is -O- or -NH-;
R₁₆ is -CH₃ or -CH₂CH₃; and
R₁₇ and R₁₈ are each independently -CH₂N₃, -CH₃, or -CH₂CH₃.

Further, in some embodiments, one or more monomers comprising one or more alkyne moieties comprises a monomer of Formula (I1), (12), (13), (I4), (I5), or (I6): 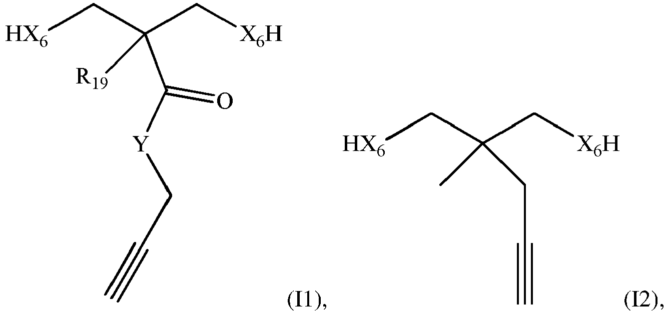 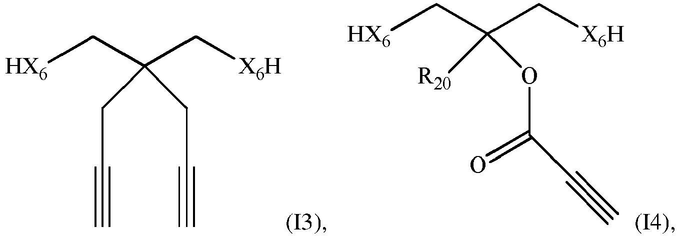 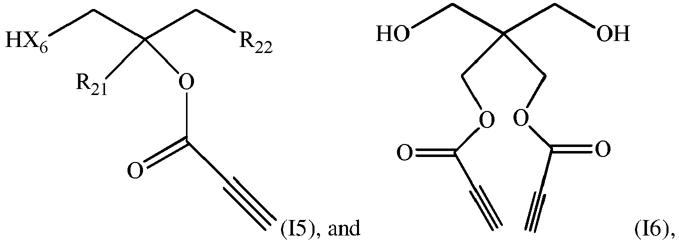 wherein
X₆ and Y are each independently -O- or -NH-;
R₁₉ and R₂₀ are each independently -CH₃ or -CH₂CH₃;
R₂₁ is -O(CO)C≡CH, -CH₃, or -CH₂CH₃; and
R₂₂ is -CH₃, -OH or -NH₂.

Additionally, in some embodiments, a monomer described herein can be functionalized with a bioactive species, and in such cases, a polymer or oligomer formed by reacting the monomers described herein can be functionalized with that bioactive species. Moreover, an additional monomer can comprise one or more alkyne and/or azide moieties. For example, in some instances, a polymer described herein is formed from one or more monomers comprising a peptide, polypeptide, nucleic acid, or polysaccharide, wherein the peptide, polypeptide, nucleic acid, or polysaccharide is functionalized with one or more alkyne and/or azide moieties. In some cases, the bioactive species of a polymer described herein is a growth factor or signaling molecule. Further, a peptide can comprise a dipeptide, tripeptide, tetrapeptide, or a longer peptide. As described further herein below, forming a polymer from such a monomer, in some embodiments, can provide additional biological functionality to a composition described herein.

### B. Compositions comprising Polymers or Oligomers

In a further aspect, polymeric or oligomeric compositions are described herein. In some cases, such a composition comprises, consists of, or consists essentially of a polymer or oligomer formed from a monomer-containing or polymerizable composition described hereinabove in Section IA. Any composition described hereinabove in Section IA may be used to form a polymer or oligomer. For example, in some cases, a composition described herein comprises a polymer or oligomer formed from one or more monomers of Formula (A1); optionally one or more monomers of Formula (A2); one or more monomers of Formula (B1), (B2), or (B3); one or more salts of Formula AB, and one or more monomers of Formula (C), Formula (D1), Formula (D2), Formula (D3), Formula (D4), Formula (E1), Formula (E2), Formula (F), Formula (G), Formula (H1), Formula (H2), Formula (H3), Formula (I1), Formula (I2), Formula (I3), Formula (I4), Formula (I5), and/or Formula (I6)

Additionally, in some cases, a composition described herein comprises a plurality of polymers or oligomers, including polymers or oligomers formed from monomers described hereinabove in Section IA. In some instances, the polymers are selected to be reactive with one another through a click chemistry reaction scheme. In some cases, for example, a composition described herein comprises a first polymer formed from one or more monomers of Formula (A1); optionally one or more monomers of Formula (A2); one or more monomers of Formula (B1), (B2) or (B3); one or more salts of Formula AB; and one or more monomers comprising one or more alkyne moieties; and further comprises a second polymer formed from one or more monomers of Formula (A1); optionally one or more monomers of Formula (A2); one or more monomers of Formula (B1), (B2), or (B3); one or more salts of Formula AB; and one or more monomers comprising one or more azide moieties. Thus, in some such embodiments, a composition described herein can comprise an azide-alkyne cycloaddition product, such as a 1,4 or 1,5-triazole ring. In this manner, a first polymer and a second polymer of a composition described herein can form a polymer network by forming one or more azide-alkyne cycloaddition products to serve as cross-links of the polymer network. Moreover, as described further herein, one or more divalent or trivalent metal cations may also serve as cross-links of the polymer network. Other combinations of polymers are also possible.

Further, as described above, it is possible for the salt AB to be entirely omitted from compositions described herein and/or from polymers or oligomers described herein. It may be especially desirable to omit the salt AB if one or more of the monomers or reactants described above include a metal cation, such as a divalent or trivalent metal cation, that can crosslink the polymer or oligomer to form a crosslinked polymer or oligomer network. For example, in some instances, the citric acid-based monomer (e.g., having the structure of Formula (A1) or (A2)) is provided as a salt or cation-anion complex in which at least one divalent or trivalent metal is present (*e.g.,* in which at least one of R₁, R₂, and R₃ is M²⁺ or M³⁺). In such cases, crosslinking may occur through the one or more divalent or trivalent metal cations, without the use of a separate, additional salt described hereinabove.

A composition described herein can include polymers or oligomers described above in any amount not inconsistent with the objectives of the present disclosure. For instance, in some cases, a composition descried herein comprises a majority (more than 50%) polymer or oligomer. In some embodiments, a composition comprises more than 60%, more than 70%, more than 80%, more than 90%, more than 95%, more than 99%, or 100% polymer or oligomer. In some embodiments, these compositions comprise less than 50%, less than 40%, less than 30%, less than 20%, less than 10%, less than 5%, or less than 1% of any of the monomers described herein.

As described further herein, polymers or oligomers of compositions described herein can have improved mechanical properties compared to other polymers or oligomers, including compared to other polymers or oligomers that do not exhibit metal cation cross-links as described herein or are not made by an "ion-doping" method described herein. In some cases, a polymer or oligomer described herein has improved strength and/or elasticity. For example, the compositions have a high initial modulus, *e.g.,* of more than 5, more than 10, more than 20, more than 30, more than 40, more than 50, or more than 60 MPa. Compositions described herein can undergo stress of 4 to 20, 10 to 20, 11 to 20, 12 to 20, or 12 to 18 MPa and have corresponding strain values varying from less than 20% to more than 150%. Initial modulus values, stress, and strain values remain high in compositions that have been hydrated for two weeks. Additional physical properties of polymers or oligomers described herein are further described in Section II herein and below, including in comparison to polymers or oligomers formed in a manner that differs from inventive methods described herein.

### II. Exemplary Methods of Making a Polymer or Oligomer

In another aspect, methods of making a polymer or oligomer are described herein. In some embodiments, such a method comprises forming any of the polymers or oligomers of Section IB from the corresponding polymerizable compositions of Section IA. More particularly, such a method can comprise, consist of, or consist essentially of reacting or polymerizing a set of monomers and/or other reactants described in Section IA above to obtain a polymer or oligomer described in Section IB above. For example, in some cases, a method comprises, consists of, or consists essentially of reacting or polymerizing (i) one or more alkoxylated or alkenoxylated, or non-alkoxylated and non-alkenoxylated, citric acid, citrate, or ester/amide of citric acid species; (ii) a polyol or polyamine such as a diol or diamine; and (iii) at least one associated or dissociated salt comprising a monovalent, divalent, or trivalent metal cation, to form a polymer derived from these components. In some embodiments, these components are reacted in a solvent, such as an aqueous solvent. Additionally, in some cases, the reactants are reacted in the same step or simultaneously. In other instances, two or more reactants, but not all reactants, may be first reacted to form an intermediate species (such as a species of Formula (A1) or (A2) wherein at least one of R₁, R₂, and R₃ is M²⁺ or M³⁺), following by reacting the intermediate species with the remaining reactants. Moreover, a method described herein can comprise polymerizing monomers described herein in the presence of a salt or metal cation described herein, such that the cross-linking of the polymer or oligomer by the metal cation can occur in situ. Thus, it is to be understood that methods described herein can be distinguished from other methods in which a metal cation may be added to a polymer or oligomer, or to a polymer network, after the polymer or oligomer or polymer network has already been formed through a polymerization reaction.

In some cases, therefore, a method described herein can further comprise cross-linking the polymer or oligomer, including through metal cation or salt particle cross-links, and including during the polymerization process itself. Additional cross-linking (particularly cross-linking by a cross-linker species other than a metal cation) may also be carried out after polymerization of monomers and/or cross-linking with a metal cation (such as a divalent or trivalent metal cation) is complete.

It is further to be understood that, when an insoluble or sparingly soluble salt is used, cross-linking may occur through undissolved salt particles. Without wishing to be bound by any particular theory, it is believed that in some embodiments, the insoluble salt particles act as "seeds" or nucleation centers for the cross-linked polymer networks. In some such embodiments, the insoluble salt is calcium citrate.

In some embodiments, a method of making a polymer or oligomer described herein, which may be referred to as an "ion-doping" method, provides a polymer or oligomer having improved and/or surprising physical structures and properties. For instance, in some cases, a polymer or oligomer formed by a method described herein has a substantially uniform distribution of ions (cations and anions) throughout the polymer network; a low concentration of anions (specifically those from the added salt); and a high concentration of cations (*e.g.,* divalent and trivalent metal cations, including those from the added salt), as compared to other polymers or oligomers that are otherwise similar. In some embodiments, uniformity and concentration of cations and anions in these compositions is compared especially to compositions formed by so-called "ion-soaking" methods, in which an ionic solution may be added to a polymer or oligomer after the polymer or oligomer has been formed through a polymerization process. Without wishing to be bound by any particular theory, it is believed that increased concentration of cations, as well as the increase in uniformity of the anions and cations within the compositions, is at least partially responsible for the observed increase in strength in these compositions provided by an "ion-doping" method. It is also believed that the reduced number of anions reduces the amount and or speed of swelling of the compositions formed by the ion-doping method when the same are disposed in an aqueous environment.

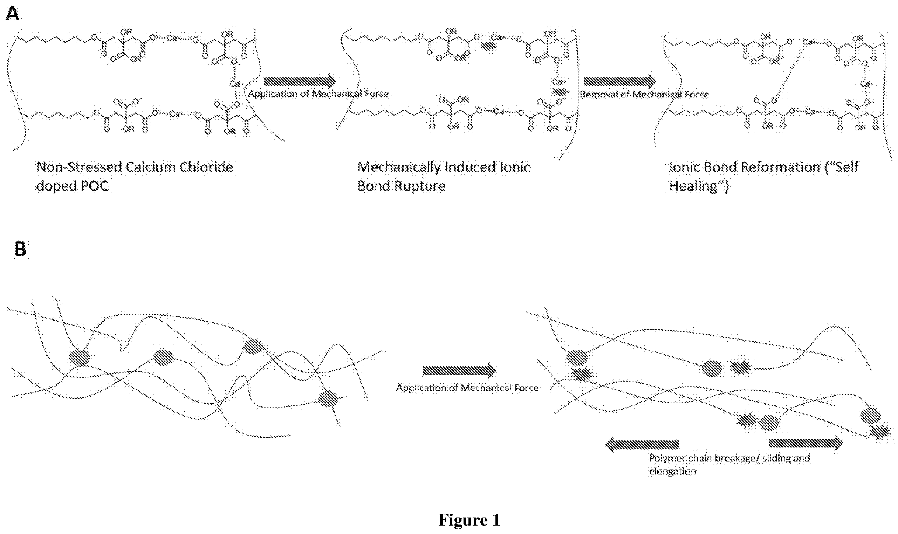

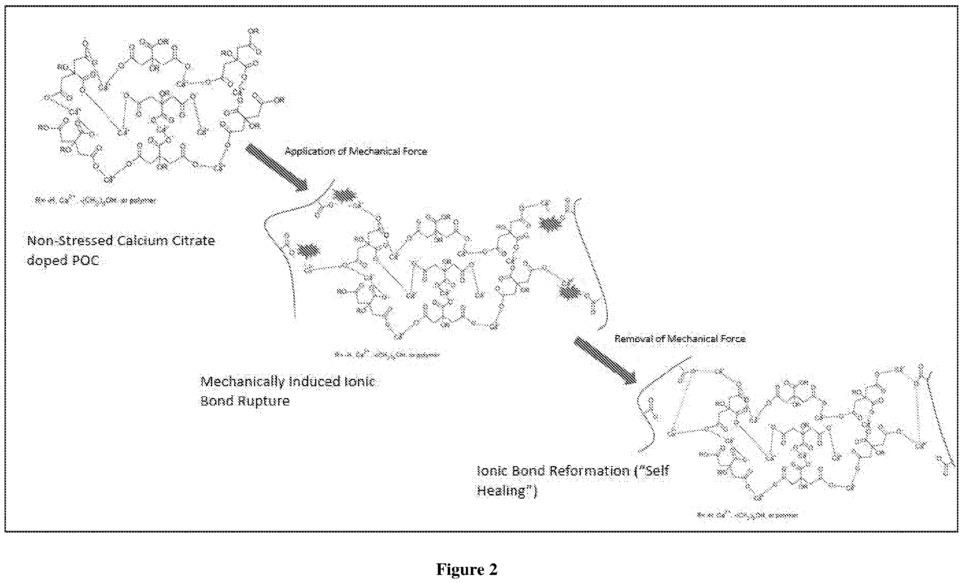

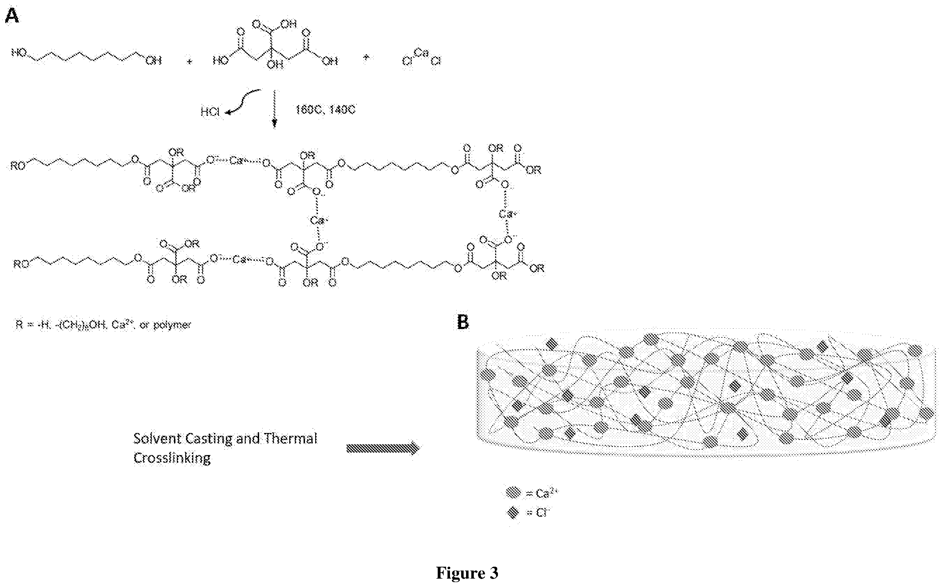

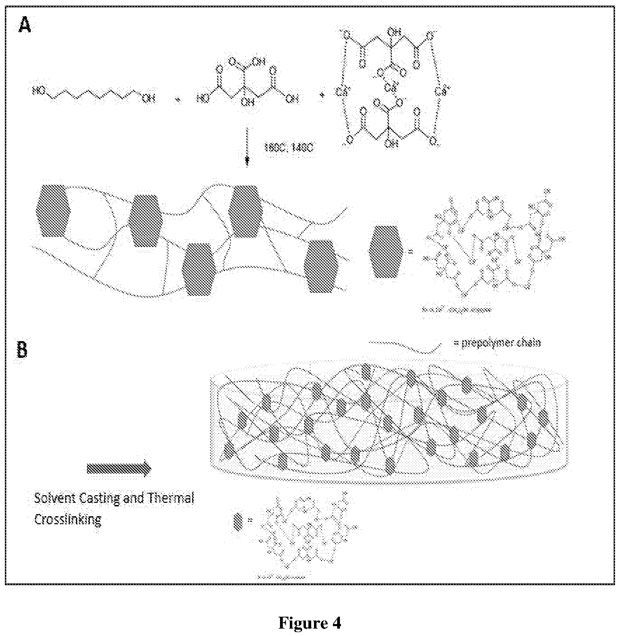

It is further believed that an "ion doping" method described herein provides compositions wherein monovalent, divalent, or trivalent cations bridge at least two -COO pendant groups of the polymers or oligomers as shown below. Without wishing to be bound by any particular theory, it is believed that this structure is formed in the presence of a decreased amount of anions (other than the COO- groups or other pendant anionic moieties) within the "ion-doped" compositions, when compared to other compositions such as those formed by an "ion-soaking" method. This "anion-deficient" environment of the bridging cations is further believed to be at least partially responsible for improved elasticity, because bridging cations can form a new bond with a new -COO pendant group if an initial bond with a different -COO (or other anionic pendant group) is broken, without the rapid "scavenging" of the cation by a counter anion that is not part of a pendant group of (or in the chain of) the polymer (as may happen in the presence of a higher amount of anions). This proposed "self-healing" mechanism is shown in Figures 1 and 2. Ion-doped polymer or oligomer compositions according to some embodiments described herein may be prepared by at least one of the methods as illustrated in Figure 3 for CaCl₂ and Figure 4 for CaCit.

### III. Methods of Preparing Self-Setting Citrate Based Composites

POC pre-polymer may be synthesized via a one pot polycondensation reaction. For example, citric acid and octanediol at a 1:1 mole ratio may be melted at 160 °C under stirring for ten minutes. Reaction temperature is then reduced to 140°C. The reaction may proceed until the pre-polymer can no longer be stirred due to viscosity, at which point the reaction is quenched with dioxane. Following polymerization, the pre-polymer may be purified by precipitation in DI water, lyophilized and dissolved in organic solvent to form pre-polymer solutions. POC prepolymer dissolved in organic solvent, including but not limited to dioxane, acetone, ethanol, and ethyl acetate, may then mixed with metal oxide particles (also dispersed in solvent) at the desired ratio, briefly homogenized, and then cast in the desired shape, forming a solid.

Citrate based polyesters may be synthesized via the general procedure above using a variety of diols and polyols. Suitable diols are, for example, 1,2-ethylene glycol, 1,3-propanediol,1,4-butanediol, 1,5-pentane diol, 1,6-hexanediol, 1,8-octanediol, 1,10-decanediol and 1,12-dodecanediol. Citrate based polyesters may be synthesized via the general procedure above using a variety of water soluble diols including poly(ethylene glycol). Prepolymers may be solubilized in solvents including water, acetone, dioxane, ethanol, and ethyl acetate at varying concentrations. Polymers may be synthesized with citrate : diol ratios of 1.5:1 to 1:1.5. Exemplary metal oxides may include calcium oxide, magnesium oxide, and zinc oxide. Metal oxide may be dispersed in solvents including, *e.g*., water, ethanol, acetone, dioxane, and ethyl acetate at various concentrations. Metal oxide: polymer ratio may be varied. For example, the metal oxide : polymer ratio may be varied from 1:10 to 10:1 metal oxide : polymer, *e.g.,* 1:10, 1:8, 1:6, 1:5, 1:4, 1:3, 1:2, 1:1, 2:1, 3:1, 4:1, 5:1, 6:1, 8:1 or 10:1 metal oxide : polymer. The composites disclosed herein may comprise from about 5 to about 80 wt.%, from about 10 to about 60 wt.%, from about 20 to about 50 wt.%, or from about 30 to about 40 wt.% metal oxide.

Metal oxide/ POC films may be prepared by casting metal oxide/ pre-polymer solutions in Teflon dishes followed by solvent evaporation and thermal crosslinking.

Metal oxide/ POC porous scaffolds may be prepared by mixing metal oxide/ pre-polymer solutions with sodium chloride until a paste is formed, which is then packed into Teflon dishes and thermally crosslinked. Salt is leached by immersion in DI water followed by lyophilization.

Metal oxide/ POC composites may be formed by mixing metal oxide/ POC pre-polymer with filler materials until a clay like consistency is achieved, followed by molding into a desired shape and thermal crosslinking. Examples of filler materials include but are not limited to hydroxyapatite, B-tricalcium phosphate, pearl powder octacalcium phosphate, *etc.*

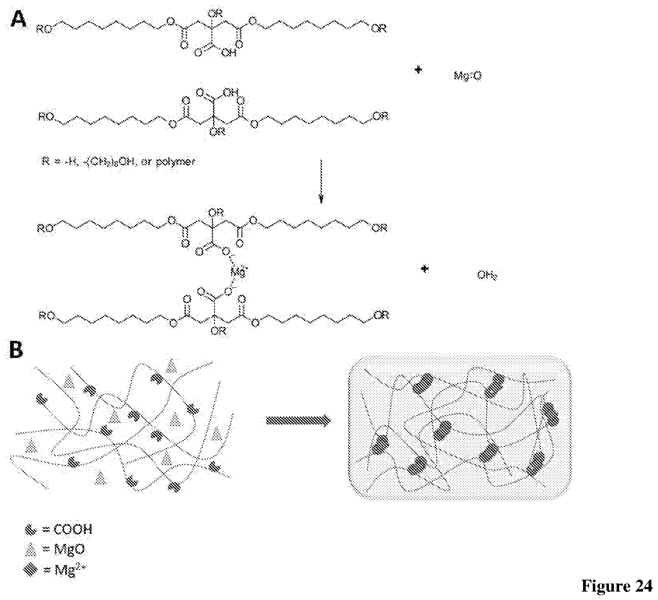

Figure 24 is a schematic illustrating the proposed reaction mechanism of the organic solvent based prepolymer with metal oxide. Metal oxide reacts directly with carboxyl groups on the prepolymer, forming an ionically crosslinked network.

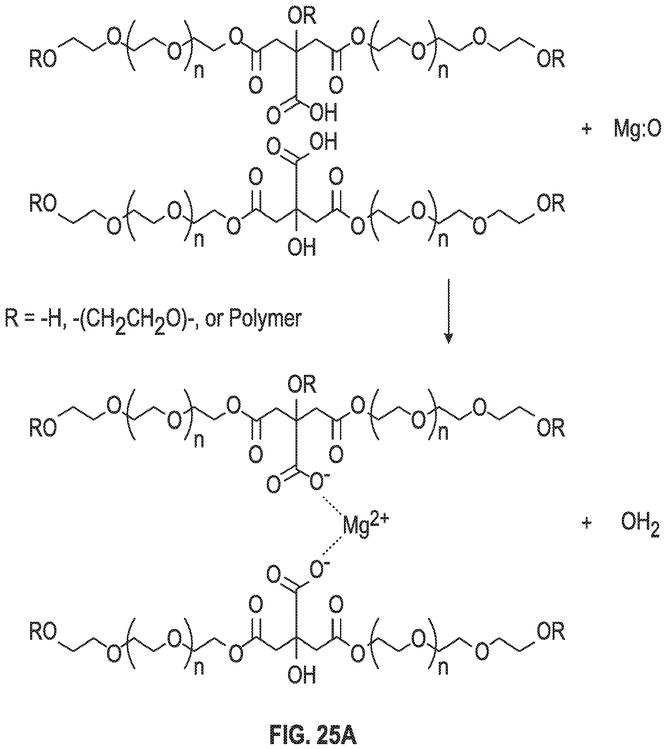

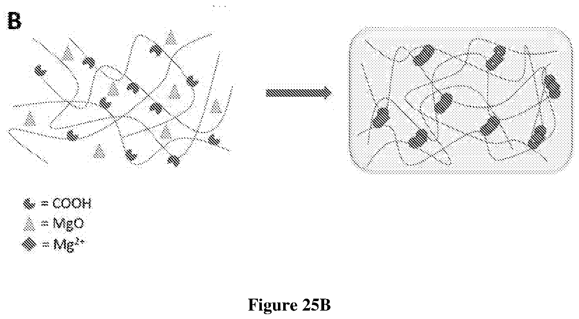

Figures 25A and 25B are schematics illustrating the proposed reaction mechanism of the water based prepolymer with metal oxide. Metal oxide reacts directly with carboxyl groups or water to form metal hydroxide intermediates, followed by reaction with carboxyl groups, forming an ionically crosslinked network.

### EXAMPLES

### Example 1. Preparation and Characterization of Ion-Doped Polymer or Oligomer Compositions.

Ion-doped polymer or oligomer compositions according to some embodiments described herein were prepared and compared to poly (1, 8-octanediol-co-citric acid) (POC) and ion-soaked POC.

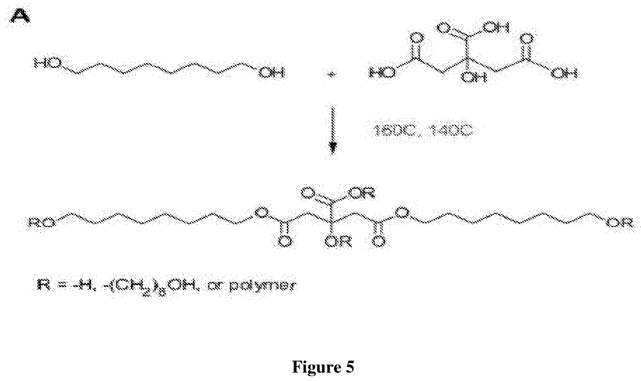

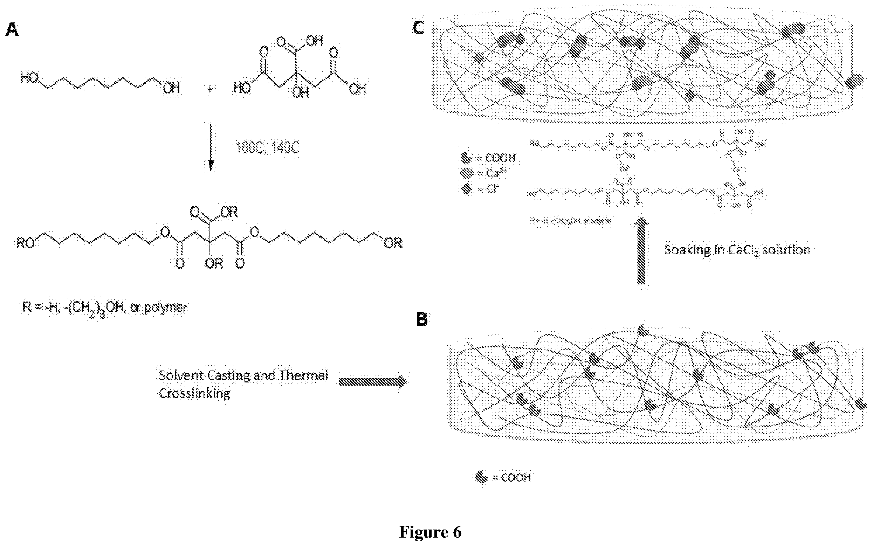

Poly (1, 8-octanediol-co-citric acid) (POC) was prepared by the method as illustrated in Figure 5. Ion-soaked POC using Ca(NO₃)₂, CaCO₃, CaBr₂, CaI₂, NaCl, LiCl, KCl, MgCl₂, SrCl₂, ZnCl₂, NiCl₂, CuCl₂, AlCl₃ and FeCl₃ were prepared by the method as shown in Figure 6.

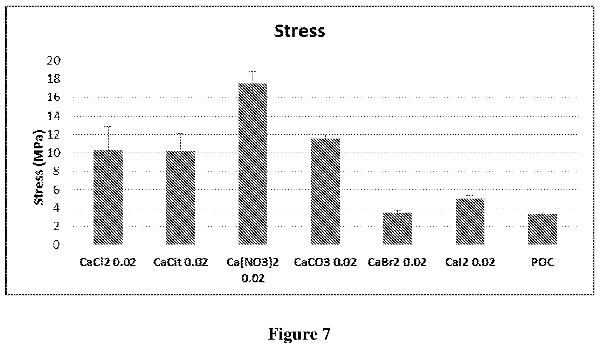

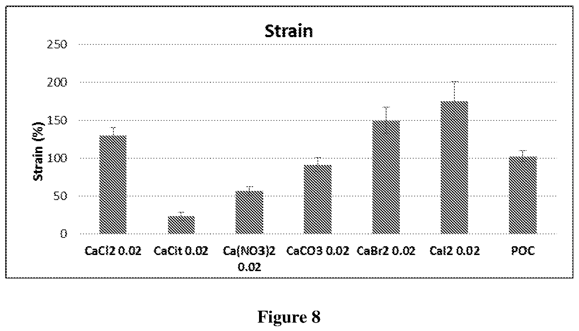

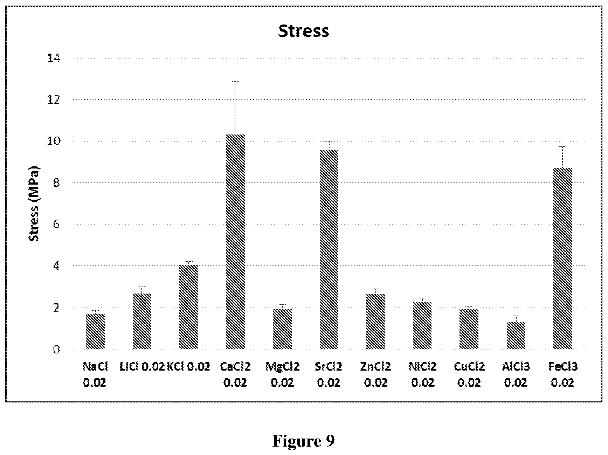

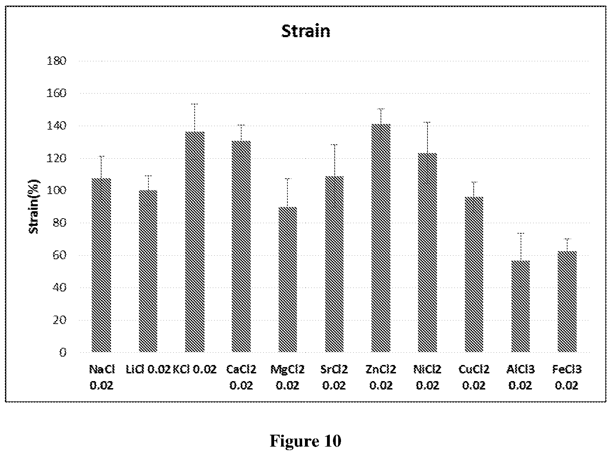

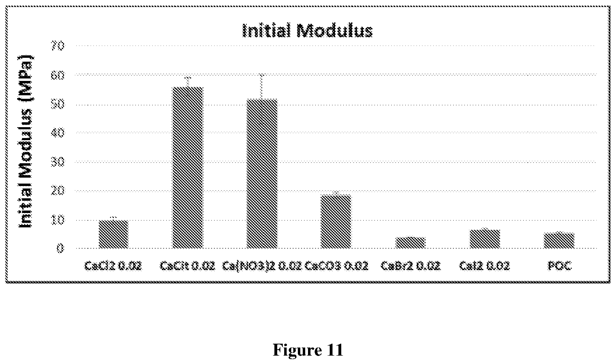

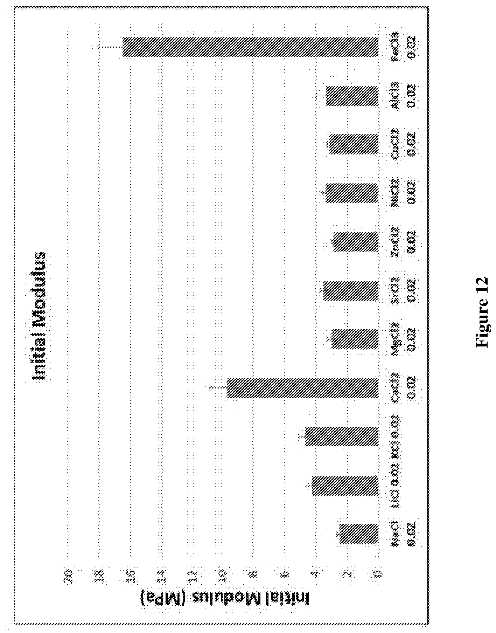

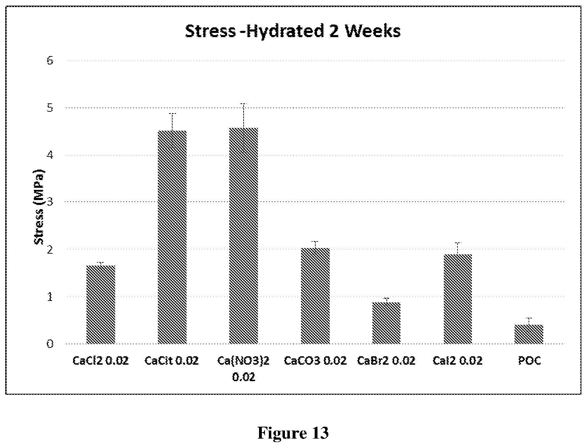

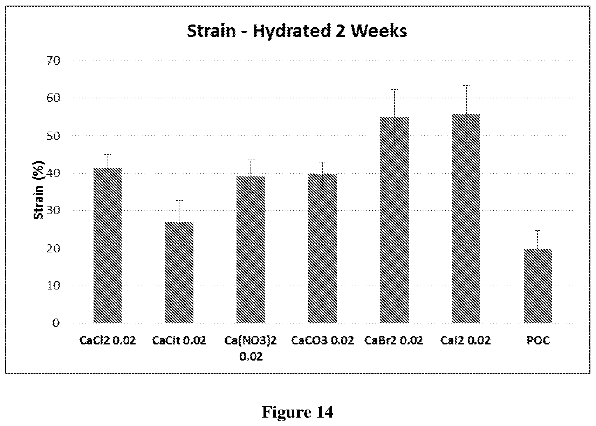

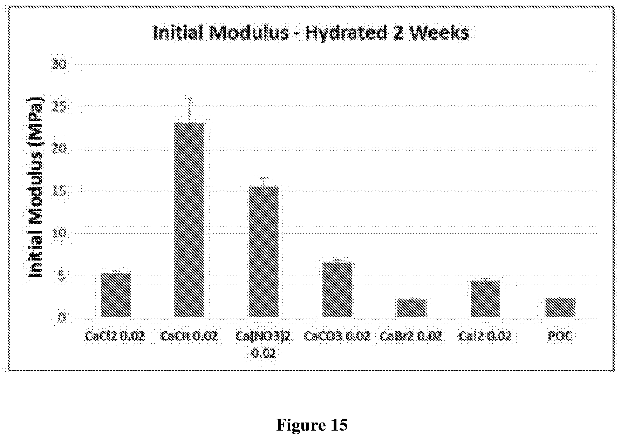

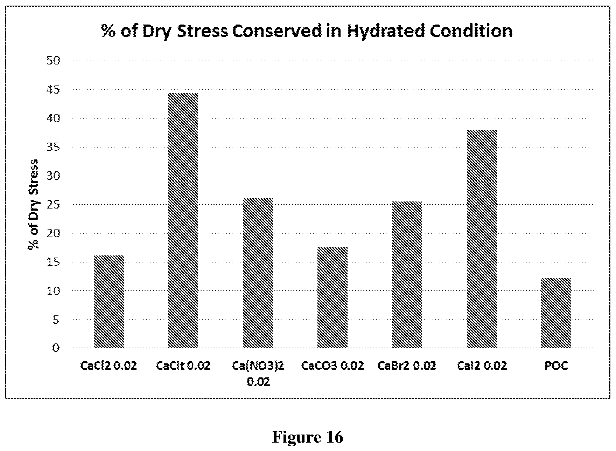

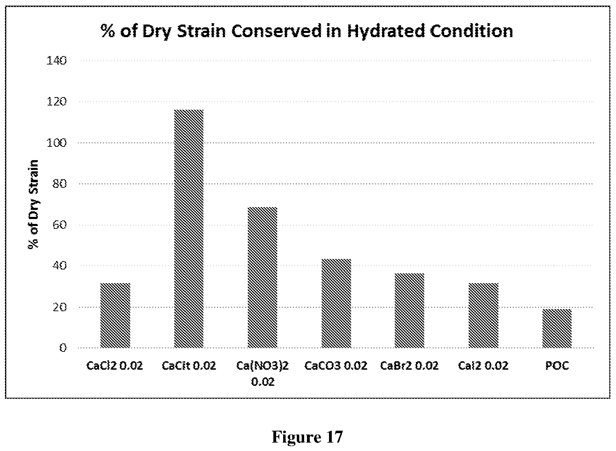

The mechanical properties of POC and ion-doped POC were measured and are shown in Figures 7-17. Specifically, Figure 7 is a bar graph comparing stress (in MPa) of polymers doped with CaCl₂, CaCit, Ca(NO₃)₂, CaCO₃, CaBr₂ and CaI₂ to stress (in MPa) of POC. Figure 8 is a bar graph comparing strain (%) of polymers doped with CaCl₂, CaCit, Ca(NO₃)₂, CaCO₃, CaBr₂ and CaI₂ to strain (%) of POC. Figure 9 is a bar graph showing stress (in MPa) of polymers doped with NaCl, LiCl, KCl, CaCl₂, MgCl₂, SrCl₂, ZnCl₂, NiCl₂, CuCl₂, AlCl₃ and FeCl₃. Figure 10 is a bar graph showing strain (%) of polymers doped with NaCl, LiCl, KCl, CaCl₂, MgCl₂, SrCl₂, ZnCl₂, NiCl₂, CuCl₂, AlCl₃ and FeCl₃. Figure 11 is a bar graph comparing the initial modulus expressed in units of MPa of polymers doped with CaCl₂, CaCit, Ca(NO₃)₂, CaCO₃, CaBr₂ and CaI₂ to the initial modulus measured as stress (MPa) of POC. Figure 12 is a bar graph showing the initial modulus expressed in units of MPa of polymers doped with NaCl, LiCl, KCl, CaCl₂, MgCl₂, SrCl₂, ZnCl₂, NiCl₂, CuCl₂, AlCl₃ and FeCl₃ is shown. Figure 13 is a bar graph comparing stress (in MPa) of polymers doped with CaCl₂, CaCit, Ca(NO₃)₂, CaCO₃, CaBr₂ and CaI₂ and hydrated for 2 weeks to stress (in MPa) of POC that was hydrated for 2 weeks. Figure 14 is a bar graph comparing strain (%) of polymers doped with CaCl₂, CaCit, Ca(NO₃)₂, CaCO₃, CaBr₂ and CaI₂ and hydrated for 2 weeks to strain (%) of POC that was hydrated for 2 weeks. Figure 15 is a bar graph comparing the initial modulus expressed in units of MPa of polymers doped with CaCl₂, CaCit, Ca(NO₃)₂, CaCO₃, CaBr₂ and CaI₂ and hydrated for 2 weeks to the initial modulus measured as stress (MPa) of POC that was hydrated for 2 weeks. Figure 16 is a bar graph comparing % of dry stress conserved in hydrated condition of polymers doped with CaCl₂, CaCit, Ca(NO₃)₂, CaCO₃, CaBr₂ and CaI₂ to % of dry stress conserved in hydrated condition of POC. Figure 17 is a bar graph comparing % of dry strain conserved in hydrated condition of polymers doped with CaCl₂, CaCit, Ca(NO₃)₂, CaCO₃, CaBr₂ and CaI₂ to the % of dry strain conserved in hydrated condition of POC.

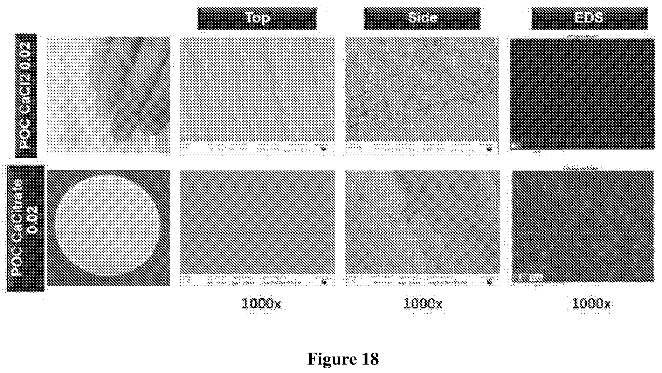

Further, as evidenced by Figure 18, the compositions formed by the methods shown in Figures 3 and 4 above produce films having a high degree of homogeneity. Specifically, the film shown in the top panel doping POC with 0.02 M CaCl₂) was produced by the method shown in Figure 3 and the film shown in the bottom panel was produced by doping POC with 0.02 M CaCit was produced by the method in Figure 4.

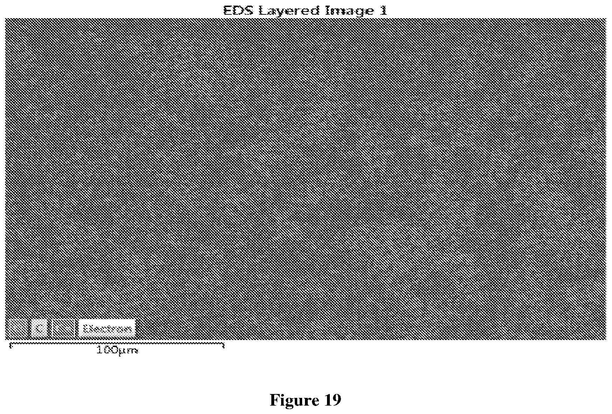

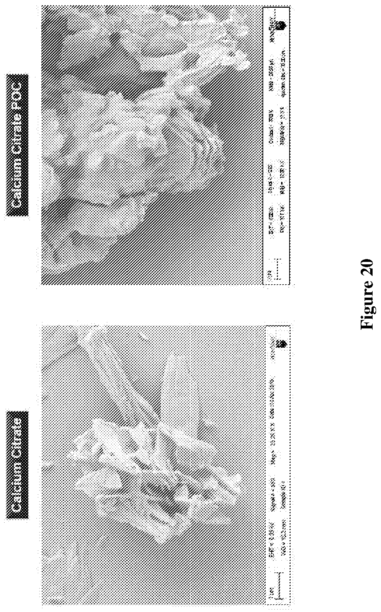

As evidenced by Figure 19, films formed by the method shown in Figure 4 have a cluster-like morphology. The morphology of calcium citrate and a composition produced according to the method shown in Figure 4 is shown in Figure 20.

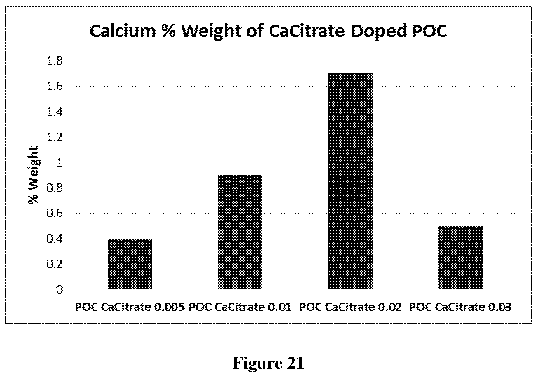

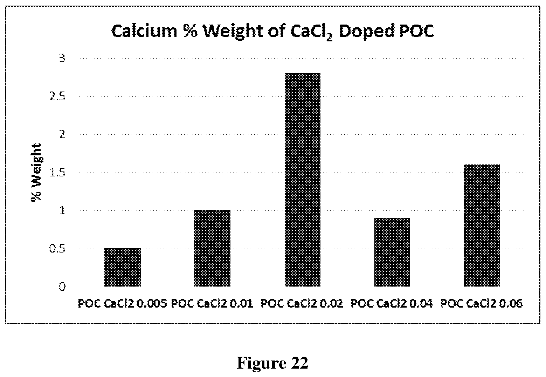

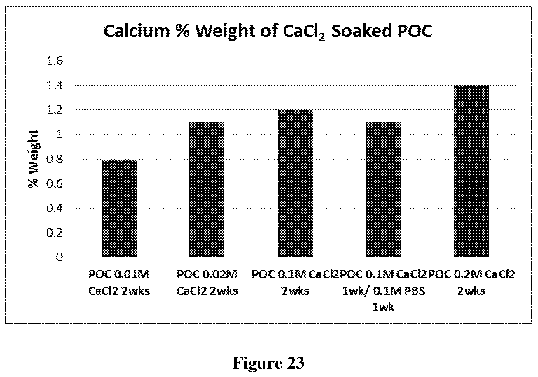

Figures 21-22 show the % by weight of calcium present in POC doped with CaCit and POC doped with CaCl₂ according to embodiments described herein. Figure 23 shows the % by weight of calcium present in POC doped with CaCl₂. The amount of calcium (% by weight) present in POC doped with 0.02M CaCit and 0.02M CaCl₂ is higher than the amount of calcium present in POC doped with 0.01 M, 0.02 M, 0.1 M and 0.2 M CaCl₂.

### Example 2. Preparation and Characterization of Self-Setting Citrate Based Composites

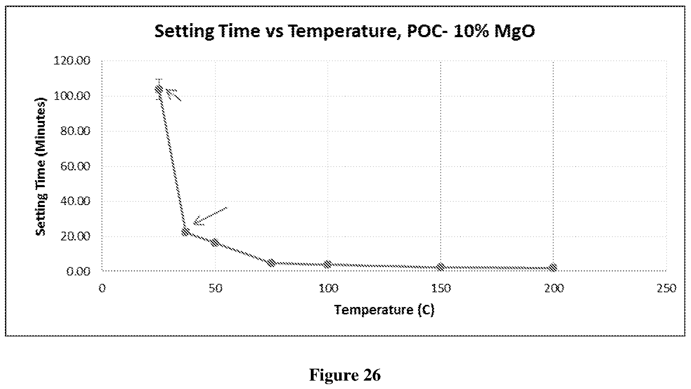

A magnesium oxide / POC self-setting composition was prepared using methods as described above. Figure 26 shows the setting time at various temperatures of the composition prepared using POC at the concentration of 30 wt% in ethanol and magnesium oxide at the concentration of 10wt%. Figure 26 demonstrates setting potential at room temperature and temperature acceleration.

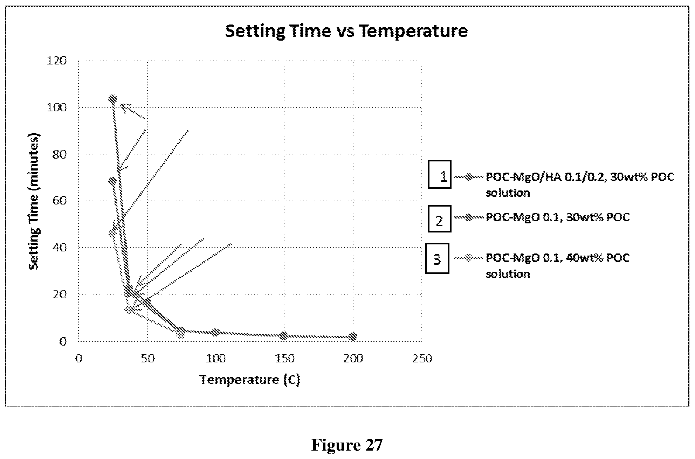

Figure 27 shows the setting time at various temperatures of the compositions prepared using of POC at the concentration of 30% wt or 40% wt in ethanol, magnesium oxide at the concentration of 10wt% and in the presence or absence of 20% hydroxyapatite (HA). Figure 27 demonstrates that the composition prepared using POC at the concentration of 40% wt, as well as the composition prepared with HA exhibit accelerated setting. The setting time, e.g., at room temperature, was determined rheologically by using a Broofield cone-plate viscometer.

Various embodiments of the present invention have been described in fulfillment of the various objectives of the invention. It should be recognized that these embodiments are merely illustrative of the principles of the present invention. Numerous modifications and adaptations thereof will be readily apparent to those skilled in the art without departing from the spirit and scope of the invention.

## Claims

1. A polymerizable composition comprising:
one or more monomers of Formula (A1);
optionally one or more monomers of Formula (A2);
one or more monomers of Formula (B1), (B2), or (B3); and
an additional salt of Formula AB: 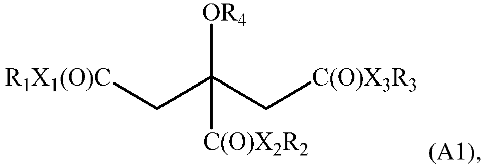 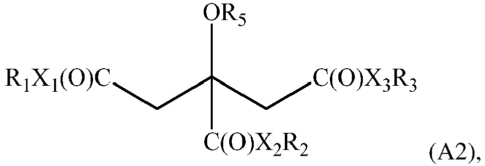 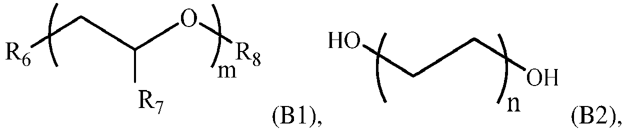 and 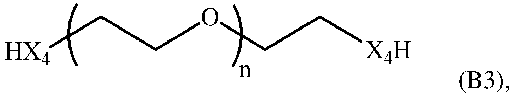 wherein
X₁, X₂, X₃, and X₄ are each independently -O- or -NH-;
R₁, R₂, and R₃ are each, independently, -H, a C1 to C22 alkyl or alkenyl group, M⁺, M²⁺, or M³⁺;
R₄ is H or M⁺;
R₅ is C(O)R₂₃;
R₆ is -H, -NH, -OH, -OCH₃, -OCH₂CH₃, -CH₃, or -CH₂CH₃;
R₇ is -H or a C1 to C23 alkyl or alkenyl group-CH₃;
R₈ is -H, a C3 to C22 alkyl or alkenyl group, -CH₂CH₂OH, or -CH₂CH₂NH₂;
R₂₃ is a C14 to C22 alkyl or alkenyl group;
n and m are independently integers ranging from 1 to 2000;
M⁺ is a monovalent metal cation;
M²⁺ is a divalent metal cation;
M³⁺ is a trivalent metal cation;
A is a monovalent, divalent, or trivalent metal cation; and
B is an anion;
wherein the polymerizable composition is crosslinkable through the M⁺, M²⁺, M³⁺, and/or A or AB.

2. The composition of claim 1, wherein R₁, R₂, and R₃ are each, independently, -H, - CH₃, or -CH₂CH₃.

3. The composition of claim 1, wherein the composition comprises one or more monomers of Formula (A2).

4. The composition of claim 1, wherein at least one of R₁, R₂, and R₃ is M²⁺ or M³⁺.

5. The composition of claim 1, wherein the one or more monomers of Formula (A1) comprise monosodium citrate, disodium citrate, trisodium citrate or calcium citrate.

6. The composition of claim 1, wherein A is a monovalent cation selected from the group consisting of Na⁺, K⁺, and Li⁺.

7. The composition of claim 1, wherein the salt of Formula AB is selected from CaCl₂, Ca(NO₃)₂, CaI₂, CaBr₂, CaCO₃, and calcium citrate.

8. The composition of claim 1, further comprising one or more monomers of Formula (C), Formula (D1), Formula (D2), Formula (D3), Formula (D4), Formula (E1), Formula (E2), Formula (F), Formula (G), Formula (H1), Formula (H2), Formula (H3), Formula (I1), Formula (I2), Formula (I3), Formula (I4), Formula (I5), and/or Formula (I6): 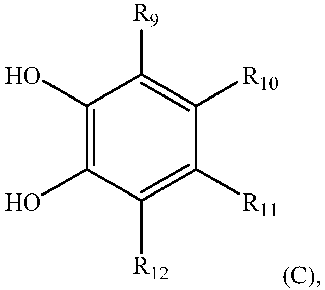 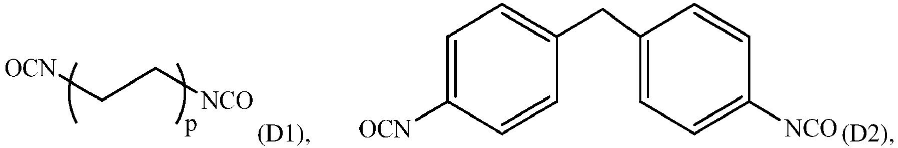 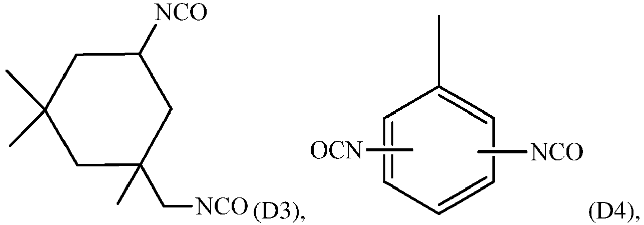 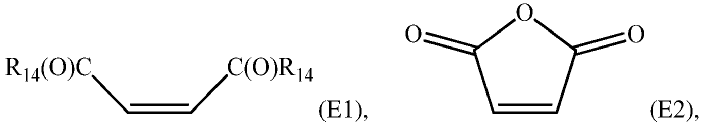 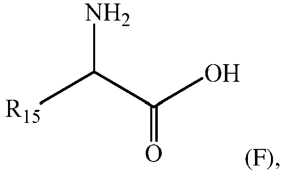 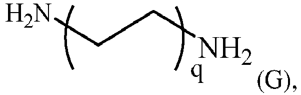 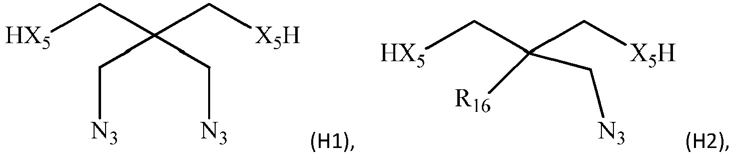 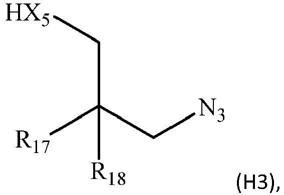 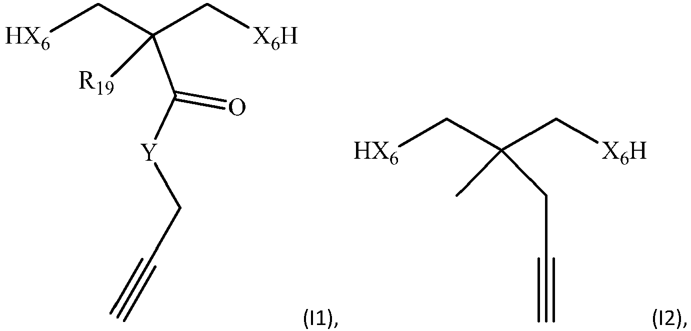 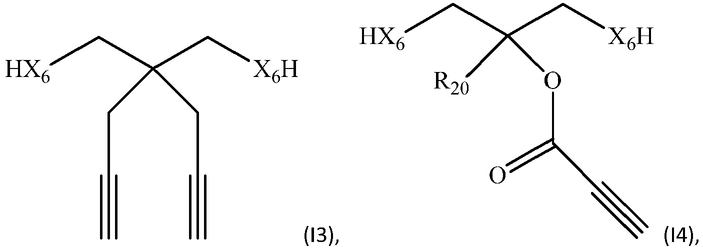 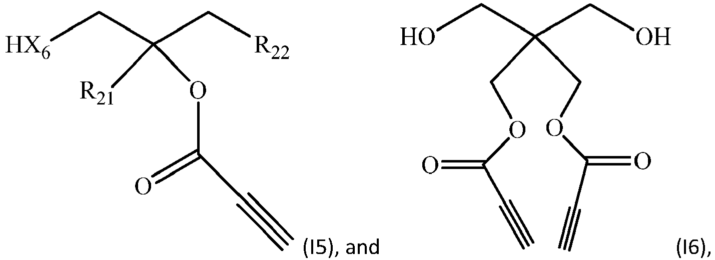 wherein
R₉, R₁₀, R₁₁, and R₁₂ are each independently -H, -OH, -CH₂(CH₂)ₓNH₂, - CH₂(CHR₁₃)NH₂, -CH₂(CH₂)ₓOH, -CH₂(CHR₁₃)OH, or -CH₂(CH₂)ₓCOOH;
R₁₃ is -COOH or -(CH₂)_{y}COOH;
x is an integer ranging from 0 to 10;
y is an integer ranging from 1 to 10;
p is an integer ranging from 1 to 10;
R₁₄ is -OH, -OCH₃, -OCH₂CH₃, or -Cl;
R₁₅ is an amino acid side chain;
q is an integer ranging from 1 to 20;
X₅ is -O- or -NH-;
R₁₆ is -CH₃ or -CH₂CH₃;
R₁₇ and R₁₈ are each independently -CH₂N₃, -CH₃, or -CH₂CH₃;
X₆ and Y are each independently -O- or -NH-;
R₁₉ and R₂₀ are each independently -CH₃ or -CH₂CH₃;
R₂₁ is -O(CO)C≡CH, -CH₃, or -CH₂CH₃; and
R₂₂ is -CH₃, -OH or -NH₂.

9. The composition of claim 8, wherein the composition comprises i) a monomer of Formula (C), wherein the monomer of Formula (C) is selected from dopamine, L-DOPA, D-DOPA, and 3,4-dihydroxyhydrocinnamic acid or ii) wherein the composition comprises one or more monomers selected from maleic acid, maleic anhydride, and fumaric acid; or iii) wherein the composition comprises one or more monomers of Formula (G).

10. The composition of claim 1, wherein the composition comprises i) one or more monomers comprising one or more alkyne moieties or one or more azide moieties; or ii) wherein the composition comprises one or more monomers comprising one or more azide moieties, wherein the one or more azide moieties comprise a monomer of formula (H1), (H2), or (H3): 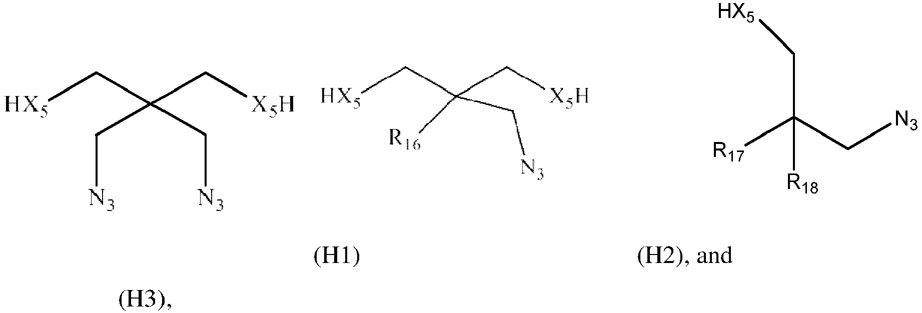 wherein
X₅ is -O- or -NH-;
R₁₆ is -CH₃ or CH₂CH₃; and
R₁₇ and R₁₈ are each independently -CH₂N₃, -CH₃, or CH₂CH₃;
or
iii) wherein the composition comprises one or more monomers comprising one or more alkyne moieties, wherein the one or more alkyne moieties comprise a monomer of Formula (I1), I(2), (I3), (I4), (I5), or (I16): 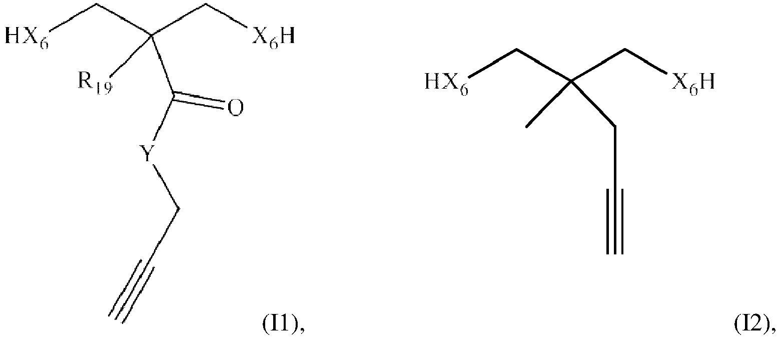 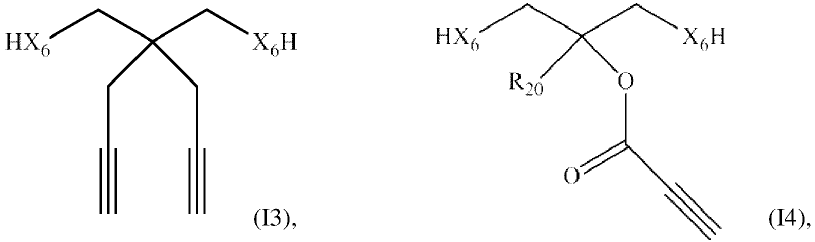 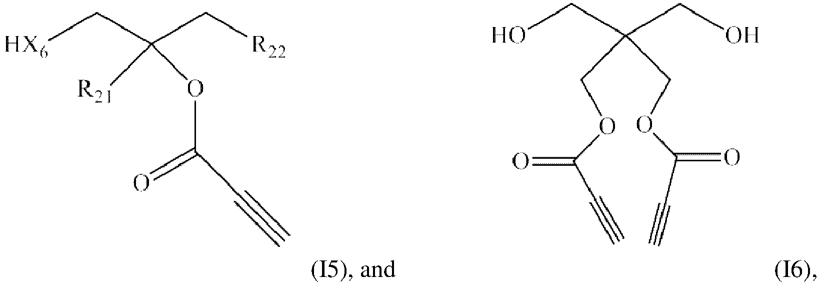 wherein
X₆ and Y are each independently -O- or -NH-;
R₁₉ and R₂₀ are each independently -CH₃, or CH₂CH₃;
R₂₁ is -O(CO)C≡CH, -CH₃, or CH₂CH₃; and
R₂₂ is CH₃, -OH, or NH₂; or
iv) wherein the one or more monomers comprising one or more alkyne moieties or one or more azide moieties comprise a peptide, polypeptide, nucleic acid, or polysaccharide.

11. The composition of claim 1, further comprising a solvent, wherein the solvent comprises water, organic solvent, or a combination thereof.

12. The composition of claim 11, wherein i) the salt of Formula AB has a solubility of at least 50 g/100 mL in water at 25°C; or ii) wherein the salt has a solubility of 5.0 g/L or less in water at 25 °C; or iii) wherein the salt has a solubility of 1.0 g/L or less in water at 25 °C.

13. A composition comprising:
a polymer or oligomer formed from the polymerizable composition of any one of claims 1-12.

14. A method of making a polymer or oligomer, the method comprising:
reacting one or more monomers of Formula (A1), optionally one or more monomers of Formula (A2), one or more monomers of Formula (B 1), (B2), or (B3), and a salt of Formula AB: 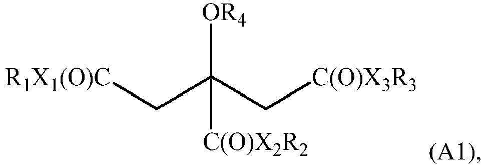 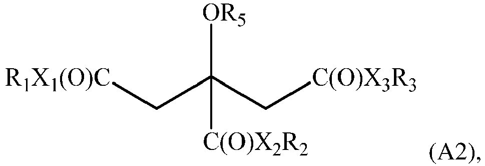 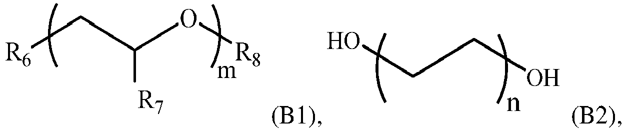 and 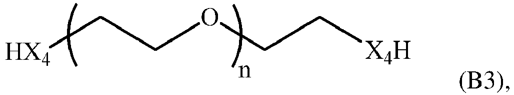 wherein
X₁, X₂, X₃, and X₄ are each independently -O- or -NH-;
R₁, R₂, and R₃ are each, independently, -H, a C1 to C22 alkyl or alkenyl group, M⁺, M²⁺, or M³⁺;
R₄ is H or M⁺;
R₅ is C(O)R₂₃;
R₆ is -H, -NH, -OH, -OCH₃, -OCH₂CH₃, -CH₃, or -CH₂CH₃;
R₇ is -H or a C1 to C23 alkyl or alkenyl group-CH₃;
R₈ is -H, a C3 to C22 alkyl or alkenyl group, -CH₂CH₂OH, or -CH₂CH₂NH₂;
R₂₃ is a C14 to C22 alkyl or alkenyl group;
n and m are independently integers ranging from 1 to 2000;
M⁺ is a monovalent metal cation;
M²⁺ is a divalent metal cation;
M³⁺ is a trivalent metal cation;
A is a monovalent, divalent, or trivalent metal cation; and
B is an anion;
wherein the polymerizable composition is crosslinkable through the M⁺, M²⁺, M³⁺, and/or A or AB.

## Patentansprüche

1. Polymerisierbare Zusammensetzung, umfassend:
ein oder mehrere Monomere der Formel (Al);
gegebenenfalls ein oder mehrere Monomere der Formel (A2);
ein oder mehrere Monomere der Formel (B1), (B2), oder (B3); und
ein zusätzliches Salz der Formel AB: 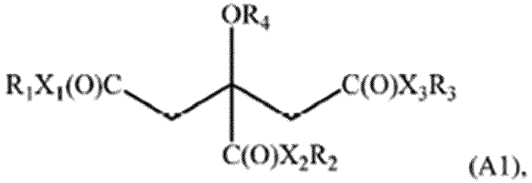 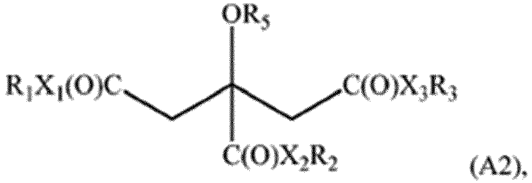 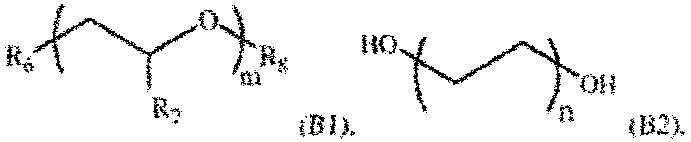 und 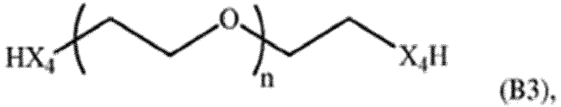 wobei
X₁, X₂, X₃, und X₄ jeweils unabhängig voneinander -O- oder -NHsind;
R₁, R₂, und R₃ jeweils unabhängig voneinander -H, eine C1 bis C22 Alkyl- oder Alkenylgruppe, M⁺, M²⁺, oder M³⁺ sind;
R₄ H oder M⁺ ist;
R₅ C(O)R₂₃ ist;
R₆ -H, -NH, -OH, -OCH₃, -OCH₂CH₃, -CH₃, oder -CH₂CH₃ ist;
R₇ -H oder eine C1 bis C23 Alkyl- oder Alkenylgruppe -CH₃ ist;
R₈ -H, eine C3 bis C22 Alkyl- oder Alkenylgruppe, -CH₂CH₂OH, oder -CH₂CH₂NH₂ ist;
R₂₃ eine C14 bis C22 Alkyl- oder Alkenylgruppe ist;
n und m unabhängig voneinander ganze Zahlen im Bereich von 1 bis 2000 sind;
M⁺ ein einwertiges Metallkation ist;
M2⁺ ein zweiwertiges Metallkation ist;
M3⁺ ein dreiwertiges Metallkation ist;
A ein einwertiges, zweiwertiges oder dreiwertiges Metallkation ist; und
B ein Anion ist;
wobei die polymerisierbare Zusammensetzung durch das M⁺, M²⁺, M³⁺ und/oder A oder AB vernetzbar ist.

2. Zusammensetzung nach Anspruch 1, wobei R₁, R₂ und R₃ jeweils unabhängig voneinander -H, -CH₃ oder -CH₂CH₃ sind.

3. Zusammensetzung nach Anspruch 1, wobei die Zusammensetzung ein oder mehrere Monomere der Formel (A2) umfasst.

4. Zusammensetzung nach Anspruch 1, wobei mindestens eines von R₁, R₂ und R₃ M²⁺ oder M³⁺ ist.

5. Zusammensetzung nach Anspruch 1, wobei das eine oder die mehreren Monomere der Formel (Al) Mononatriumcitrat, Dinatriumcitrat, Trinatriumcitrat oder Calciumcitrat umfassen.

6. Zusammensetzung nach Anspruch 1, wobei A ein einwertiges Kation ist, ausgewählt aus der Gruppe bestehend aus Na⁺, K⁺, und Li⁺.

7. Zusammensetzung nach Anspruch 1, wobei das Salz der Formel AB ausgewählt ist aus CaCl₂, Ca(NO₃)₂, CaI₂, CaBr₂, CaCO₃ und Calciumcitrat.

8. Zusammensetzung nach Anspruch 1, ferner umfassend ein oder mehrere Monomere der Formel (C), der Formel (D1), der Formel (D2), der Formel (D3), der Formel (D4), der Formel (E1), der Formel (E2), der Formel (F), der Formel (G), der Formel (H1), der Formel (H2), der Formel (H3), der Formel (I1), der Formel (I2), der Formel (I3), der Formel (I4), der Formel (I5) und/oder der Formel (I6): 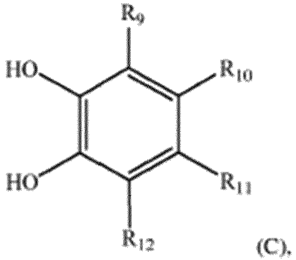 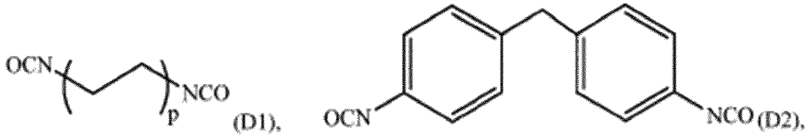 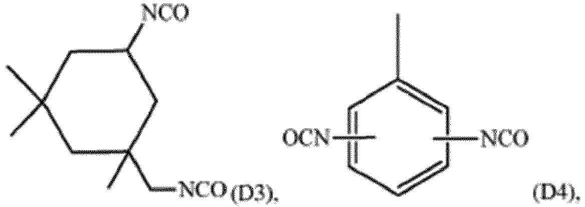 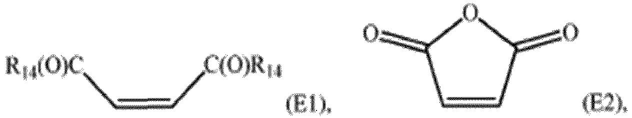 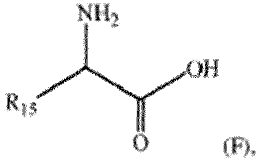 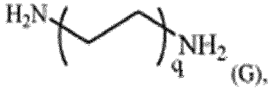 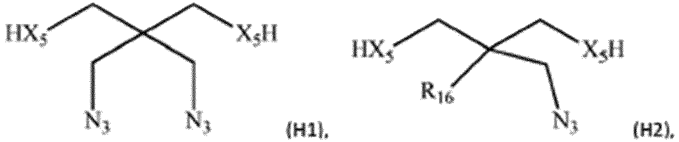 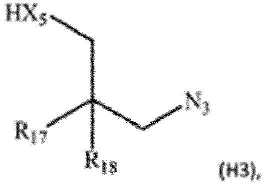 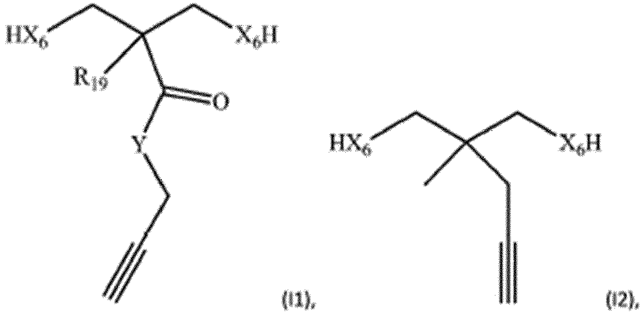 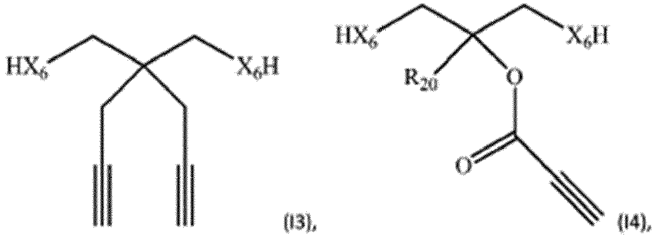 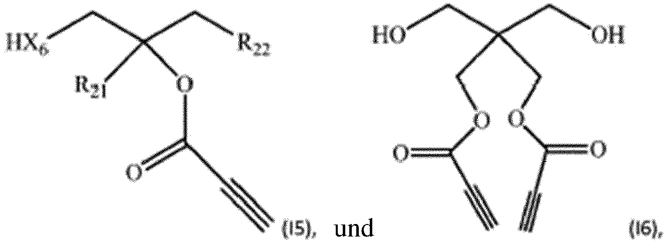 wobei
R₉, R₁₀, R₁₁ und R₁₂ jeweils unabhängig voneinander -H, -OH, - CH₂(CH₂)ₓNH₂, -CH₂(CHR₁₃)NH₂, -CH₂(CH₂)ₓOH, -CH₂(CHR₁₃)OH, oder -CH₂(CH₂)ₓCOOH sind;
R₁₃ -COOH oder -(CH₂)_{y}COOH ist;
x eine ganze Zahl im Bereich von 0 bis 10 ist;
y eine ganze Zahl im Bereich von 1 bis 10 ist;
p eine ganze Zahl im Bereich von 1 bis 10 ist;
R₁₄ -OH, -OCH₃, -OCH₂CH₃, oder -Cl ist;
R₁₅ eine Aminosäureseitenkette ist;
q eine ganze Zahl im Bereich von 1 bis 20 ist;
X₅ -O- oder -NH- ist;
R₁₆ -CH₃ oder -CH₂CH₃ ist;
R₁₇ und R₁₈ jeweils unabhängig voneinander -CH₂N₃, -CH₃ oder - CH₂CH₃ sind;
X₆ und Y jeweils unabhängig voneinander -O- oder -NH- sind;
R₁₉ und R₂₀ jeweils unabhängig voneinander -CH₃ oder -CH₂CH₃ sind;
R₂₁ -O(CO)C=CH, -CH₃ oder -CH₂CH₃ ist; und
R₂₂ -CH₃, -OH oder -NH₂ ist.

9. Zusammensetzung nach Anspruch 8, wobei die Zusammensetzung i) ein Monomer der Formel (C) umfasst, wobei das Monomer der Formel (C) aus Dopamin, L-DOPA, D-DOPA und 3,4-Dihydroxyhydrozimtsäure ausgewählt ist, oder ii) wobei die Zusammensetzung ein oder mehrere Monomere umfasst, ausgewählt aus Maleinsäure, Maleinsäureanhydrid und Fumarsäure,; oder iii) wobei die Zusammensetzung ein oder mehrere Monomere der Formel (G) umfasst.

10. Zusammensetzung nach Anspruch 1, wobei die Zusammensetzung i) ein oder mehrere Monomere umfasst, die eine oder mehrere Alkin-Einheiten oder eine oder mehrere Azid-Einheiten umfassen; oder ii) wobei die Zusammensetzung ein oder mehrere Monomere umfasst, die eine oder mehrere Azid-Einheiten umfassen, wobei die eine oder mehreren Azid-Einheiten ein Monomer der Formel (H1), (H2), oder (H3) umfassen: 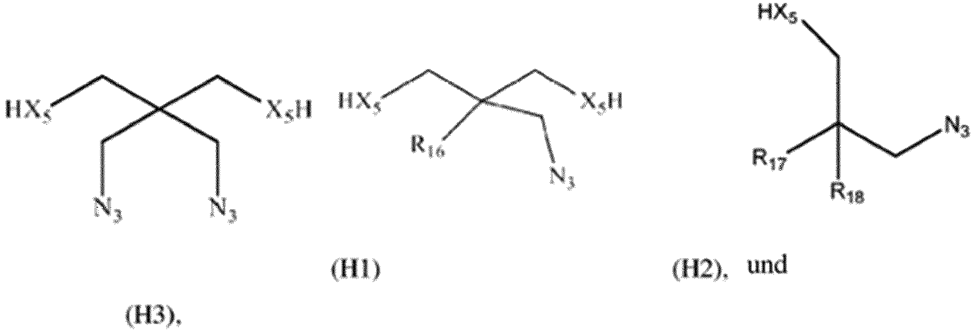 wobei
X₅ -O- oder -NH- ist,
R₁₆ -CH₃ oder CH₂CH₃ ist; und
R₁₇ und R₁₈ unabhängig voneinander -CH₂N₃, -CH₃, oder CH₂CH₃ sind;
oder
iii) wobei die Zusammensetzung ein oder mehrere Monomere umfasst, die eine oder mehrere Alkin-Einheiten umfassen, wobei die eine oder die mehreren Alkin-Einheiten ein Monomer der Formeln (I1), I(2), (I3), (I4), (I5) oder (I16) umfassen: 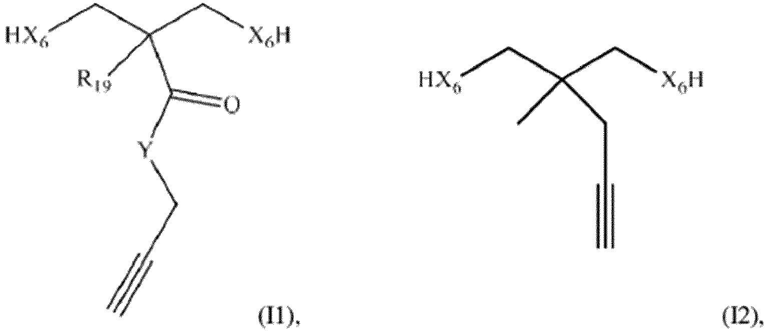 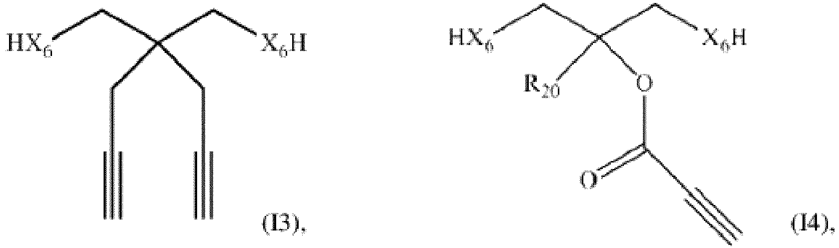 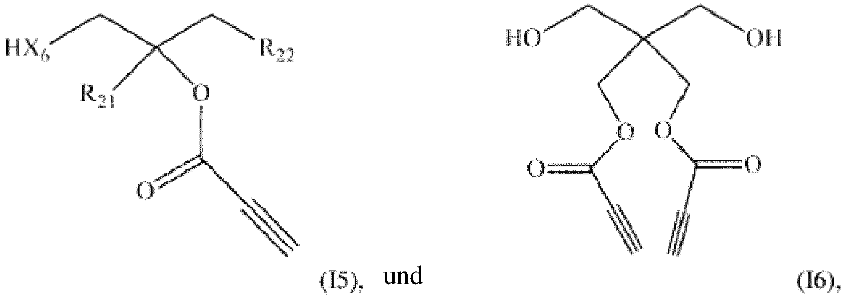 wobei
X₆ und Y unabhängig voneinander -O- oder -NH- sind;
R₁₉ und R₂₀ unabhängig voneinander -CH₃, oder CH₂CH₃ sind;
R₂₁ -O(CO)C=CH, -CH₃, oder CH₂CH₃ ist; und
R₂₂ CH₃, -OH oder NH₂ ist; oder
iv) wobei das eine oder die mehreren Monomere, umfassend eine oder mehrere Alkin-Einheiten oder eine oder mehrere Azid-Einheiten, ein Peptid, Polypeptid, eine Nukleinsäure oder ein Polysaccharid umfassen.

11. Zusammensetzung nach Anspruch 1, die ferner ein Lösungsmittel umfasst, wobei das Lösungsmittel Wasser, organisches Lösungsmittel oder eine Kombination davon umfasst.

12. Zusammensetzung nach Anspruch 11, wobei i) das Salz der Formel AB eine Löslichkeit von mindestens 50 g/100 ml in Wasser bei 25°C aufweist; oder ii) wobei das Salz eine Löslichkeit von 5,0 g/L oder weniger in Wasser bei 25 °C aufweist; oder iii) wobei das Salz eine Löslichkeit von 1,0 g/L oder weniger in Wasser bei 25 °C aufweist.

13. Zusammensetzung, umfassend:
ein Polymer oder Oligomer, gestaltet aus der polymerisierbaren Zusammensetzung nach einem der Ansprüche 1-12.

14. Verfahren zur Herstellung eines Polymers oder Oligomers, wobei das Verfahren umfasst:
Reagieren eines oder mehrerer Monomere der Formel (A1), gegebenenfalls eines oder mehrerer Monomere der Formel (A2), einem oder mehreren Monomeren der Formel (B1), (B2) oder (B3) und einem Salz der Formel AB: 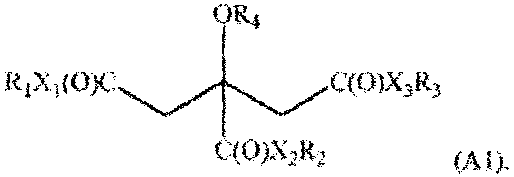 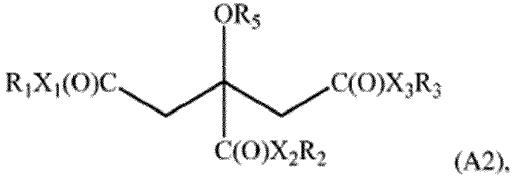 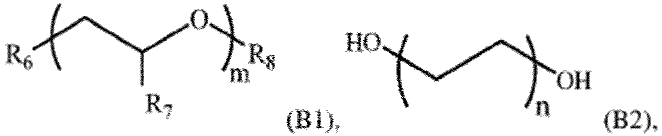 und 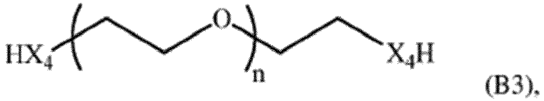 wobei
X₁, X₂, X₃ und X₄ jeweils unabhängig voneinander -O- oder -NH- sind;
R₁, R₂ und R₃ jeweils unabhängig voneinander -H, eine C1- bis C22-Alkyl- oder -Alkenylgruppe, M⁺, M²⁺ oder M³⁺ sind;
R₄ H oder M⁺ ist;
R₅ C(O)R₂₃ ist;
R₆ -H, -NH, -OH, -OCH₃, -OCH₂CH₃, -CH₃, oder -CH₂CH₃ ist;
R₇ -H oder eine C1- bis C23-Alkyl- oder -Alkenylgruppe-CH₃ ist;
R₈ -H, eine C3- bis C22-Alkyl- oder -Alkenylgruppe, -CH₂CH₂OH oder -CH₂CH₂NH₂ ist;
R₂₃ eine C14- bis C22-Alkyl- oder -Alkenylgruppe ist;
n und m unabhängig voneinander ganze Zahlen im Bereich von 1 bis 2000 sind;
M⁺ ein einwertiges Metallkation ist;
M²⁺ ein zweiwertiges Metallkation ist;
M³⁺ ein dreiwertiges Metallkation ist;
A ein einwertiges, zweiwertiges oder dreiwertiges Metallkation ist; und
B ein Anion ist;
wobei die polymerisierbare Zusammensetzung durch M⁺, M²⁺, M³⁺ und/oder A oder AB vernetzbar ist.

## Revendications

1. Composition polymérisable comprenant :
un ou plusieurs monomères de formule (A1) ;
éventuellement un ou plusieurs monomères de formule (A2) ;
un ou plusieurs monomères de formule (B1), (B2), ou (B3) ; et
un sel supplémentaire de formule AB : 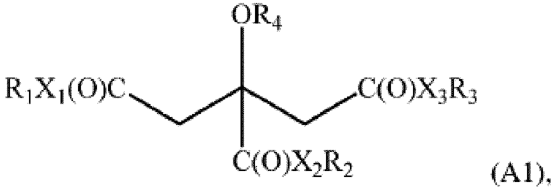 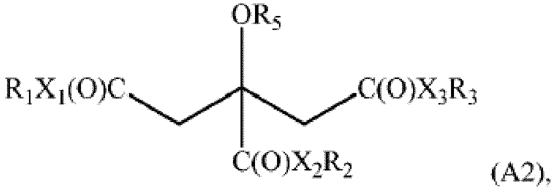 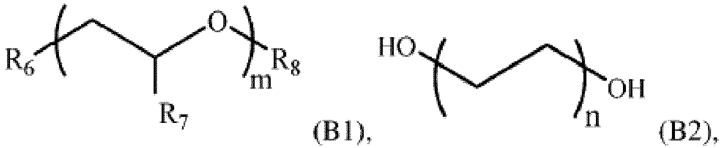 et 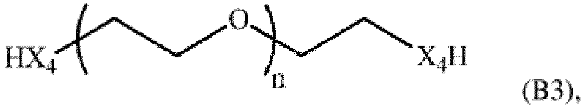 dans laquelle
X₁, X₂, X₃, et X₄ sont chacun indépendamment -O- ou -NH- ;
R₁, R₂, et R₃ sont chacun, indépendamment, -H, un groupe alkyle ou alcényle en C1 à C22, M⁺, M²⁺, ou M³⁺ ;
R₄ est H ou M⁺ ;
R₅ est C(O)R₂₃ ;
R₆ est -H, -NH, -OH, -OCH₃, -OCH₂CH₃, -CH₃ ou -CH₂CH₃ ;
R₇ est -H ou un groupe alkyle ou alcényle en C1 à C23-CH₃ ;
R₈ est -H, un groupe alkyle ou alcényle en C3 à C22, -CH₂CH₂OH, ou -CH₂CH₂NH₂ ;
R₂₃ est un groupe alkyle ou alcényle en C14 à C22 ;
n et m sont indépendamment des nombres entiers de 1 à 2 000 ;
M⁺ est un cation de métal monovalent ;
M²⁺ est un cation de métal divalent ;
M³⁺ est un cation de métal trivalent ;
A est un cation de métal monovalent, divalent, ou trivalent ; et
B est un anion ;
dans laquelle la composition polymérisable est réticulable par les M⁺, M²⁺, M³⁺, et/ou A ou AB.

2. Composition selon la revendication 1, dans laquelle R₁, R₂, et R₃ sont chacun, indépendamment, -H, -CH₃, ou -CH₂CH₃.

3. Composition selon la revendication 1, dans laquelle la composition comprend un ou plusieurs monomères de formule (A2).

4. Composition selon la revendication 1, dans laquelle au moins un de R₁, R₂, et R₃ est M²⁺ ou M³⁺.

5. Composition selon la revendication 1, dans laquelle le un ou plusieurs monomères de formule (A1) comprennent le citrate de monosodium, citrate de disodium, citrate de trisodium ou citrate de calcium.

6. Composition selon la revendication 1, dans laquelle A est un cation monovalent choisi dans le groupe consistant en Na⁺, K⁺, et Li⁺.

7. Composition selon la revendication 1, dans laquelle le sel de formule AB est choisi parmi CaCl₂, Ca(NO₃)₂, CaI₂, CaBr₂, CaCO₃, et le citrate de calcium.

8. Composition selon la revendication 1, comprenant de plus un ou plusieurs monomères de formule (C), formule (D1), formule (D2), formule (D3), formule (D4), formule (E1), formule (E2), formule (F), formule (G), formule (H1), formule (H2), formule (H3), formule (I1), formule (I2), formule (I3), formule (I4), formule (I5), et/ou formule (I6) : 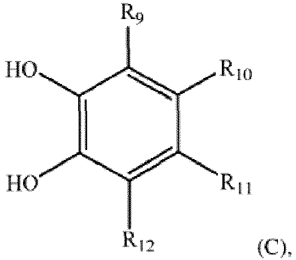 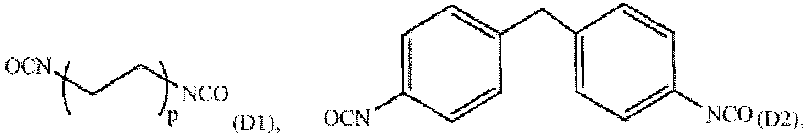 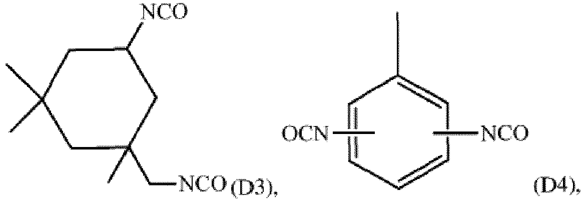 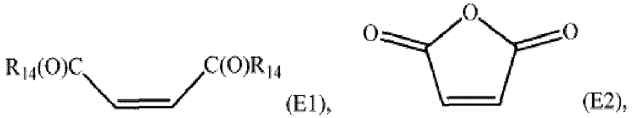 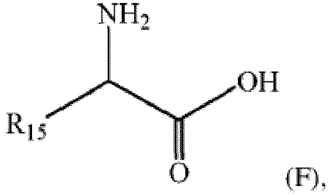 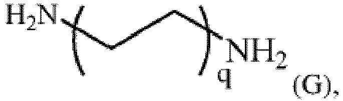 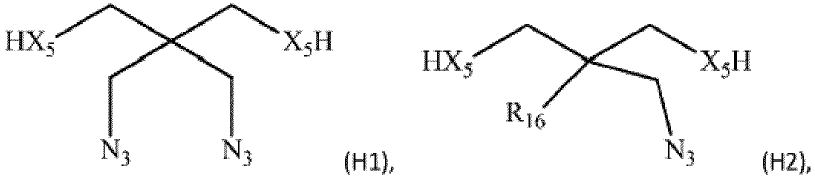 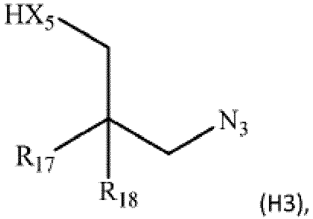 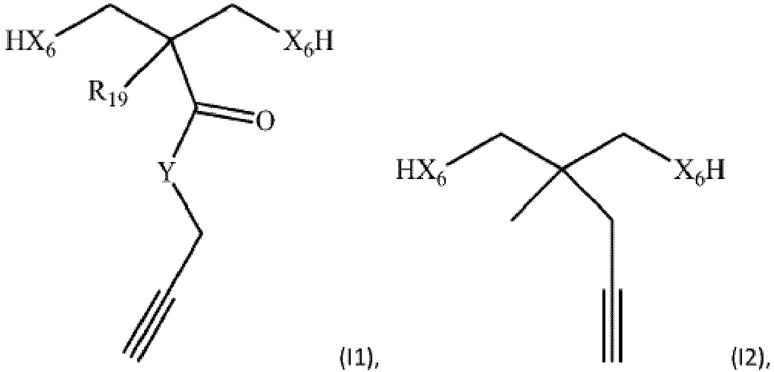 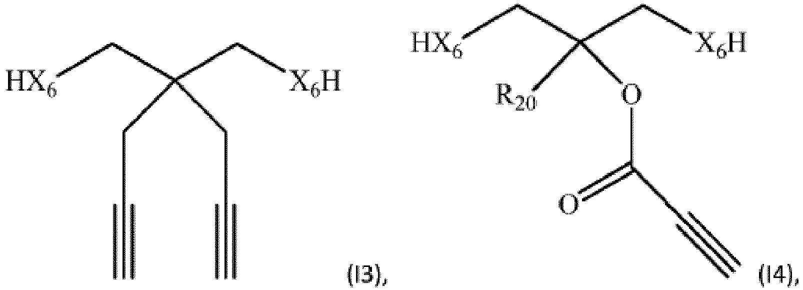 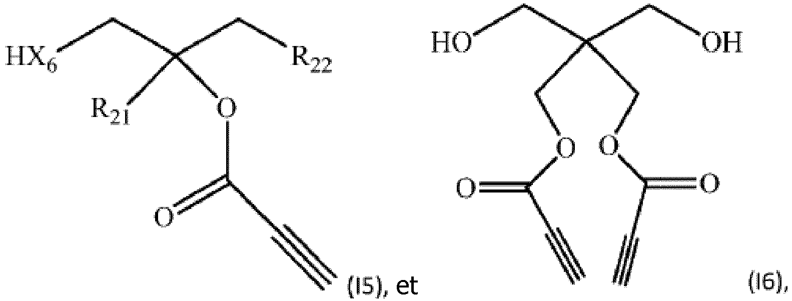
R₉, R₁₀, R₁₁, et R₁₂ sont chacun indépendamment -H, -OH, -CH₂(CH₂)ₓNH₂, -CH₂(CHR₁₃)NH₂, -CH₂(CH₂)ₓOH, -CH₂(CHR₁₃)OH, ou -CH₂(CH₂)ₓCOOH ;
R₁₃ est -COOH ou -(CH₂)_{y}COOH ;
x est un nombre entier de 0 à 10 ;
y est un nombre entier de 1 à 10 ;
p est un nombre entier de 1 à 10 ;
R₁₄ est -OH, -OCH₃, -OCH₂CH₃, ou -Cl ;
R₁₅ est une chaîne latérale d'acide aminé ;
q est un nombre entier de 1 à 20 ;
X₅ est -O- ou -NH- ;
R₁₆ est -CH₃ ou -CH₂CH₃ ;
R₁₇ et R₁₈ sont chacun indépendamment -CH₂N₃, -CH₃, ou -CH₂CH₃ ;
X₆ et Y sont chacun indépendamment -O- ou -NH- ;
R₁₉ et R₂₀ sont chacun indépendamment -CH₃ ou -CH₂CH₃ ;
R₂₁ est -O(CO)C=CH, -CH₃, ou -CH₂CH₃ ; et
R₂₂ est -CH₃, -OH ou -NH₂.

9. Composition selon la revendication 8, dans laquelle la composition comprend i) un monomère de formule (C), dans laquelle le monomère de formule (C) est choisi parmi la dopamine, L-DOPA, D-DOPA, et l'acide 3,4-dihydroxyhydrocinnamique ou ii) dans laquelle la composition comprend un ou plusieurs monomères choisis parmi l'acide maléique, l'anhydride maléique, et l'acide fumarique ; ou iii) dans laquelle la composition comprend un ou plusieurs monomères de formule (G).

10. Composition selon la revendication 1, dans laquelle la composition comprend i) un ou plusieurs monomères comprenant une ou plusieurs moitiés alcyne ou une ou plusieurs moitiés azide ; ou ii) dans laquelle la composition comprend un ou plusieurs monomères comprenant une ou plusieurs moitiés azide, dans laquelle les une ou plusieurs moitiés azide comprennent un monomère de formule (H1), (H2), ou (H3) : 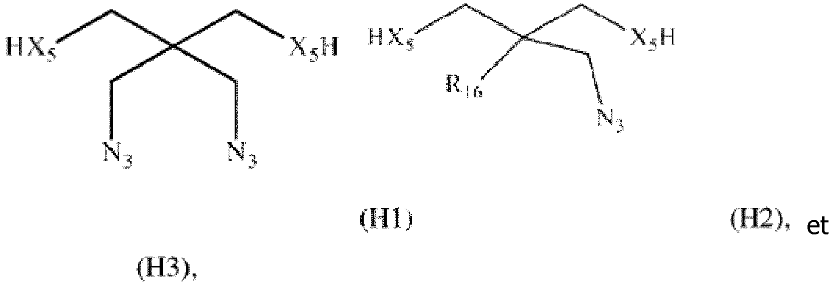 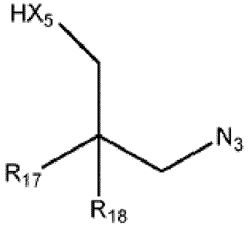 dans laquelle
X₅ est -O- ou -NH- ;
R₁₆ est -CH₃ ou CH₂CH₃ ; et
R₁₇ et R₁₈ sont chacun indépendamment -CH₂N₃, -CH₃, ou CH₂CH₃ ;
ou
iii) dans laquelle la composition comprend un ou plusieurs monomères comprenant une ou plusieurs moitiés alcyne, dans laquelle les une ou plusieurs moitiés alcyne comprennent un monomère de formule (I1), (I2), (I3), (I4), (I5), ou (I16) : 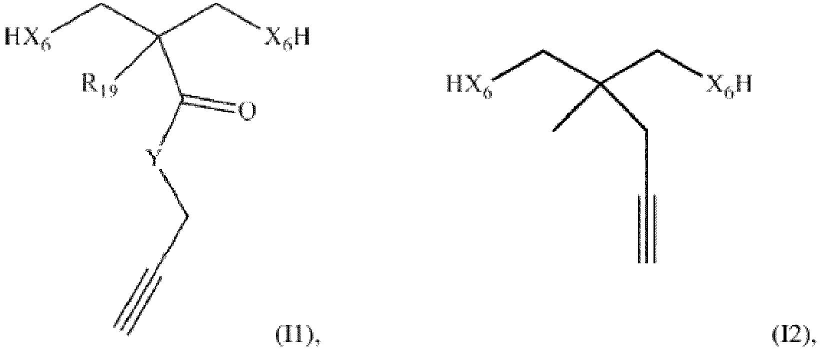 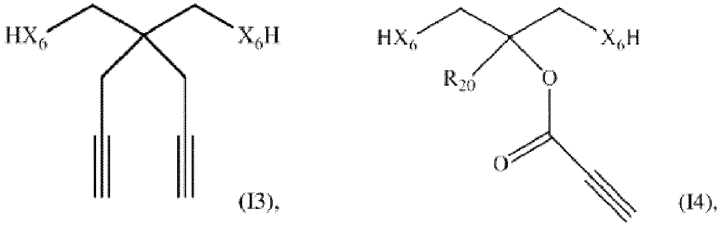 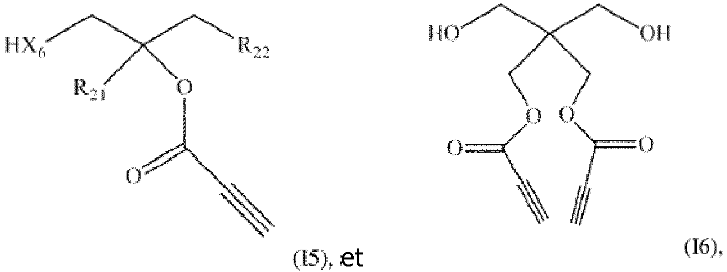 dans laquelle
X₆ et Y sont chacun indépendamment -O- ou -NH- ;
R₁₉ et R₂₀ sont chacun indépendamment -CH₃, ou CH₂CH₃ ;
R₂₁ est -O(CO)C=CH, -CH₃, ou CH₂CH₃ ; et
R₂₂ est CH₃, -OH, ou NH₂ ; ou
iv) dans laquelle les un ou plusieurs monomères comprenant une ou plusieurs moitiés alcyne ou une ou plusieurs moitiés azide comprennent un peptide, polypeptide, acide nucléique, ou polysaccharide.

11. Composition selon la revendication 1, comprenant de plus un solvant, dans laquelle le solvant comprend de l'eau, un solvant organique, ou une combinaison de ceux-ci.

12. Composition selon la revendication 11, dans laquelle i) le sel de formule AB présente une solubilité d'au moins 50 g/100 mL dans l'eau à 25°C ; ou ii) dans laquelle le sel présente une solubilité de 5,0 g/L ou inférieure dans l'eau à 25°C ; ou iii) dans laquelle le sel présente une solubilité de 1,0 g/L ou inférieure dans l'eau à 25°C.

13. Composition comprenant :
un polymère ou oligomère formé à partir de la composition polymérisable selon l'une quelconque des revendications 1-12.

14. Procédé de fabrication d'un polymère ou oligomère, le procédé comprenant :
la réaction d'un ou plusieurs monomères de formule (A1), éventuellement d'un ou plusieurs monomères de formule (A2), d'un ou plusieurs monomères de formule (B1), (B2), ou (B3), et d'un sel de formule AB : 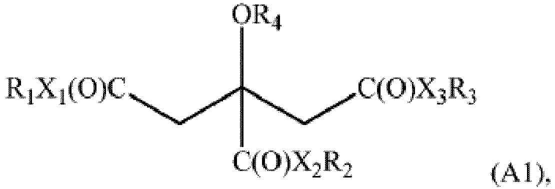 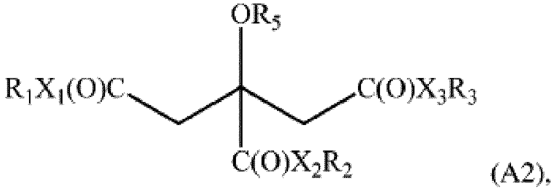 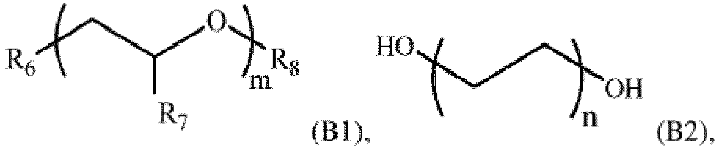 et 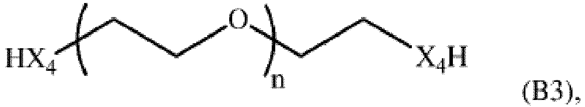 dans laquelle
X₁, X₂, X₃, et X₄ sont chacun indépendamment -O- ou -NH- ;
R₁, R₂, et R₃ sont chacun, indépendamment, -H, un groupe alkyle ou alcényle en C1 à C22, M⁺, M²⁺, ou M³⁺ ;
R₄ est H ou M⁺ ;
R₅ est C(O)R₂₃ ;
R₆ est -H, -NH, -OH, -OCH₃, -OCH₂CH₃, -CH₃ ou -CH₂CH₃ ;
R₇ est -H ou un groupe alkyle ou alcényle en C1 à C23-CH₃ ;
R₈ est -H, un groupe alkyle ou alcényle en C3 à C22, -CH₂CH₂OH, ou -CH₂CH₂NH₂ ;
R₂₃ est un groupe alkyle ou alcényle en C14 à C22 ;
n et m sont indépendamment des nombres entiers de 1 à 2 000 ;
M⁺ est un cation de métal monovalent ;
M²⁺ est un cation de métal divalent ;
M³⁺ est un cation de métal trivalent ;
A est un cation de métal monovalent, divalent, ou trivalent ; et
B est un anion ;
dans laquelle la composition polymérisable est réticulable par les M⁺, M²⁺, M³⁺, et/ou A ou AB.
